# EUROPEAN PATENT APPLICATION

(11) **EP 4 834 726 A1**
(43) Date of publication of application: **04.11.2026**
(21) Application number: 24912940.4
(22) Date of filing: 25.12.2024
(51) Int. Cl.: B62D 25/08, B62D 25/04, B62D 49/00

(54) **CABIN**

(30) Priority: 27.12.2023 JP 2023221060
(71) Applicant: KUBOTA CORPORATION, Osaka-shi, Osaka 530-0011 (JP)
(72) Inventor: YASUNOBE Daisuke, Sakai-shi, Osaka 590-0908 (JP)
(74) Representative: Müller-Boré & Partner Patentanwälte PartG mbB
(86) International application number: PCT/JP2024/046007
(87) International publication number: WO 2025/143054

(57) **Abstract**

To achieve high support strength on a front panel without reducing visibility.

A cabin (1) according to the present invention includes a front panel (31) located forward of an operator's seat (6), the front panel being curved to protrude forward; and a support structure (99) to support the front panel, wherein the support structure includes a panel support frame (95) to which the front panel is attached and a pedal support (98) to support at least one brake pedal (97) on the panel support frame, the front panel (31) is a single plate including a cutout (100) that opens downward at a lower end, the pedal support includes a support shaft (101) to swingably support the at least one brake pedal, and the panel support frame includes an opening frame (102) that has a shape along an opening of the cutout and that is bonded to a peripheral edge of the opening, the panel support frame being located lower than the support shaft.

## Description

### Technical Field

The present invention relates to cabins for, for example, tractors, wheel loaders, backhoes, or the like, and particularly to cabins having characteristic features in a support structure for a front panel.

### Background Art

As the related art, a front windshield attachment structure of a cabin disclosed in PTL 1 is known.

In the cabin of PTL 1, the front surface of the cabin is covered by a single front windshield from the lower end to the upper end. Further, an air cut plate is provided on the interior side of the front windshield such that the air cut plate overlaps the front windshield. The air cut plate is a semi-elliptical structure including leg portions on the left and right, and prevents heat and noise of an engine from being transmitted into the cabin. Further, in the air cut plate, a recessed portion is provided from a lower end portion of the air cut plate to an upper portion thereof in the up-down direction and at a substantially central portion thereof in the left-right direction. Further, a rib extending in parallel with the left-right direction is provided at the lower end of the recessed portion.

The air cut plate provided in the cabin of PTL 1 is a portion serving as a bonding margin for the front windshield. That is, in the cabin of PTL 1, the front windshield is attached using, as bonding margins, left and right front pillars, a front plate indicated by reference numeral 27 in the drawings, the left and right leg portions, and the rib.

### Citation List

### Patent Literature

PTL 1: Japanese Unexamined Patent Application Publication No. 2015-112879

### Summary of Invention

### Technical Problem

In the cabin of a tractor, there is a fundamental need to improve forward visibility, particularly visibility of a foot area located on the front lower side. For example, it is an effective means to use a one-piece front windshield (front panel) that covers the front surface of the cabin as illustrated in PTL 1 from the lower end to the upper end.

However, in the cabin of PTL 1, a member referred to as the air cut plate having a height in the up-down direction is provided on the front lower side of an operator's seat, and there has been a problem that, even when the one-piece front panel is used, the air cut plate obstructs the view and visibility is reduced.

Here, if the air cut plate is removed, good visibility can be achieved, but it becomes difficult to sufficiently support the weight of the front panel. That is, when a one-piece front windshield is used, a large load of the one-piece front panel is applied to the front pillars such as a first front pillar and a second front pillar located at a front portion of the cabin among frame members included in the cabin. Thus, part of the weight of the front panel is supported by a member other than the front pillars, in other words, by the air cut plate, so that the heavy one-piece front windshield can be supported.

That is, in the cabin of PTL 1, when an attempt is made to widen the field of view by using a heavy one-piece front panel, it is unavoidable to use a large-scale support structure to support the front panel, and there has been a problem that the field of view cannot be sufficiently widened due to the large-scale support structure.

The present invention has been made in view of the above-described problem, and an object thereof is to provide cabins each capable of, even when a one-piece front panel is used, preventing or reducing a decrease in the strength of the front panel due to a cutout without reducing visibility.

### Solution to Problem

Technical features of the present invention to solve the above-described technical issue include the following characteristic features.

A cabin according to an example embodiment of the present invention includes a front panel located forward of an operator's seat, the front panel being curved to protrude forward; and a support structure to support the front panel, wherein the support structure includes a panel support frame to which the front panel is attached and a pedal support to support at least one brake pedal on the panel support frame, the front panel is a single plate including a cutout that opens downward at a lower end, the pedal support includes a support shaft to swingably support the at least one brake pedal, and the panel support frame includes an opening frame that has a shape along an opening of the cutout and that is bonded to a peripheral edge of the opening, the panel support frame being located lower than the support shaft.

The opening frame of the panel support frame may be located along a back surface of the front panel, and the panel support frame may not include, on an upper side of the opening frame, a portion located along the back surface of the front panel.

The panel support frame may include a base frame connected to a peripheral edge of the opening frame. The base frame may include a frame plate including a through-hole through which a steering shaft extending forward and downward from a front side of the operator's seat penetrates. The frame plate may be inclined such that the frame plate shifts upward toward an upper portion of the opening frame from a rear side to avoid interference with a clutch housing located lower than the operator's seat.

The support shaft may be positioned such that an axial center is oriented in a left-right direction. The pedal support may include a left first frame to support a left end of the support shaft on a left end of the base frame, a left second frame to support a left end of the opening frame on the left first frame, a central frame to support an intermediate portion of the support shaft in the left-right direction on a central portion of the base frame, a right first frame to support a right end of the support shaft on a right end of the base frame, and a right second frame to support a right end of the opening frame on the right first frame.

A coupling reinforcing frame to couple the left first frame and the right first frame in the left-right direction may be provided between the left first frame and the right first frame.

Front pillars to support the front panel may each be located at a respective one of a left end and a right end of the front panel. A front beam that is coupled to upper ends of the front pillars on left and right and is curved to protrude upward may be provided at an upper end of the front panel. A roof may be located above the operator's seat. A weight of the roof may be supported by the front pillars on left and right and the front panel through the front beam.

The at least one brake pedal may include a left brake pedal to operate a left brake and a right brake pedal to operate a right brake. An interlocking member to cause the left brake pedal and the right brake pedal to operate in conjunction with each other may be located between the left brake pedal and the right brake pedal. An interlock release pedal to release interlocking between the left brake pedal and the right brake pedal by the interlocking member may be located at either a left portion or a right portion of the support structure. A frame where the interlock release pedal is located among the frames of the pedal support may be provided such that an intermediate portion in an up-down direction is bent inward in a left-right direction.

A clutch member to switch power transmission may be located at a left end of the support shaft. The pedal support provided on right of the support shaft on a side where the clutch member is located may be provided such that an intermediate portion in an up-down direction is bent inward in the left-right direction.

The front panel may be curved such that an intermediate portion in an up-down direction protrudes forward relative to the lower end. The opening frame may have a forward-tilted orientation such that an intermediate portion in the up-down direction protrudes forward relative to a lower end to match curving of the front panel.

The front panel may be curved such that an intermediate portion in an up-down direction protrudes forward relative to the lower end. The front pillars may each have a forward-tilted orientation such that an intermediate portion in the up-down direction protrudes forward relative to a lower end to match curving of the front panel.

### Advantageous Effects of Invention

With the cabin according to the present invention, it is possible to, even when a one-piece front panel is used, prevent or reduce a decrease in the strength of the front panel due to the cutout without reducing visibility.

### Brief Description of Drawings

[FIG. 1] FIG. 1 is a left side view of a tractor.
[FIG. 2] FIG. 2 is a perspective view of a cabin as viewed from the left front side.
[FIG. 3] FIG. 3 is a side view of the cabin as viewed from the right side.
[FIG. 4] FIG. 4 is a front view of the cabin.
[FIG. 5] FIG. 5 is a plan view depicting a portion of the cabin on the lower side relative to a roof.
[FIG. 6] FIG. 6 is a rear view of the cabin.
[FIG. 7] FIG. 7 is a perspective view depicting a coupling state of front pillars, rear pillars, side beams, a front beam, and a rear beam of the cabin.
[FIG. 8A] FIG. 8A is a diagram depicting a left side view of a left front pillar.
[FIG. 8B] FIG. 8B is a diagram depicting a right side view of a right front pillar.
[FIG. 9A] FIG. 9A is a cross-sectional view of the left front pillar taken along line C-C of FIG. 8.
[FIG. 9B] FIG. 9B is a cross-sectional view of the right front pillar taken along line C'-C' of FIG. 8.
[FIG. 10A] FIG. 10A is a schematic diagram depicting a procedure for fabricating the left front pillar from a front pillar elongated member.
[FIG. 10B] FIG. 10B is a schematic diagram depicting the procedure for fabricating the left front pillar from the front pillar elongated member.
[FIG. 10C] FIG. 10C is a schematic diagram depicting the procedure for fabricating the left front pillar from the front pillar elongated member.
[FIG. 11A] FIG. 11A is a schematic diagram depicting a procedure for fabricating the right front pillar from the front pillar elongated member.
[FIG. 11B] FIG. 11B is a schematic diagram depicting the procedure for fabricating the right front pillar from the front pillar elongated member.
[FIG. 11C] FIG. 11C is a schematic diagram depicting the procedure for fabricating the right front pillar from the front pillar elongated member.
[FIG. 11D] FIG. 11D is a schematic diagram depicting the procedure for fabricating the right front pillar from the front pillar elongated member.
[FIG. 12A] FIG. 12A is a left side view of a left side beam.
[FIG. 12B] FIG. 12B is a right side view of a right side beam.
[FIG. 13A] FIG. 13A is a plan view of the left side beam.
[FIG. 13B] FIG. 13B is a right side view of the left side beam.
[FIG. 13C] FIG. 13C is a left side view of the left side beam.
[FIG. 14] FIG. 14 is a cross-sectional view of the left side beam taken along line D-D of FIG. 13.
[FIG. 15] FIG. 15 is a schematic diagram depicting a procedure for fabricating the left side beam and the right side beam from a side beam elongated member.
[FIG. 16A] FIG. 16A is a left side view of a left rear pillar.
[FIG. 16B] FIG. 16B is a right side view of a right rear pillar.
[FIG. 17] FIG. 17 is a cross-sectional view of the left side beam in which a portion to which a door seal is attached is enlarged.
[FIG. 18] FIG. 18 is an enlarged view depicting a cross-sectional structure (irregularly-shaped cross section) of the left front pillar.
[FIG. 19A] FIG. 19A is a diagram depicting the irregularly-shaped cross section of the left front pillar of the present invention.
[FIG. 19B] FIG. 19B is a diagram depicting a cross section of the left front pillar of the related art.
[FIG. 20A] FIG. 20A is a cross-sectional view depicting an irregularly-shaped cross section of the left front pillar according to another example embodiment.
[FIG. 20B] FIG. 20B is a cross-sectional view depicting an irregularly-shaped cross section of the left front pillar according to another example embodiment.
[FIG. 21] FIG. 21 is a bird's-eye view depicting a coupling state between the right side beam and the rear beam at the upper end of the right rear pillar.
[FIG. 22] FIG. 22 is an upward perspective view depicting the coupling state between the right side beam and the rear beam at the upper end of the right rear pillar.
[FIG. 23] FIG. 23 is a bird's-eye view depicting a coupling state between the right side beam and the front beam at the upper end of the right front pillar.
[FIG. 24] FIG. 24 is an enlarged rear view of a support structure.
[FIG. 25] FIG. 25 is an enlarged rear view of the support structure in a case where at least one brake pedal, a steering column, an interlock release pedal, and the like are removed.
[FIG. 26] FIG. 26 is an enlarged front view of the support structure.
[FIG. 27] FIG. 27 is a cross-sectional view of the support structure taken at an intermediate position in the left-right direction.

### Description of Embodiments

A cabin 1 of the present example embodiment is described below with reference to the drawings as appropriate.

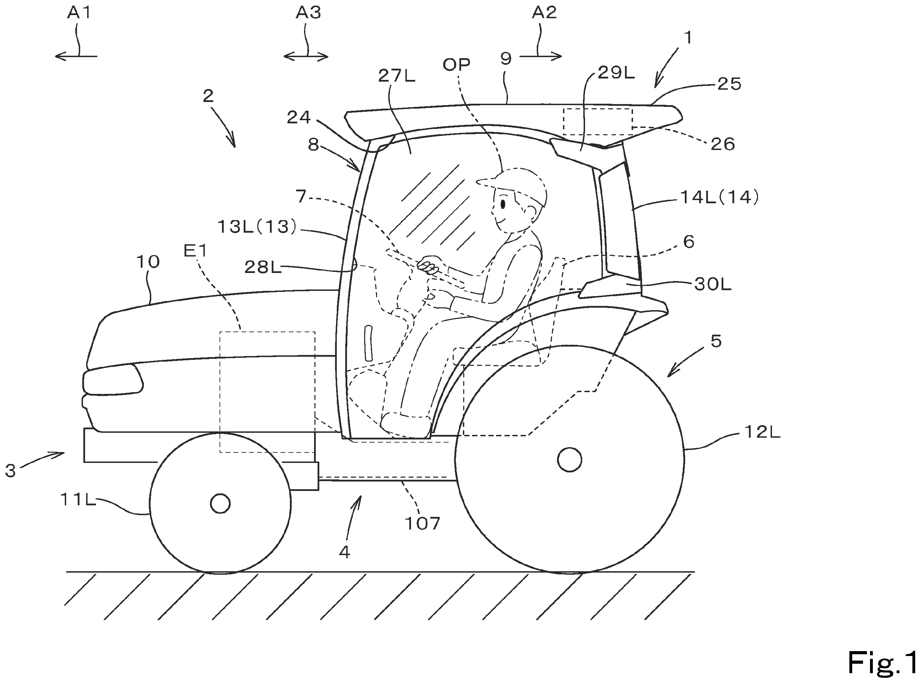

FIG. 1 depicts a side view of a tractor 2 including the cabin 1 of the present example embodiment. In the present example embodiment, the tractor 2 is shown as an example of a working machine (vehicle) on which the cabin 1 of the present invention is mounted. However, a wheel loader, a backhoe, or the like may be used as the working machine on which the cabin 1 of the present invention is mounted.

In the present specification, the direction of arrow A1 in FIG. 1 (the forward traveling direction of the tractor 2) is referred to as the forward direction. The direction of arrow A2 in FIG. 1 (the reverse traveling direction of the tractor 2) is referred to as the rearward direction. The direction of arrow A3 in FIG. 1 is referred to as the front-rear direction. Accordingly, the near side of the plane of paper of FIG. 1 is the left side when the tractor 2 and the cabin 1 are described, and the far side of the plane of paper of FIG. 1 is the right side when the tractor 2 and the cabin 1 are described. These directions coincide with directions as viewed from an operator OP who boards the tractor 2 (an operator's seat 6) (hereinafter, a person who boards the tractor 2 and drives and operates the tractor 2 is referred to as the operator OP). Further, the tractor 2 and the cabin 1 are described such that the horizontal direction orthogonal to the front-rear direction indicated by arrow A3 is defined as the width direction. Further, a direction from a central portion of the tractor 2 in the width direction toward a right portion or a left portion is referred to as an outward direction in the width direction. In other words, the outward direction in the width direction refers to a direction away from the center of the tractor 2 in the width direction. The direction opposite to the outward direction in the width direction is referred to as the inward direction in the width direction. In other words, the inward direction in the width direction refers to a direction toward the center of the tractor 2 in the width direction.

As depicted in FIG. 1, the tractor 2 includes a machine body (vehicle body) 3 capable of traveling. The machine body 3 includes a prime mover E1 and a power transmission case 4.

The prime mover E1 generates a driving force for causing the machine body 3 to travel. In the present example embodiment, a diesel engine is used as the prime mover E1. The prime mover E1 is located at a front portion of the tractor 2, and is covered by a hood 10. The hood 10 has a curved shape such that the upper surface slightly protrudes upward, and internally has a space capable of storing the prime mover E1. In the tractor 2 of the present example embodiment, the prime mover E1 is stored in the space inside the hood 10.

As the prime mover E1, instead of the diesel engine used in the present example embodiment, an electric motor may be used or a hybrid type in which a diesel engine and an electric motor are compositely combined may be used.

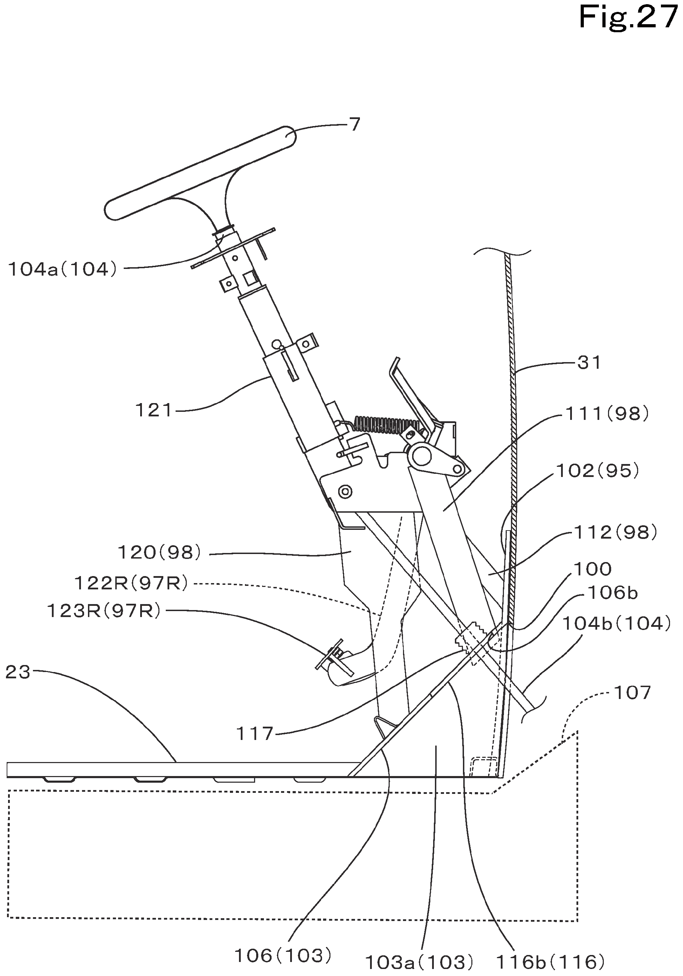

The power transmission case 4 is provided, for example, by directly connecting a flywheel housing to house a flywheel, a clutch housing 107 (see FIGS. 1 and 27) to house a clutch that can switch between transmitting and not transmitting power of the prime mover E1 transmitted through the flywheel, and a transmission case to house a transmission that speed-changes the power transmitted through the clutch.

As depicted in FIG. 1, the tractor 2 includes a traveling device 5 that supports the machine body 3 such that the machine body 3 is capable of traveling. The traveling device 5 of the tractor 2 of the present example embodiment shown in FIG. 1 as an example is of a wheel type (four-wheel type) including a left front wheel 11L and a right front wheel 11R located at a front portion of the machine body 3, and a left rear wheel 12L and a right rear wheel 12R located at a rear portion of the machine body 3. In other words, the tractor 2 of the present example embodiment includes the traveling device 5 that travels with four wheels including the left front wheel 11L, the right front wheel 11R, the left rear wheel 12L, and the right rear wheel 12R.

As depicted in FIG. 1, the cabin 1 is a compartment into which the operator OP enters to drive and operate the machine body 3. In the case of the present example embodiment, the cabin 1 is mounted at the rear portion of the machine body 3. The operator's seat 6 on which the operator OP is seated is provided at a rear portion of the interior of the cabin 1 (referred to as a cabin interior). For example, a steering wheel 7 for steering operation of the left front wheel 11L and the right front wheel 11R is provided forward of the operator's seat 6.

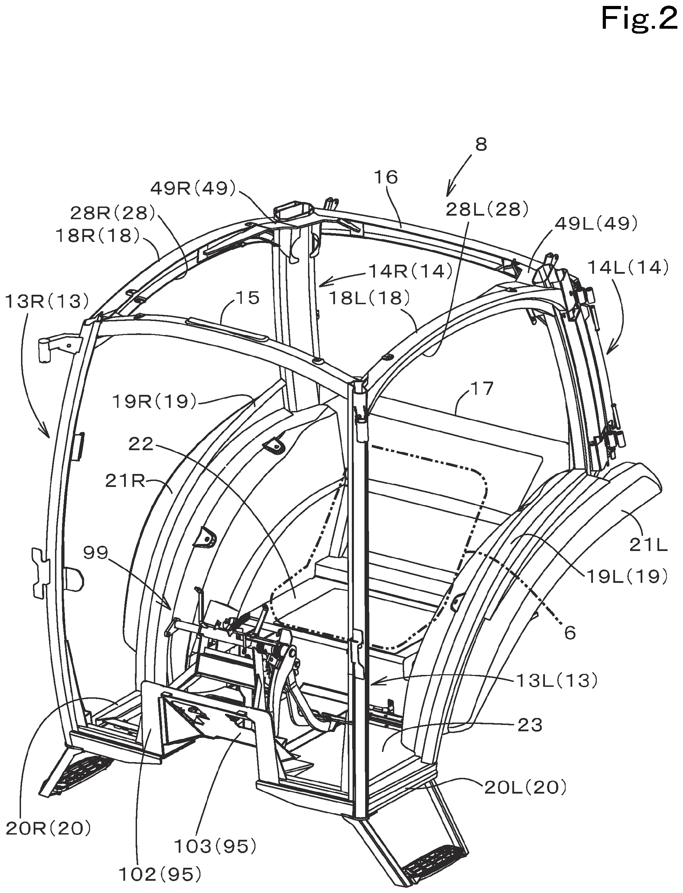

As depicted in FIGS. 1 and 2, the cabin 1 includes a cabin frame 8 obtained by combining elongated frame members three-dimensionally in a tower-like manner. That is, the cabin frame 8 defines a framework (outer frame) of the cabin 1, and includes a plurality of elongated frame members. Further, in the cabin frame 8, panel members such as a front panel 31 and at least one door panel 27, which are described later, are located between the frame members combined three-dimensionally in a tower-like manner. Further, a roof 9 is provided on an upper portion of the cabin frame 8. As depicted in FIG. 2, the cabin frame 8 of the present example embodiment is of a four-pillar type in which a center pillar (quarter pillar) is not provided.

As depicted in FIGS. 2 to 6 (particularly in detail in FIG. 2), the cabin frame 8 includes the plurality of elongated frame members. In the case of the present example embodiment, the frame members included in the cabin frame 8 are eleven members: a left front pillar 13L, a right front pillar 13R, a left rear pillar 14L, a right rear pillar 14R, a front beam 15, a rear beam 16, a rear lower frame 17 (rear beam), a left side beam 18L, a right side beam 18R, a left side lower beam 19L (left side lower frame), and a right side lower beam 19R (right side lower frame). Each frame member included in the cabin frame 8 is described in detail below.

As depicted in detail in FIGS. 2 to 5, the left front pillar 13L and the right front pillar 13R are located at a front portion of the cabin frame 8 (forward of the operator's seat 6). The left front pillar 13L and the right front pillar 13R are arranged in the width direction with a spacing therebetween, and are both located to extend along the up-down direction. The left front pillar 13L is provided at a left front corner of the cabin 1. Further, the right front pillar 13R is provided at a right front corner of the cabin 1. The front beam 15 extends between an upper portion of the left front pillar 13L and an upper portion of the right front pillar 13R. That is, the upper portion of the left front pillar 13L and the upper portion of the right front pillar 13R are coupled to each other in the left-right direction by the front beam 15.

Hereinafter, the left front pillar 13L and the right front pillar 13R are sometimes collectively referred to as front pillars 13.

As depicted in detail in FIGS. 2, 3, 5, and 6, the left rear pillar 14L and the right rear pillar 14R are located at a rear portion of the cabin frame 8 (rearward of the operator's seat 6). The left rear pillar 14L and the right rear pillar 14R are arranged in the width direction with a spacing therebetween, and are both located to extend along the up-down direction. The left rear pillar 14L is provided at a left rear corner of the cabin 1. Further, the right rear pillar 14R is provided at a right rear corner of the cabin 1. The rear beam 16 extends between an upper portion of the left rear pillar 14L and an upper portion of the right rear pillar 14R. That is, the upper portion of the left rear pillar 14L and the upper portion of the right rear pillar 14R are coupled to each other in the left-right direction by the rear beam 16. Further, the rear lower frame 17 extends between a lower portion of the left rear pillar 14L and a lower portion of the right rear pillar 14R. That is, the lower portion of the left rear pillar 14L and the lower portion of the right rear pillar 14R are coupled to each other in the left-right direction by the rear lower frame 17.

Hereinafter, the left rear pillar 14L and the right rear pillar 14R are sometimes collectively referred to as rear pillars 14.

As depicted in detail in FIGS. 2, 3, and 5, the left side beam 18L and the right side beam 18R are located at the upper portion of the cabin frame 8. The left side beam 18L and the right side beam 18R are arranged in the width direction with a spacing therebetween, and are both located to extend along the front-rear direction. The left side beam 18L is curved such that an intermediate portion in the front-rear direction bulges upward relative to the front end and the rear end. Further, the right side beam 18R is curved such that an intermediate portion in the front-rear direction bulges upward relative to the front end and the rear end.

The left side beam 18L extends between the upper portion of the left front pillar 13L and the upper portion of the left rear pillar 14L. That is, the upper portion of the left front pillar 13L and the upper portion of the left rear pillar 14L are coupled to each other in the front-rear direction by the left side beam 18L.

The right side beam 18R extends between the upper portion of the right front pillar 13R and the upper portion of the right rear pillar 14R. That is, the upper portion of the right front pillar 13R and the upper portion of the right rear pillar 14R are coupled to each other in the front-rear direction by the right side beam 18R.

Hereinafter, the left side beam 18L and the right side beam 18R are sometimes collectively referred to as side beams 18.

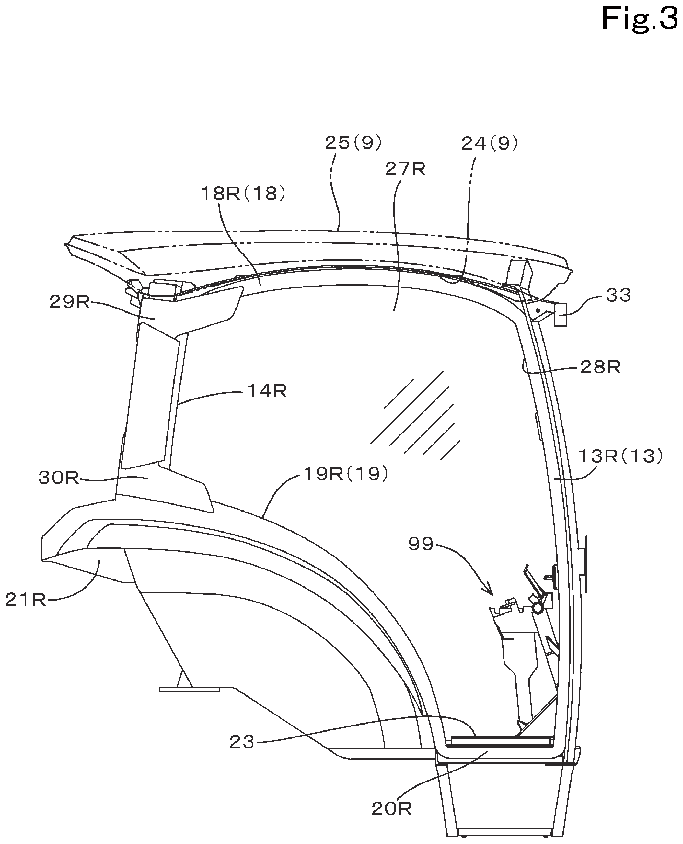

As depicted in detail in FIGS. 2 and 3, the left side lower beam 19L and the right side lower beam 19R are located at a lower portion of the cabin frame 8. The left side lower beam 19L and the right side lower beam 19R are arranged in the width direction with a spacing therebetween.

The left side lower beam 19L has an arcuate shape extending from the lower portion of the left rear pillar 14L toward the front lower side. That is, the left side lower beam 19L extends such that it shifts downward as it extends forward from the lower portion of the left rear pillar 14L. Further, a lower end portion of the left side lower beam 19L extending to shift downward is coupled to a lower end portion of the left front pillar 13L in the front-rear direction through a left coupling frame 20L.

The right side lower beam 19R has an arcuate shape extending from the lower portion of the right rear pillar 14R toward the front lower side. That is, the right side lower beam 19R extends such that it shifts downward as it extends forward from the lower portion of the right rear pillar 14R. Further, a lower end portion of the right side lower beam 19R extending to shift downward is coupled to a lower end portion of the right front pillar 13R in the front-rear direction through a right coupling frame 20R.

Hereinafter, the left side lower beam 19L and the right side lower beam 19R are collectively referred to as side lower beams 19.

As depicted in FIG. 2, a left rear wheel fender 21L that covers the left rear wheel 12L is fixed to the lower surface of the left side lower beam 19L and a lower end portion of the left rear pillar 14L. Further, a right rear wheel fender 21R that covers the right rear wheel 12R is fixed to the lower surface of the right side lower beam 19R and a lower end portion of the right rear pillar 14R.

Further, as depicted in detail in FIGS. 2, 4, 5, and 6, at the upper portion of the cabin frame 8, the front beam 15 is located at a front portion and the rear beam 16 is located at a rear portion.

The front beam 15 and the rear beam 16 are elongated frame members that are arranged in the front-rear direction with a spacing therebetween and both extend along the left-right direction. The front beam 15 is curved such that an intermediate portion in the left-right direction bulges upward relative to the left end and the right end. Further, the rear beam 16 linearly extends along the left-right direction with substantially no change in height in the up-down direction.

The front beam 15 extends between the upper portion of the left front pillar 13L and the upper portion of the right front pillar 13R. That is, the upper portion of the left front pillar 13L and the upper portion of the right front pillar 13R are coupled to each other in the left-right direction by the front beam 15.

The rear beam 16 extends between the upper portion of the left rear pillar 14L and the upper portion of the right rear pillar 14R. That is, the upper portion of the left rear pillar 14L and the upper portion of the right rear pillar 14R are coupled to each other in the left-right direction by the rear beam 16.

That is, the cabin frame 8 of the present example embodiment includes a combination of frame members such as the above-described left front pillar 13L, right front pillar 13R, left rear pillar 14L, right rear pillar 14R, front beam 15, rear beam 16, rear lower frame 17, left side beam 18L, right side beam 18R, left side lower beam 19L, and right side lower beam 19R.

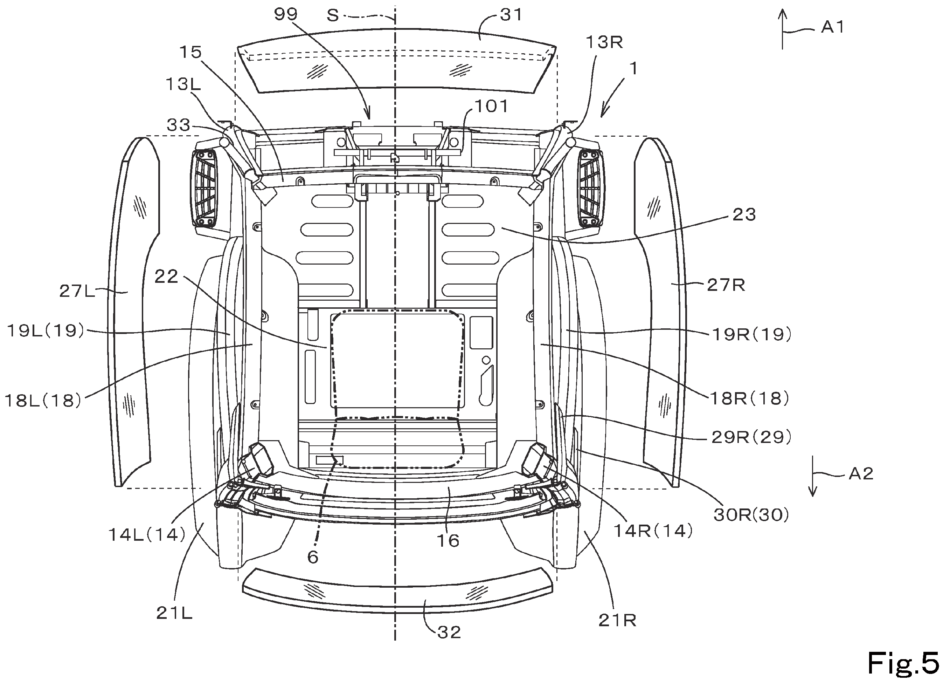

As depicted in FIGS. 2 and 5, a floor seat 22 is provided between the left rear wheel fender 21L and the right rear wheel fender 21R. The floor seat 22 is located below the operator's seat 6 to extend along the horizontal direction, and the operator's seat 6 is attached onto the floor seat 22. A rear portion of the floor seat 22 extends in an inclined manner toward the rear upper side, and is located on the back side of the operator's seat 6. A step 23 that defines a floor at a position lower than the floor seat 22 is located forward of the front lower end of the floor seat 22. The feet of the operator OP seated on the operator's seat 6 are put on the step 23.

As depicted in FIGS. 1, 3, 4, and 6, the roof 9 is located above the cabin frame 8, and is capable of preventing wind, rain, and direct sunlight from entering the cabin 1. The roof 9 includes an inner roof 24 including a ceiling portion and the like of the interior of the cabin 1 and an outer roof 25 including an upper wall and the like of the ceiling portion. A space between the inner roof 24 and the outer roof 25 is hollow, and a space in which an air conditioner device (air conditioning apparatus) 26 for conditioning air in the cabin interior can be located is defined.

As depicted in FIGS. 1, 2, and 5, the cabin 1 of the present example embodiment is configured to allow the operator OP to board from both the left and right sides, and includes a left entrance/exit 28L on the left side surface of the cabin 1 and a right entrance/exit 28R on the right side surface of the cabin 1. The left entrance/exit 28L is provided with a left door 27L (left door panel) that closes the left entrance/exit 28L. The right entrance/exit 28R is provided with a right door 27R (right door panel) that closes the right entrance/exit 28R.

The left entrance/exit 28L is an opening surrounded by the left front pillar 13L, the left side beam 18L, the left rear pillar 14L, the left side lower beam 19L, and the left coupling frame 20L, and opens leftward. The left entrance/exit 28L is closable by the left door 27L. The left door 27L is supported on the left rear pillar 14L through door hinges at two positions on the upper and lower sides. The door hinges at two positions on the upper and lower sides are a first door hinge 29L provided at the upper portion of the left rear pillar 14L and a second door hinge 30L provided below the first door hinge 29L. That is, the left door 27L can open and close the left entrance/exit 28L by swinging the front end thereof in the left-right direction with respect to the rear end at which the first door hinge 29L and the second door hinge 30L are provided.

The right entrance/exit 28R is an opening surrounded by the right front pillar 13R, the right side beam 18R, the right rear pillar 14R, the right side lower beam 19R, and the right coupling frame 20R, and opens rightward. The right entrance/exit 28R is closable by the right door 27R. The right door 27R is supported on the right rear pillar 14R through door hinges at two positions on the upper and lower sides. The door hinges at two positions on the upper and lower sides are a first door hinge 29R provided at the upper portion of the right rear pillar 14R and a second door hinge 30R provided below the first door hinge 29R. That is, the right door 27R can open and close the right entrance/exit 28R by swinging the front end thereof in the left-right direction with respect to the rear end at which the first door hinge 29R and the second door hinge 30R are provided.

The left door 27L and the right door 27R described above include panels having light transmissibility, such as tempered glass or acrylic glass, and are capable of ensuring good visibility to the outside of the vehicle from the interior of the cabin 1.

As depicted in FIG. 5, the cabin 1 of the present example embodiment includes the front panel 31 at the front portion of the cabin frame 8 and a rear panel 32 at the rear portion of the cabin frame 8.

The front panel 31 is located between the left front pillar 13L and the right front pillar 13R located with a distance therebetween in the left-right direction, and is supported from left and right by the left front pillar 13L and the right front pillar 13R. Further, the upper edge of the front panel 31 is fixed to the front beam 15 located above the front panel 31. Similarly to the left door 27L and the right door 27R described above, the front panel 31 includes a panel having light transmissibility, such as tempered glass or acrylic glass, and is capable of ensuring good visibility to the outside of the vehicle (the front side) from the interior of the cabin 1.

The front panel 31 of the present example embodiment has a curved surface shape that bulges forward. That is, when the front panel 31 is cut along the horizontal direction, a horizontal cross section of the front panel 31 has an arcuate shape such that a central portion in the left-right direction protrudes forward relative to the left end and the right end. Further, when the front panel 31 is cut along the up-down direction, a cross section of the front panel 31 has an arcuate shape such that a central portion in the up-down direction protrudes forward relative to the upper end and the lower end. By providing the front panel 31 having a curved surface that bulges forward, it is possible to improve visibility to the front outside of the vehicle, particularly to the lower side, from the interior of the cabin 1.

Next, configurations of the left front pillar 13L and the right front pillar 13R are described in detail.

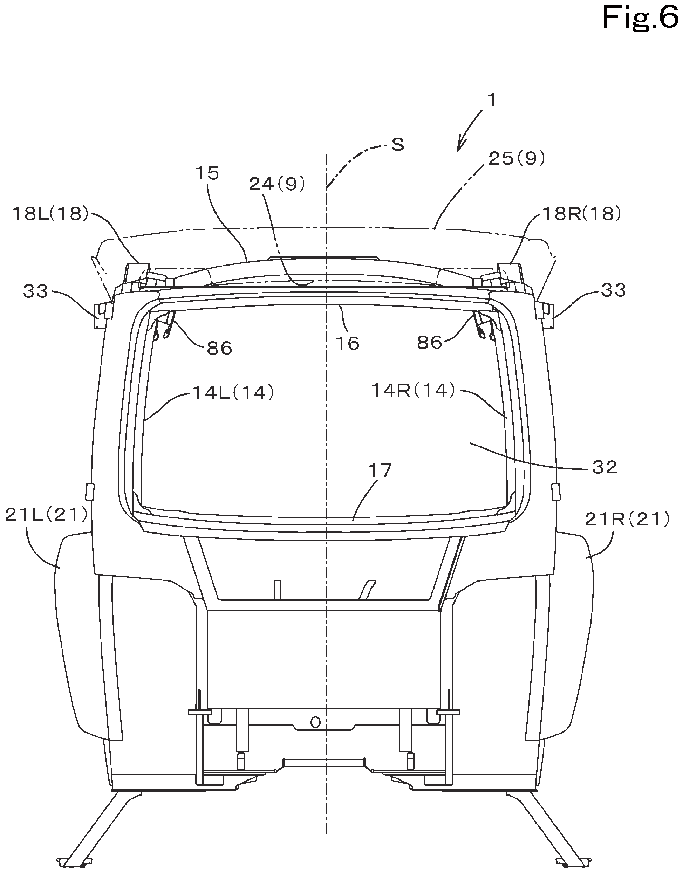

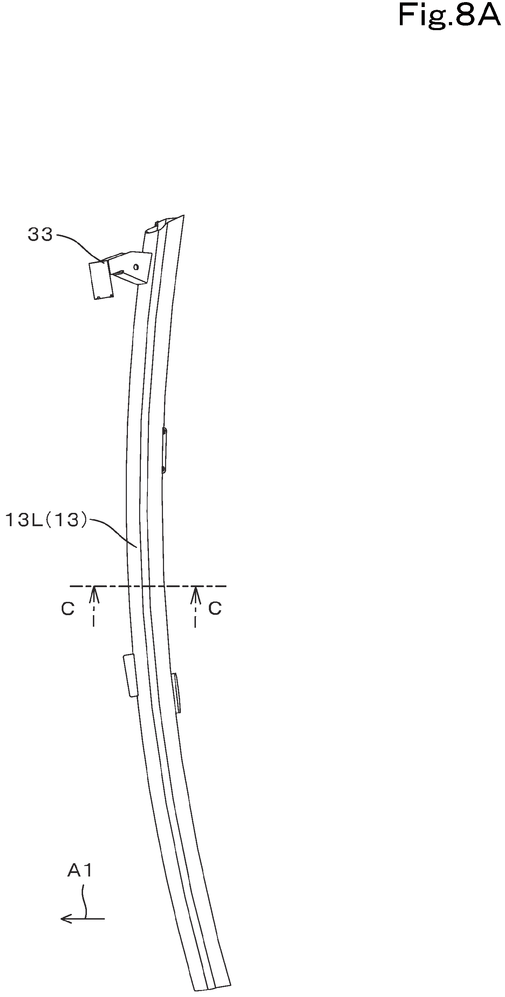

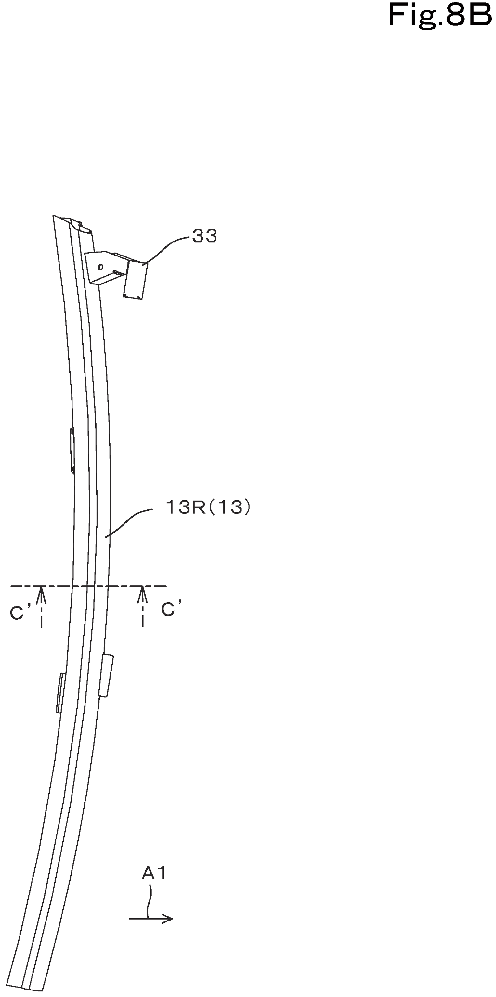

FIG. 8A depicts a left side view of the left front pillar 13L. FIG. 8B depicts a right side view of the right front pillar 13R. As can be understood from a comparison between FIGS. 8A and 8B, the left front pillar 13L and the right front pillar 13R are left-right symmetric with respect to a vertical reference plane S (see FIG. 6) that passes through the center of the cabin 1 in the width direction and is orthogonal to the width direction.

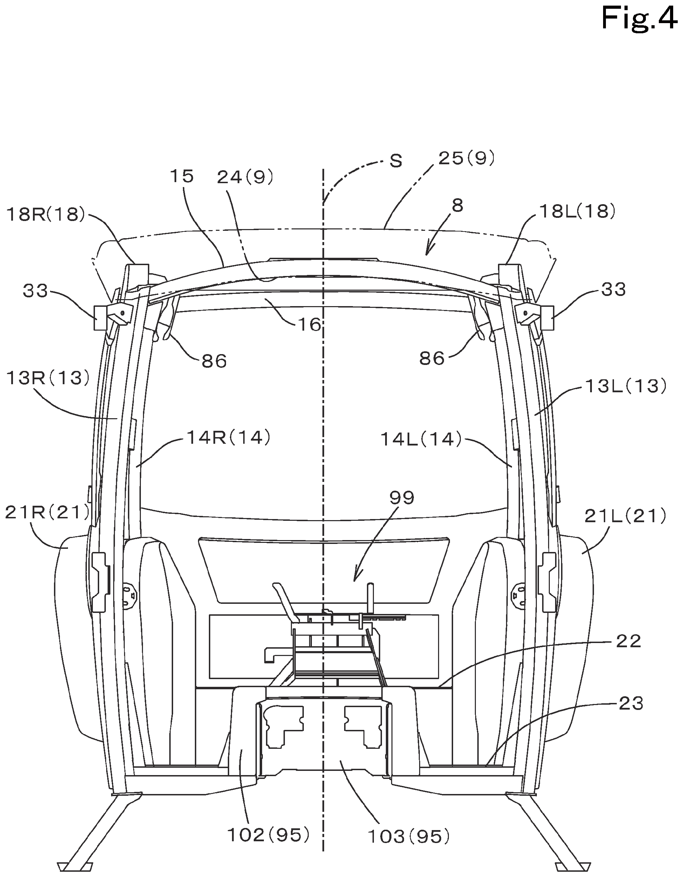

As depicted in FIGS. 4 to 6, the reference plane S is a vertical plane that passes through the center of the cabin 1 in the width direction and is orthogonal to the width direction, and is located at the middle of the cabin 1 in the left-right direction.

As depicted in FIGS. 8A and 8B, the left front pillar 13L and the right front pillar 13R are elongated in the up-down direction, and have an arcuate shape curved such that a central portion in the up-down direction protrudes forward relative to the upper end and the lower end. Mirror attachment portions 33 to which door mirrors and the like are attached are provided at the upper portions of the left front pillar 13L and the right front pillar 13R, respectively.

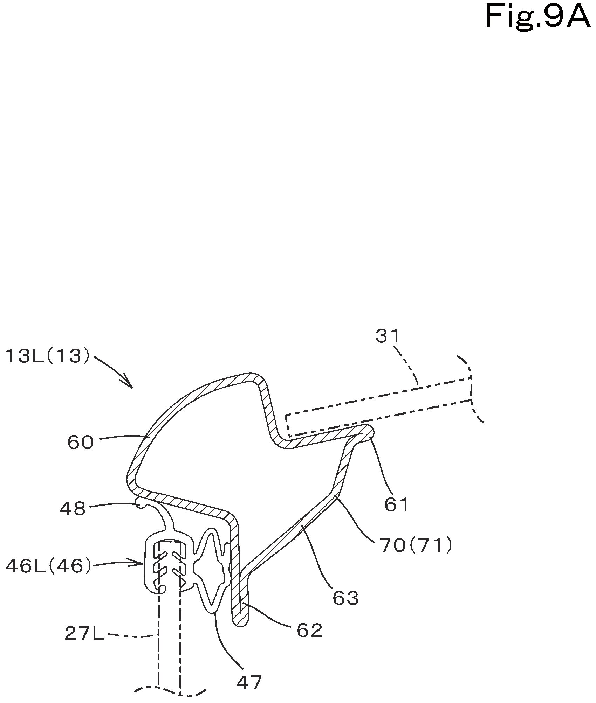

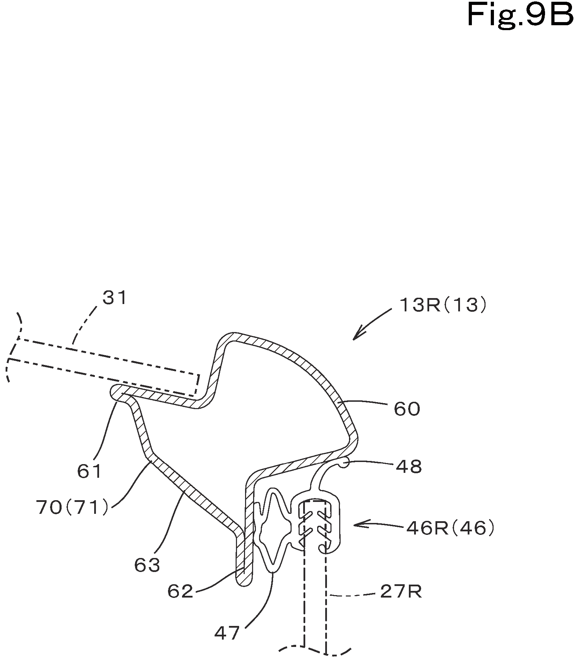

When an intermediate portion of the left front pillar 13L depicted in FIG. 8A in the up-down direction is cut along a cutting line connecting "C" and "C" in the diagram, a cross section as depicted in FIG. 9A is obtained. Further, similarly to the left front pillar 13L, when an intermediate portion of the right front pillar 13R in the up-down direction is cut at the same height as the left front pillar 13L along a cutting line connecting "C'" and "C'" in the diagram, a cross section as depicted in FIG. 9B is obtained.

The cross section of the left front pillar 13L in FIG. 9A and the cross section of the right front pillar 13R in FIG. 9B are both irregularly-shaped cross sections, and the cross-sectional shapes thereof do not become congruent even when inverted or rotated. The term "irregularly-shaped cross section" in the present specification refers to such a shape that the shape before inversion or rotation does not become identical to the shape after inversion or rotation even when the shape is inverted with respect to any straight line or rotated about any point, that is, a shape having no line symmetry or rotational symmetry.

The left front pillar 13L and the right front pillar 13R individually have no line symmetry or rotational symmetry. However, when a cross section of the left front pillar 13L is left-right inverted, it becomes congruent with a cross section of the right front pillar 13R. When a cross section of the right front pillar 13R is left-right inverted, it becomes congruent with a cross section of the left front pillar 13L. That is, the cross sections of the left front pillar 13L and the right front pillar 13R are in such a relationship as to be left-right line-symmetric with each other.

The reason why the cross section of the left front pillar 13L and the cross section of the right front pillar 13R are in a left-right line-symmetric relationship is that the left front pillar 13L and the right front pillar 13R are provided using elongated members having an identical shape. That is, the left front pillar 13L and the right front pillar 13R are each fabricated from an elongated member (front pillar elongated member 34F) that is a common base material (processing base material).

Next, the elongated member is described.

In the present example embodiment, similarly to the left front pillar 13L and the right front pillar 13R, elongated members having an identical shape are used as base materials common to left and right frame members also for the left side beam 18L and the right side beam 18R and for the left rear pillar 14L and the right rear pillar 14R.

Hereinafter, the elongated member for the left front pillar 13L and the right front pillar 13R is referred to as the front pillar elongated member 34F in order to distinguish it from the elongated member for the left rear pillar 14L and the right rear pillar 14R (a rear pillar elongated member 34R) and the elongated member for the left side beam 18L and the right side beam 18R (a side beam elongated member 34S), which are described later.

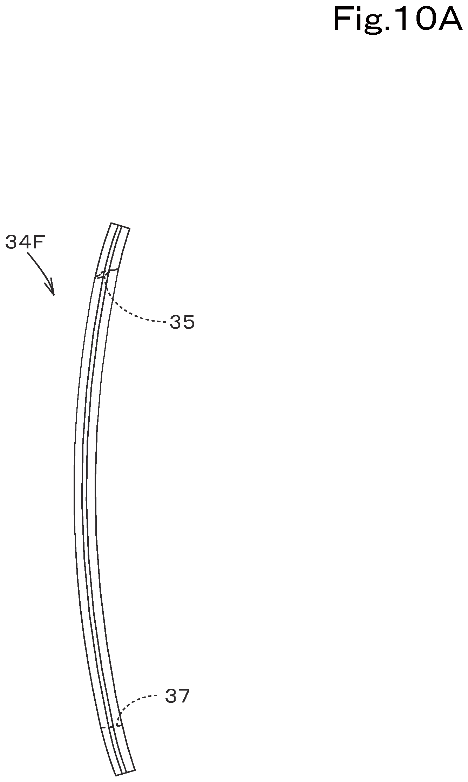

As depicted in FIG. 10A, the front pillar elongated member 34F is provided using a pipe member curved such that an intermediate portion in the up-down direction bulges forward relative to the upper end and the lower end. The front pillar elongated member 34F of the present example embodiment is curved with the same curvature over the entire region from the upper end to the lower end, and the curvatures of an upper half and a lower half are symmetric in the up-down direction with respect to an intermediate point in the up-down direction. The front pillar elongated member 34F has an irregularly-shaped cross section as depicted in FIGS. 9A and 9B, and the inside thereof is hollow. The left front pillar 13L and the right front pillar 13R are selectively fabricated by changing the manner of cutting end portions of the front pillar elongated member 34F having an identical shape. Specifically, in a case where the left front pillar 13L is fabricated by cutting one end and the other end of the front pillar elongated member 34F in the longitudinal direction, the right front pillar 13R can be obtained by cutting the end portions such that the manner of cutting the respective end portions in the longitudinal direction is reversed. In the following, a description is given of a procedure for selectively fabricating the left front pillar 13L and the right front pillar 13R by reversing the manner of cutting of the front pillar elongated member 34F having an identical shape in this manner.

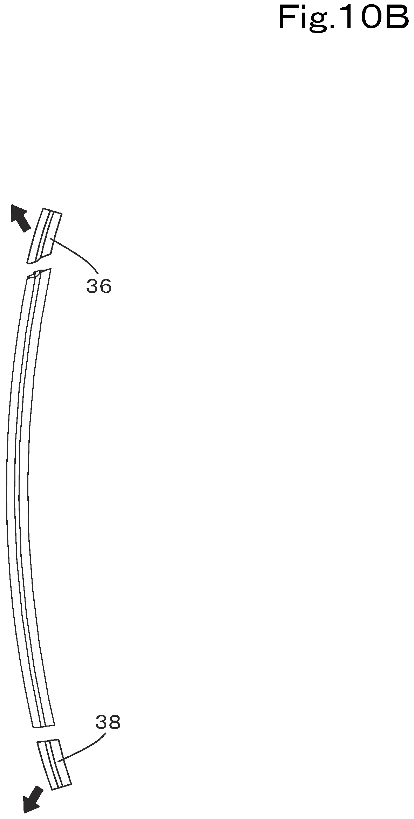

FIGS. 10A and 10B are diagrams depicting a procedure for fabricating the left front pillar 13L from the front pillar elongated member 34F. In FIGS. 10A and 10B, the fabrication is performed in the order of FIG. 10A and FIG. 10B.

As depicted in FIG. 10A, the front pillar elongated member 34F is a pipe member longer in the longitudinal direction than the left front pillar 13L and the right front pillar 13R.

As depicted in FIG. 10B, when the left front pillar 13L is fabricated from the front pillar elongated member 34F, cutting is performed at a first cut line 35 (see FIG. 10A) slightly below the upper end of the front pillar elongated member 34F, and a first end piece 36 located above the first cut line 35 is cut and removed. Further, cutting is performed at a second cut line 37 (see FIG. 10A) slightly above the lower end of the front pillar elongated member 34F, and a second end piece 38 located below the second cut line 37 is cut and removed.

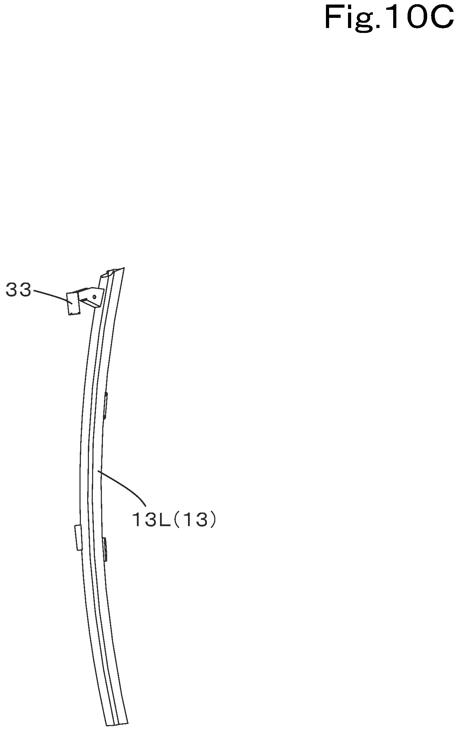

As depicted in FIG. 10C, in the case where, after the first end piece 36 and the second end piece 38 are removed by the cutting depicted in FIG. 10B, the mirror attachment portion 33 and the like are attached at a predetermined position on an upper portion of the front pillar elongated member 34F after the cutting, the left front pillar 13L can be fabricated.

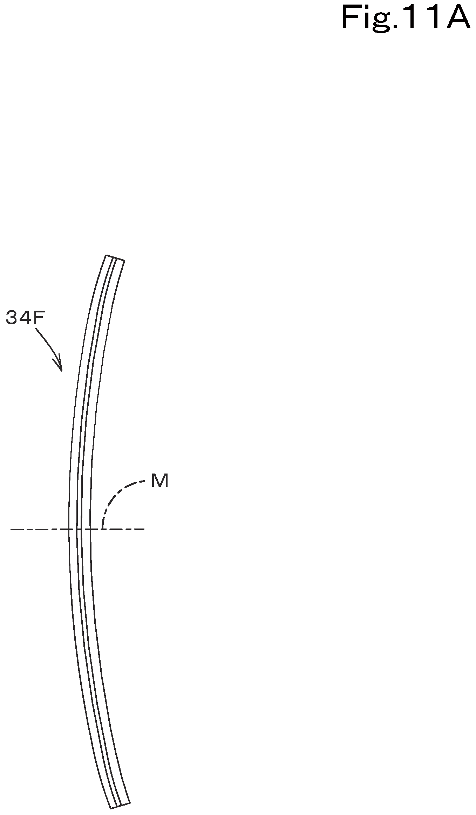

Next, a procedure for fabricating the right front pillar 13R from the front pillar elongated member 34F is described with reference to FIGS. 11A to 11D. In FIGS. 11A to 11D as well, the fabrication is performed in the order from FIG. 11A to FIG. 11D.

As depicted in FIG. 11A, first, the same front pillar elongated member 34F as that in FIG. 10A is prepared. Here, the front pillar elongated member 34F of the present example embodiment has an arcuate shape curved with the same curvature from the upper end to the lower end. That is, the front pillar elongated member 34F includes a structure that is line-symmetric in the up-down direction with respect to an inversion reference line M that horizontally passes through the middle between the upper end and the lower end (the middle in the up-down direction). Thus, even when the front pillar elongated member 34F is inverted in the up-down direction with respect to the inversion reference line M, the curved state such as the curvature does not change between before and after the inversion.

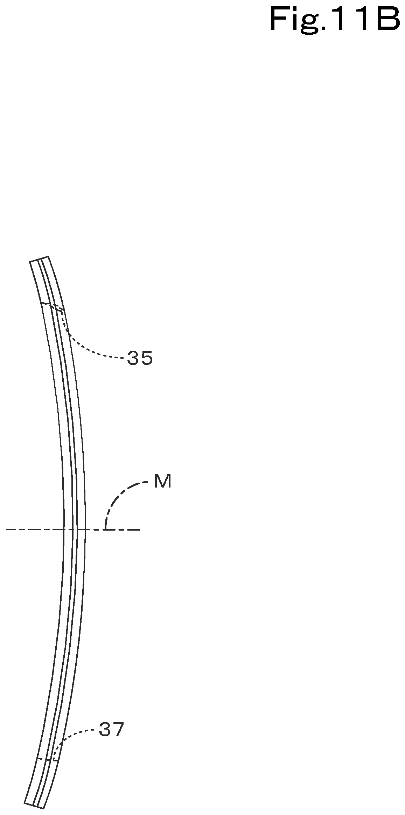

However, the front pillar elongated member 34F has, for example, the irregularly-shaped cross section as depicted in FIG. 9A. When the front pillar elongated member 34F is inverted in the up-down direction with respect to the inversion reference line M, the irregularly-shaped cross section is also inverted in the up-down direction. Further, a change from the irregularly-shaped cross section as depicted in FIG. 9A to the irregularly-shaped cross section as depicted in FIG. 9B is made. The front pillar elongated member 34F obtained in this manner (the front pillar elongated member 34F after the up-down inversion) is as depicted in FIG. 11B.

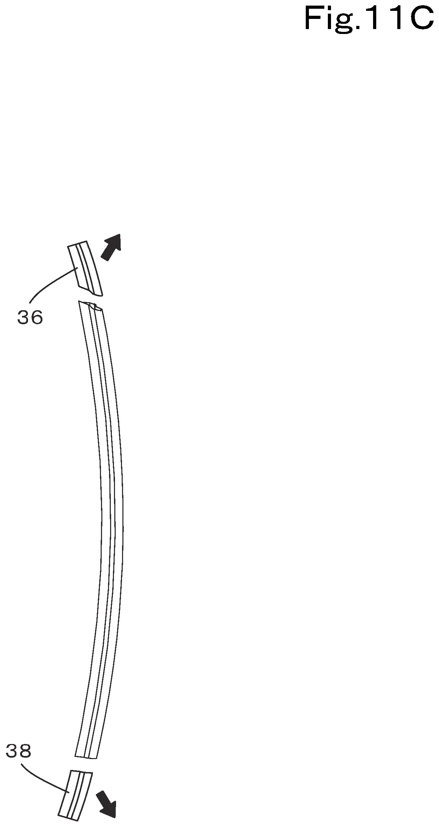

As depicted in FIG. 11C, for the front pillar elongated member 34F after the up-down inversion, similarly to the case of fabricating the left front pillar 13L, cutting is performed at the first cut line 35 below the upper end of the front pillar elongated member 34F to cut off the first end piece 36, and cutting is performed at the second cut line 37 above the lower end of the front pillar elongated member 34F to cut off the second end piece 38.

The first cut line 35 and the second cut line 37 in the case of fabricating the right front pillar 13R are identical to those in the case of fabricating the left front pillar 13L in both the inclination direction and the positions from both ends of the front pillar elongated member 34F (the positions in the longitudinal direction).

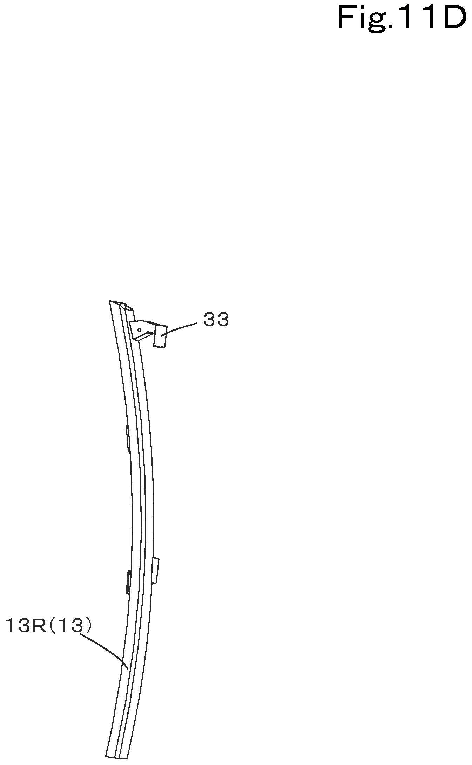

As depicted in FIG. 11D, after the first end piece 36 and the second end piece 38 are removed, the mirror attachment portion 33 and the like are attached at a predetermined position on an upper portion of the front pillar elongated member 34F after the cutting. As a result, the right front pillar 13R depicted in FIG. 11D can be fabricated.

In the present example embodiment, the example in which both ends of the front pillar elongated member 34F in the longitudinal direction are cut off has been described. However, cutting of the end portion may be performed for only one end portion in the longitudinal direction. Further, cutting at the first cut line 35 and the second cut line 37 may be performed along cutting lines other than straight lines, for example, along cutting lines that are curves or include combinations of a plurality of curves and straight lines.

In other words, the left front pillar 13L and the right front pillar 13R are identical in both the curvature and the cross-sectional shape at portions other than the end portions in the longitudinal direction where cutting is performed.

The front pillar elongated member 34F described above can be fabricated into either the left front pillar 13L or the right front pillar 13R depending on whether or not to perform inversion in the longitudinal direction before cutting. In other words, the front pillar elongated member 34F is a processing base material from which the left front pillar 13L and the right front pillar 13R can be selectively obtained depending on whether or not to perform inversion (a common processing base material for the left front pillar 13L and the right front pillar 13R). Thus, when the front pillar elongated member 34F, which is a common (identically shaped) base material, is subjected to molding or bending, the labor for the molding or bending is similar to that for one kind of elongated member. However, in a fabrication method in the related art, it has been necessary to fabricate the left front pillar 13L and the right front pillar 13R individually using different molds or to perform bending separately, and the labor for the molding or bending has required a large amount of time and costs. Therefore, in the cabin 1 of the present example embodiment, an increase in manufacturing costs can be reduced by using the front pillar elongated member 34F as a processing base material common to the left front pillar 13L and the right front pillar 13R.

In the above description, the left front pillar 13L, the right front pillar 13R, and the front pillar elongated member 34F have been described based on an orientation in which they extend upright along the up-down direction, in other words, an orientation when they are attached to the cabin 1. However, the left front pillar 13L, the right front pillar 13R, and the front pillar elongated member 34F may be subjected to cutting-off of the first end piece 36 and the second end piece 38 or attachment of the mirror attachment portion 33 and the like in a state in which they are oriented in the horizontal direction or in a state in which they are oriented to be inclined with respect to the horizontal direction. In this case, it is sufficient that the front pillar elongated member 34F be inverted at the middle in the longitudinal direction with respect to the inversion reference line M extending in a direction orthogonal to the longitudinal direction.

The left front pillar 13L and the right front pillar 13R described above have an arcuate shape curved with the same curvature (a single curvature) from the upper end to the lower end, and the front pillar elongated member 34F, which is the processing base material for the left front pillar 13L and the right front pillar 13R, also has an arcuate shape curved with the same curvature (a single curvature) from the upper end to the lower end.

However, the elongated member is not required to be curved with the same curvature over the entire region in the longitudinal direction as long as it has symmetry such that the curved state is identical between before and after inversion when it is inverted with respect to the inversion reference line M. For example, the elongated member is not necessarily required to have a single curvature as long as it has such a curved state that, based on the inversion reference line M located at the middle in the longitudinal direction, the curvature at a position located at a certain distance in one direction in the longitudinal direction is equal to the curvature at a position located at the same distance in the other direction in the longitudinal direction (a curved state that is line-symmetric based on the inversion reference line M). Examples of such an elongated member include the side beam elongated member 34S, which is the elongated member for the left side beam 18L and the right side beam 18R described above.

Next, configurations of the left side beam 18L and the right side beam 18R are described in detail.

As depicted in FIG. 2, the left side beam 18L is located above the left door 27L, and the right side beam 18R is located above the right door 27R.

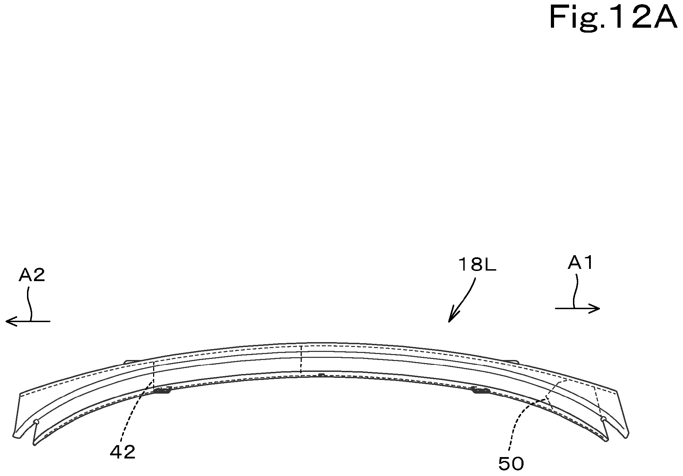

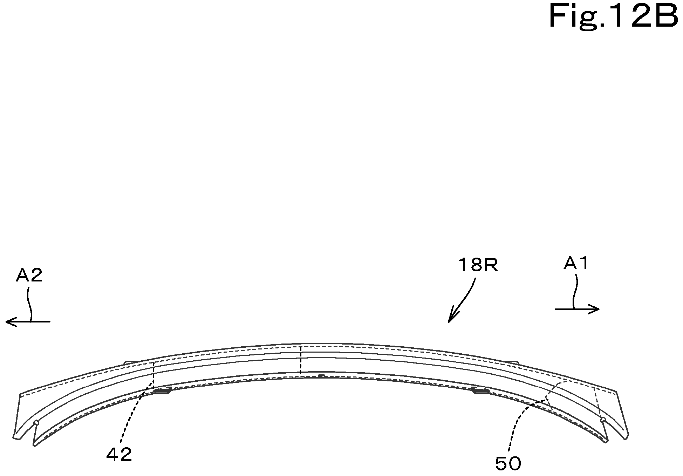

FIG. 12A depicts a left side view of the left side beam 18L. FIG. 12B depicts a right side view of the right side beam 18R. As can be understood from a comparison between FIGS. 12A and 12B, the left side beam 18L and the right side beam 18R are left-right symmetric with respect to the vertical reference plane S (see FIGS. 4 to 6) that passes through the center of the cabin 1 in the width direction and is orthogonal to the width direction.

The left side beam 18L and the right side beam 18R include the same basic configuration except that their arrangements are opposite between left and right. A structure of the side beam 18 of the present example embodiment is described below using the left side beam 18L as a representative example.

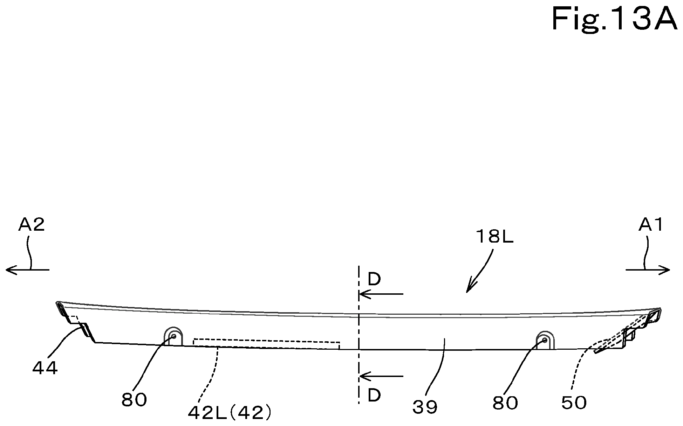

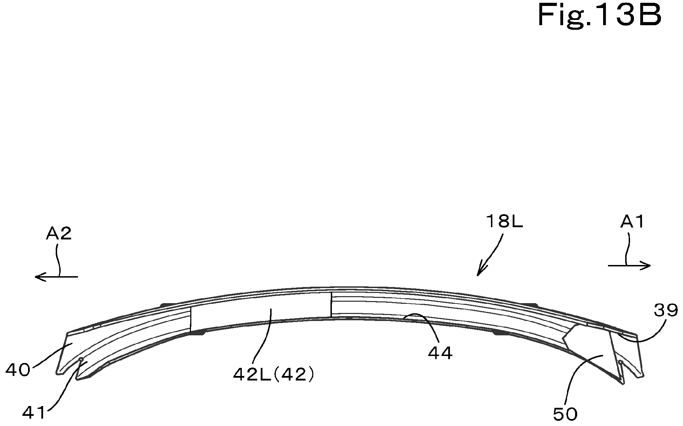

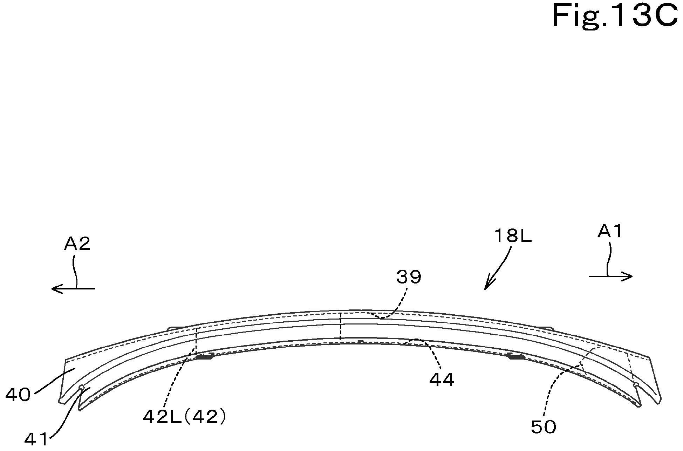

FIG. 13 depicts, in comparison, drawings of the left side beam 18L as viewed from different viewpoints. FIG. 13A is a plan view of the left side beam 18L. FIG. 13B is a right side view of the left side beam 18L. FIG. 13C is a left side view of the left side beam 18L.

As depicted in FIG. 13A, the upper surface of the left side beam 18L has an elongated rectangular appearance extending substantially linearly in the front-rear direction. More precisely, the upper surface of the left side beam 18L has an arcuate shape gently curved such that a middle portion in the front-rear direction bulges inward in the width direction. That is, in light of a case where the respective members are assembled as the cabin 1, the distance along the width direction between the middle portion of the left side beam 18L in the front-rear direction and a middle portion of the right side beam 18R in the front-rear direction is shorter than the distance along the width direction between the front end of the left side beam 18L and the front end of the right side beam 18R (see FIG. 5).

In the upper surface of the left side beam 18L, screw holes 80 for attaching the roof 9 are defined at a position slightly rearward of the front end and a position slightly forward of the rear end.

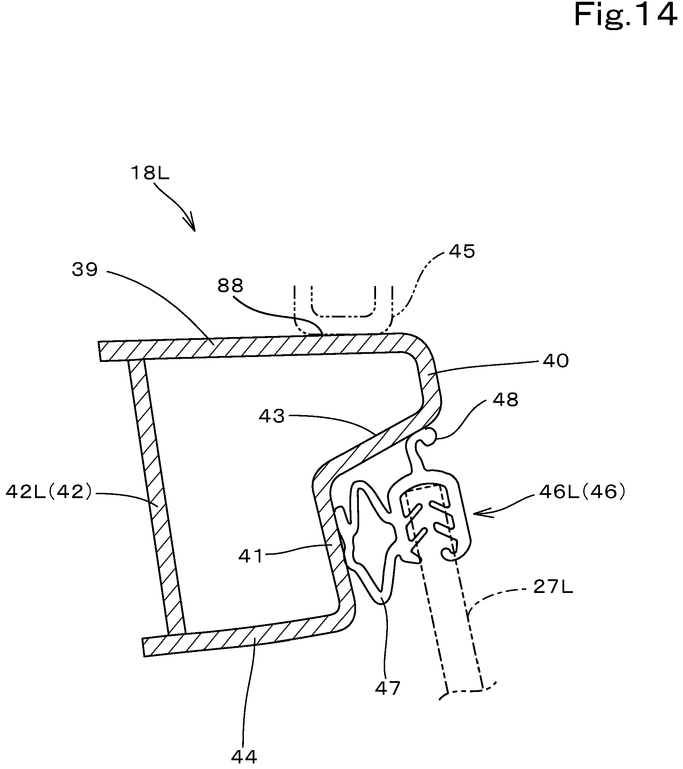

FIG. 14 depicts a cross-sectional view of the left side beam 18L described above taken at the middle portion in the front-rear direction along line D-D of FIG. 13A.

As depicted in FIG. 14, in a cross section of the left side beam 18L, three sides of a cavity are enclosed by three wall portions including an upper wall portion 39, a lower wall portion 44, and a left wall portion (outer wall portion). In other words, the cross section of the left side beam 18L has an approximately U-shape or approximately Σ-shape that opens toward the interior side. A wall portion is not provided, in principle, on the right side surface of the left side beam 18L, but a left first fixing plate 42L is provided slightly rearward of the middle portion in the front-rear direction (see FIG. 13B).

When the cross section of the left side beam 18L has the approximately U-shape or approximately Σ-shape, in fabricating the left side beam 18L, a first outer wall portion 40, a connecting wall portion 43, and a second outer wall portion 41 described above can be easily processed in a single processing step by pressing a processing mold against the side surface on the outer side in the width direction and performing press working from the inner side in the width direction. Further, when the press working is used, the left side beam 18L can be easily provided in a substantially linear shape in the front-rear direction or in a shape that gently bulges in an arcuate manner inward in the width direction.

The left side surface of the left side beam 18L has a staircase shape. Specifically, the left side surface of the left side beam 18L includes the first outer wall portion 40 provided as a wall surface that is connected to an end portion (outer end portion) of the upper wall portion 39 on the outer side in the width direction and extends upright along the up-down direction and the second outer wall portion 41 that is located inward of the first outer wall portion 40 in the width direction and extends upright along the up-down direction. The connecting wall portion 43 that connects the first outer wall portion 40 and the second outer wall portion 41 is provided between the first outer wall portion 40 and the second outer wall portion 41.

The connecting wall portion 43 connects the lower end of the first outer wall portion 40 and the upper end of the second outer wall portion 41 in a substantially horizontal direction. In the case of the left side beam 18L, the connecting wall portion 43 is provided in a direction slightly inclined upward toward the left with respect to the horizontal direction. Although not depicted, in the case of the right side beam 18R, the connecting wall portion 43 is provided in a direction slightly inclined upward toward the right with respect to the horizontal direction. At the lower end of the second outer wall portion 41, the lower wall portion 44 described above is located to extend inward in the width direction.

As depicted in FIG. 13B, the right side surface of the left side beam 18L, that is, the side surface of the left side beam 18L facing inward in the width direction, has an arcuate appearance curved such that a middle portion in the front-rear direction bulges upward. The upper wall portion 39 is located at an upper portion of the right side surface of the left side beam 18L, and the lower wall portion 44 is located at a lower portion of the right side surface. The left side beam 18L opens rightward, and the right end of the upper wall portion 39 and the right end of the lower wall portion 44 are provided with a substantially constant spacing therebetween in the up-down direction.

The left first fixing plate 42L is provided on the right side surface of the left side beam 18L at a position slightly rearward of the middle portion in the front-rear direction. The left first fixing plate 42L is a member that couples, in the up-down direction, the right end (an end portion on the inner side in the width direction) of the upper wall portion 39 and the right end (an end portion on the inner side in the width direction) of the lower wall portion 44 (see FIG. 14), and is located to partially close the opening of the left side beam 18L that opens inward in the width direction. The left first fixing plate 42L is provided for fixing a left reinforcing member 49L described later, that is, the left reinforcing member 49L that couples the left rear pillar 14L, the rear beam 16, and the left side beam 18L in a brace-like manner. When the right end of the upper wall portion 39 and the right end of the lower wall portion 44 are coupled, in the up-down direction, by the left first fixing plate 42L, the left side beam 18L is less likely to be deformed, and the load-bearing capacity of the cabin 1 can be increased.

A first welding auxiliary portion 50 is provided at the front end of the right side surface of the left side beam 18L. The first welding auxiliary portion 50 is a plate member extending upright along the up-down direction, and is attached to be inclined toward the left rear side from the left wall portion (outer wall portion) of the left side beam 18L.

As depicted in FIG. 13C, the left side surface of the left side beam 18L, that is, the left side surface of the left side beam 18L facing outward in the width direction, has an arcuate appearance curved such that a middle portion in the front-rear direction bulges upward similarly to the right side surface. The first outer wall portion 40 is provided at an upper portion of the left side surface of the left side beam 18L, and the second outer wall portion 41 is provided at a lower portion of the left side surface. The length of the first outer wall portion 40 along the front-rear direction is longer than the length of the second outer wall portion 41. Thus, the front end of the first outer wall portion 40 protrudes forward of the front end of the second outer wall portion 41, and the rear end of the first outer wall portion 40 protrudes rearward of the rear end of the second outer wall portion 41.

Next, a configuration of the side beam elongated member 34S is described in detail.

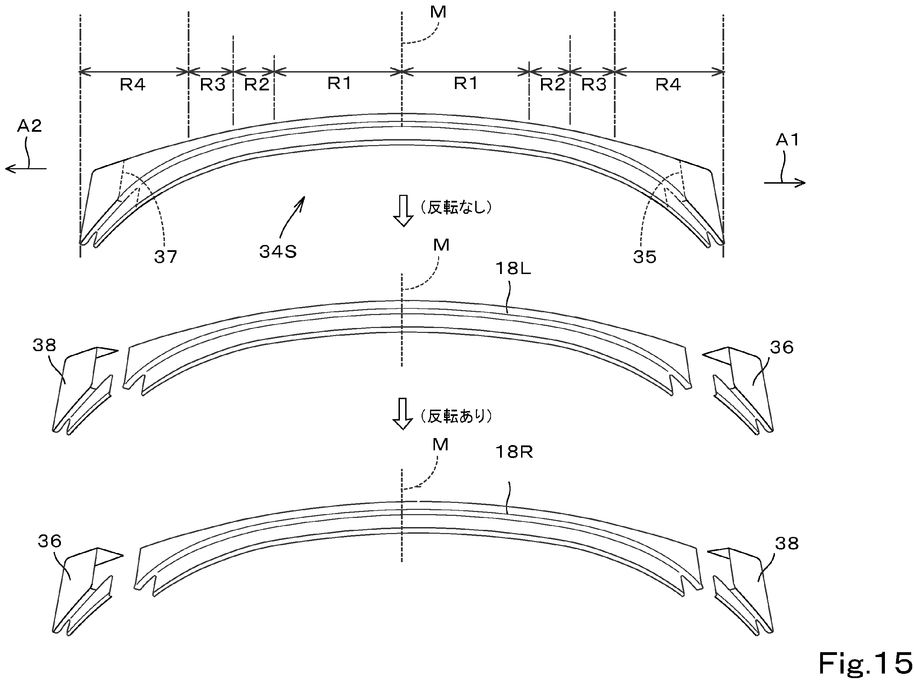

As depicted in FIG. 15, the left side beam 18L and the right side beam 18R described above are provided using the side beam elongated member 34S having an identical shape curved to bulge upward. That is, a base material common to the left side beam 18L and the right side beam 18R is the side beam elongated member 34S.

The side beam elongated member 34S is provided such that the curvature on the front side and the curvature on the rear side are symmetric in the front-rear direction with respect to the inversion reference line M that intersects the middle in the front-rear direction (longitudinal direction) orthogonally to the front-rear direction.

Specifically, in contrast to the front pillar elongated member 34F, which has an equal curvature over the entire region in the longitudinal direction, the side beam elongated member 34S has a curvature that changes in multiple stages depending on the position in the longitudinal direction. In the case of the present example embodiment, the curvature of the lower surface of the side beam elongated member 34S changes in four stages. For example, in the front pillar elongated member 34F, the curvature of the lower surface is R1 in regions adjacent to the inversion reference line M on both sides thereof. The curvature is R2 in regions adjacent outward in the width direction to the regions where the curvature is R1. The curvature is R3 in regions adjacent outward in the width direction to the regions where the curvature is R2. The curvature of the lower surface changes to R4 in regions adjacent outward in the width direction to the regions where the curvature is R3. In this manner, the lower surface of the side beam elongated member 34S of the present example embodiment has a curvature of any one of R1, R2, R3, and R4.

That is, in the side beam elongated member 34S of the present example embodiment, based on the inversion reference line M in the front-rear direction, the curvatures are equal when the distance from the inversion reference line M toward the front side and the distance from the inversion reference line M toward the rear side are equal. Further, when the distance from the inversion reference line M toward the front side or the rear side changes, the curvature of the lower surface also changes in multiple stages (in the case of the present example embodiment, four stages). The change in the curvature in multiple stages is a change that becomes larger as the distance from the inversion reference line M in the front-rear direction increases. Further, the multi-stage curvatures are arranged to be located symmetrically in the front-rear direction based on the inversion reference line M. Therefore, also in the side beam elongated member 34S, even when inversion in the front-rear direction is performed with respect to the inversion reference line M located at the middle in the front-rear direction, the shape does not change between before and after the inversion similarly to the front pillar elongated member 34F.

In the case of the present example embodiment, the curvature in each region of the side beam elongated member 34S is as follows. In the regions of the curvature R1, the curvature is the smallest. In the regions of the curvature R2, the curvature is the second smallest after the regions of the curvature R1. In the regions of the curvature R3 and the regions of the curvature R4, the curvature is the largest. That is, in the regions of the curvature R1, the curvature is set small so that a space having a sufficient volume can be secured inside the roof 9 of the cabin 1. In contrast, in the regions of the curvature R4, the curvature of the side beam elongated member 34S is set to a value close to the curvature of the front pillar 13 so that the side beam 18 and the front pillar 13 may be smoothly connected without giving an impression of being bent. With this configuration, the front pillar 13 and the side beam 18 are smoothly connected and a bent appearance is not given. Thus, it is possible to obtain the cabin 1 having an appearance excellent in design properties.

Further, in the side beam elongated member 34S of the present example embodiment, the curvature R2 and the curvature R3 are set smaller than the curvature R1 and larger than the curvature R4. When regions having the curvature R2 and the curvature R3 that are intermediate values (values smaller than R1 and larger than R4) are provided between the region of the curvature R1 and the region of the curvature R4, the region of the curvature R1 and the region of the curvature R4 are smoothly connected without giving an impression of being bent, and it is possible to obtain an appearance excellent in design properties for the cabin 1 similarly to the above-described case.

When the left side beam 18L is fabricated from the side beam elongated member 34S, the first end piece 36 is cut and removed from the front end of the side beam elongated member 34S, and the second end piece 38 is cut and removed from the rear end. Then, the left first fixing plate 42L and a left first welding auxiliary portion 50L are attached to the side surface of the side beam elongated member 34S on the inner side in the width direction by means such as welding. As a result, the left side beam 18L can be fabricated.

On the other hand, when the right side beam 18R is fabricated from the side beam elongated member 34S, the side beam elongated member 34S is horizontally turned by 180 degrees with the upward-curved orientation maintained, and front and rear are interchanged. For the side beam elongated member 34S turned in this manner, similarly to the case of fabricating the left side beam 18L, the first end piece 36 is cut and removed from the front end of the side beam elongated member 34S, and the second end piece 38 is cut and removed from the rear end of the side beam elongated member 34S. Then, a right first fixing plate 42R and a second welding auxiliary portion 51 are attached to the side surface of the side beam elongated member 34S on the inner side in the width direction by means such as welding. As a result, the right side beam 18R can be fabricated.

In the present example embodiment, the example in which both ends of the side beam elongated member 34S in the longitudinal direction are cut off has been described. However, cutting-off may be performed for only one end portion in the longitudinal direction.

That is, the left side beam 18L and the right side beam 18R of the present example embodiment are each provided using the side beam elongated member 34S (the elongated member) in which portions other than the end portions in the longitudinal direction have an identical shape.

The side beam elongated member 34S described above can be fabricated into either the left side beam 18L or the right side beam 18R depending on whether or not to perform turning (inversion) in the longitudinal direction before cutting. In other words, the side beam elongated member 34S is a processing base material from which the left side beam 18L and the right side beam 18R can be selectively obtained depending on whether to perform inversion (a common processing base material for the left side beam 18L and the right side beam 18R). Thus, when molding or bending on the side beam elongated member 34S is performed using a single mold, the labor for the molding or bending can be completed in one procedure. However, in a fabrication method in the related art, it has been necessary to fabricate the left side beam 18L and the right side beam 18R using different molds or to perform bending separately, and the labor for the molding or bending has required a large amount of time and costs. Therefore, in the cabin 1 of the present example embodiment, an increase in manufacturing costs can be reduced by using the side beam elongated member 34S as a processing base material common to left and right frame members, that is, the left side beam 18L and the right side beam 18R.

Next, configurations of the left rear pillar 14L and the right rear pillar 14R are described in detail.

As depicted in FIG. 5, the cabin 1 of the present example embodiment includes the rear panel 32 located rearward of the operator's seat 6, the door panel of the left door 27L and the door panel of the right door 27R located leftward and rightward, respectively, of the operator's seat 6, the left rear pillar 14L provided between the door panel of the left door 27L and the rear panel 32, and the right rear pillar 14R provided between the door panel of the right door 27R and the rear panel 32. Hereinafter, the door panel of the left door 27L and the door panel of the right door 27R are collectively referred to as the door panels 27.

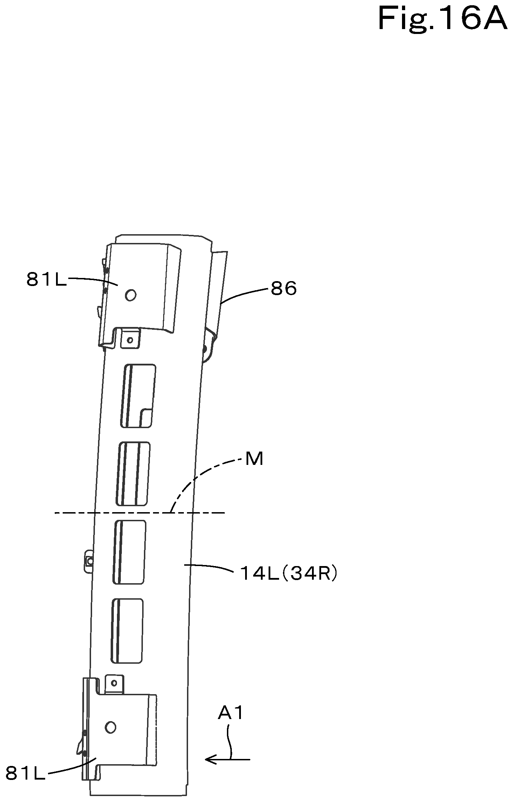

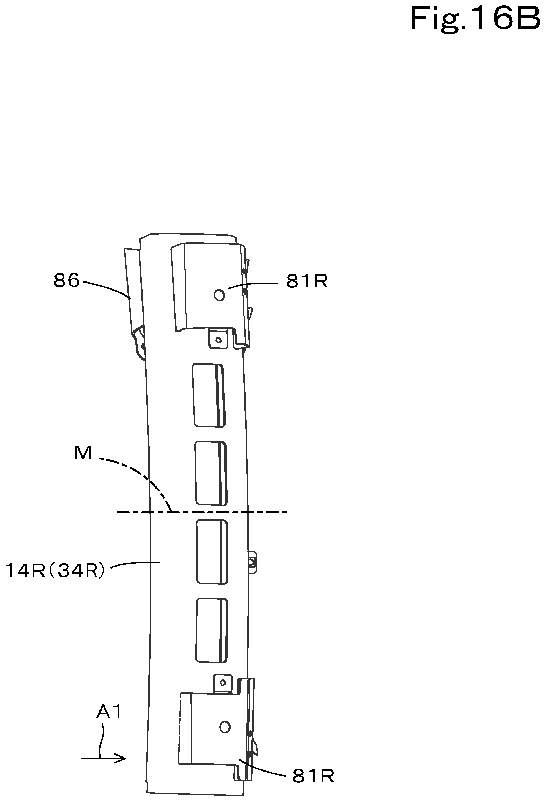

FIG. 16A depicts a left side view of the left rear pillar 14L. FIG. 16B depicts a right side view of the right rear pillar 14R. As can be understood from a comparison between FIGS. 16A and 16B, the left rear pillar 14L and the right rear pillar 14R are left-right symmetric with respect to the reference plane S (see FIG. 5) that passes through the center of the cabin 1 in the width direction and is orthogonal to the width direction.

As depicted in FIGS. 16A and 16B, the left rear pillar 14L and the right rear pillar 14R have a tubular shape elongated in the up-down direction. The left rear pillar 14L and the right rear pillar 14R have an arcuate shape such that a central portion in the up-down direction protrudes toward the exterior side (in a direction rearward and outward in the width direction) relative to the upper end and the lower end.

Speaker stays 86 are provided on the inner peripheral surfaces of the upper portions of the left rear pillar 14L and the right rear pillar 14R. Speakers for providing audio notifications or broadcasting to the operator's seat 6 can be attached to the speaker stays 86.

Hinge fixing stays 81L are located at the upper end and the lower end, respectively, of the left rear pillar 14L facing the exterior. Hinge fixing stays 81R are located at the upper end and the lower end, respectively, of the right rear pillar 14R.

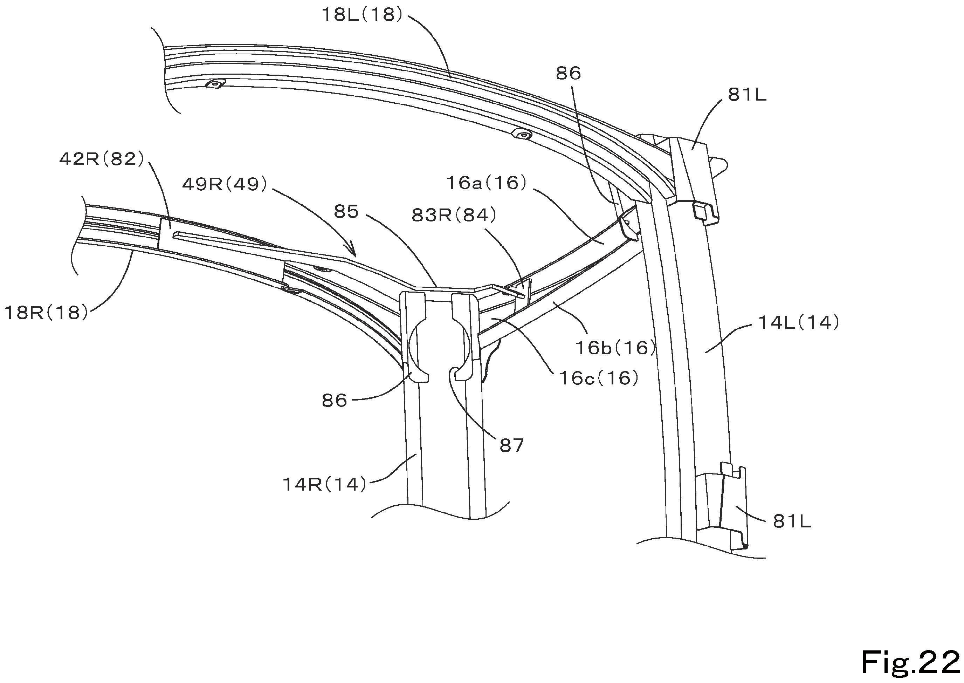

As depicted in FIGS. 1, 3, and 22, the first door hinge 29L of the left door 27L is located below the hinge fixing stay 81L provided at the upper end of the left rear pillar 14L, and the second door hinge 30L of the left door 27L is located above the hinge fixing stay 81L provided at the lower end of the left rear pillar 14L. Further, the first door hinge 29R of the right door 27R is located below the hinge fixing stay 81R provided at the upper end of the right rear pillar 14R, and the second door hinge 30R of the right door 27R is located above the hinge fixing stay 81R provided at the lower end of the right rear pillar 14R. The first door hinge 29L and the second door hinge 30L of the left door 27L are joined to the hinge fixing stays 81L of the left rear pillar 14L by means such as welding. Further, the first door hinge 29R and the second door hinge 30R of the right door 27R are joined to the hinge fixing stays 81R of the right rear pillar 14R by means such as welding.

The left rear pillar 14L and the right rear pillar 14R are each provided using the rear pillar elongated member 34R having an identical shape curved to bulge rearward and outward. That is, a base material common to the left rear pillar 14L and the right rear pillar 14R is the rear pillar elongated member 34R. The rear pillar elongated member 34R is curved with the same curvature over the entire region from the upper end to the lower end, and the curvatures of an upper half and a lower half are symmetric, in the up-down direction, with respect to an intermediate point in the up-down direction. That is, the rear pillar elongated member 34R has an identical shape as the front pillar elongated member 34F. Thus, description of a detailed configuration of the rear pillar elongated member 34R is omitted.

The rear pillar elongated member 34R is curved to bulge rearward and outward over the entire region from the upper end to the lower end, and the curvatures of the upper half and the lower half are symmetric with respect to the intermediate point in the up-down direction. Specifically, the rear pillar elongated member 34R of the present example embodiment has the same curvature over the entire region from the upper end to the lower end, and the curvatures of the upper half and the lower half are symmetric with respect to the inversion reference line M that horizontally passes through the middle between the upper end and the lower end (the middle in the up-down direction).

Thus, a procedure for fabricating the left rear pillar 14L and the right rear pillar 14R from the rear pillar elongated member 34R is the same as the procedure for fabricating the left front pillar 13L and the right front pillar 13R from the front pillar elongated member 34F and the procedure for fabricating the left side beam 18L and the right side beam 18R from the side beam elongated member 34S. That is, whether or not to perform up-down inversion is selected before cutting end portions of the rear pillar elongated member 34R in the longitudinal direction. Thereafter, when the end portions in the longitudinal direction are cut, the left rear pillar 14L can be fabricated from the rear pillar elongated member 34R without up-down inversion, and the right rear pillar 14R can be fabricated from the rear pillar elongated member 34R resulting from up-down inversion. The procedure for fabricating the left rear pillar 14L and the right rear pillar 14R from the rear pillar elongated member 34R is substantially the same as that with the front pillar elongated member 34F, and thus detailed description thereof is omitted.

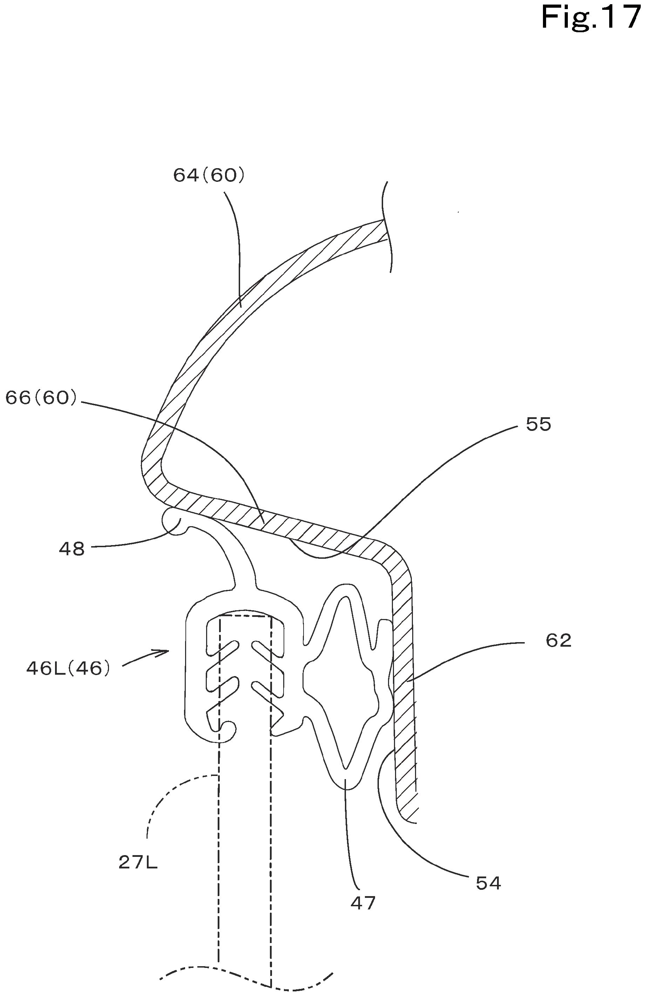

When the above-described elongated member is used as a frame member that comes into contact with a panel end portion of any one of the front panel 31, the rear panel 32, and the door panels 27, it is preferable that the elongated member be provided with a weather strip (at least one door seal 46) (see FIG. 17) for waterproofing and dustproofing purposes. In particular, it is preferable that at least one door seal 46 be provided on frame members that come into contact with panel end portions of the door panels 27, which are opened and closed when the operator OP gets in and out of the cabin. Examples of the frame members on which provision of at least one door seal 46 is desirable include the left front pillar 13L, the right front pillar 13R, the left side beam 18L, and the right side beam 18R. At least one door seal 46 of the present example embodiment is described below using, as a representative example, ones provided at panel end portions (the front ends) of the door panels 27.

The door seals 46 provided on the elongated members of the present example embodiment each seal the panel end portion of the left door 27L or the right door 27R. The door seals 46 of the present example embodiment are described below using, as a representative example, a left door seal 46L that seals the panel end portion of the left door 27L.

As depicted in FIG. 17, the left door seal 46L is of a double seal type that seals each of two surfaces, that is, the inner surface and the end surface, of the panel end portion of the left door 27L, and exhibits high sealing performance by sealing a plurality of surfaces.

Specifically, the left door seal 46L includes a main lip 47 that seals a main sealed surface 54 of the elongated member and a sub-lip 48 that seals a sub-sealed surface 55 of the elongated member. In the case of the present example embodiment, the main sealed surface 54 is a portion opposed to the inner surface of the front end of the left door 27L. Further, the sub-sealed surface 55 is a portion opposed to the end surface of the front end of the left door 27L described above.

When the door seal 46 of the double lip type described above is provided, in a case where water (rain), wind, dust, or sound attempts to enter the cabin 1, it needs to pass through both a contact portion between the main lip 47 and the main sealed surface 54 and a contact portion between the sub-lip 48 and the sub-sealed surface 55, and water (rain), wind, dust, and sound are less likely to reach the inside of the cabin 1 compared with a single-lip seal member. Accordingly, the door seal 46 of the double lip type described above more reliably prevents water (rain), wind, dust, and sound from entering the cabin 1. Further, with the door seal 46 of the double lip type described above, a space (passage) to which water (rain), dust, and the like that have passed through the sub-lip 48 and entered are guided can be defined between the main lip 47 and the sub-lip 48. This space (passage) is located along the outer periphery of each of the left door 27L and the right door 27R, and can guide water (rain), dust, and the like downward. Therefore, water (rain), wind, dust, and the like are further inhibited from passing through the main lip 47 and entering the cabin 1.

In the case of the cabin 1 of the present example embodiment, the left door 27L and the right door 27R are configured such that the front ends thereof rotate in the horizontal direction about the rear ends. Thus, the door seals 46 of the double lip type are not provided between the inner surfaces of the rear ends of the left door 27L and the right door 27R and the rear pillars 14. However, the door seals 46 of the double lip type may be provided between the inner surfaces of the rear ends of the left door 27L and the right door 27R and the rear pillars 14 instead of seal members of the single lip type.

Further, in the above-described example, the left side surface of the left front pillar 13L and the right side surface of the right front pillar 13R are provided in a stepped shape, and the door seals 46 of the double lip type are provided by utilizing the step. Specifically, in the case of the step provided on the left side surface of the left front pillar 13L, a step recessed inward in the width direction (a step defined by a third upright wall portion 66 and a second connecting wall 62 described later) is provided at the rear end of the left side surface. When such a step is provided, a surface facing outward in the width direction and a surface facing rearward are defined on the left side surface of the left front pillar 13L. The surface facing outward in the width direction can be defined as the main sealed surface 54 against which the main lip 47 of the door seal 46 abuts. The surface facing rearward can be defined as the sub-sealed surface 55 against which the sub-lip 48 of the door seal 46 abuts. In other words, when a step is provided inward in the width direction at the rear end of the left side surface of the left front pillar 13L, the main sealed surface 54 and the sub-sealed surface 55 corresponding to the double lip of the weather strip can be easily defined, and high sealing performance for the left door 27L can be obtained.

A step may be provided in a member other than the left front pillar 13L and the right front pillar 13R, and the door seal 46 of the double lip type may be provided. For example, a step may be provided on a side surface of the side beam 18, and the door seal 46 of the double lip type may be provided. That is, as depicted in FIG. 14, a step recessed inward in the width direction is provided at the lower end of the left side surface of the left side beam 18L. When such a step is provided, a surface facing outward in the width direction and a surface facing downward are defined on the left side surface of the left side beam 18L. The surface facing outward in the width direction can be defined as the main sealed surface 54 against which the main lip 47 of the door seal 46 abuts. The surface facing downward can be defined as the sub-sealed surface 55 against which the sub-lip 48 of the door seal 46 abuts. Accordingly, when a step is provided inward in the width direction at the lower end of the left side surface of the left side beam 18L, the main sealed surface 54 and the sub-sealed surface 55 corresponding to the double lip of the weather strip can be easily defined, and high sealing performance for the left door 27L can be obtained.

Further, in the present example embodiment, the example in which the door seals 46 are provided at the front end and/or the upper end of the left door 27L and the right door 27R has been described. However, as for a panel that is movable in opening and closing or the like, the door seal 46 may be appropriately provided for a panel other than the door panel 27. For example, when the rear panel 32 is attached openably and closably, a step may be provided at the front end of the rear panel 32, and the door seal 46 of the double lip type may be provided by utilizing the provided step.

Next, the irregularly-shaped cross section of the front pillars 13 used as frame members of the cabin 1 of the present example embodiment is described.

As described above, the term "irregularly-shaped cross section" in the present specification refers to such a shape that the shape before inversion or rotation does not become identical to the shape after inversion or rotation even when the shape is inverted with respect to any straight line or rotated about any point, that is, a shape having no line symmetry or rotational symmetry.

Further, in the present specification, a frame member having the "irregularly-shaped cross section" is referred to as an "irregularly-shaped pipe". The irregularly-shaped pipe of the present invention is an elongated member used for a frame member included in the cabin 1 and the like of a working machine (the tractor 2 or the like). Although the irregularly-shaped pipe of the depicted example is used for the front pillars 13 of the cabin 1, the application of the irregularly-shaped pipe of the present invention is not limited to the front pillars 13 and is also not limited to the cabin 1. For example, the irregularly-shaped pipe of the present invention can also be applied to members other than the cabin 1 in a working machine or members of equipment such as construction machines used in an industrial field different from that of the tractor 2.

The irregularly-shaped cross section of the front pillar 13 is described below.

When the irregularly-shaped cross section of the left front pillar 13L depicted in FIG. 9A is left-right inverted with respect to the vertical reference plane S that passes through the center of the cabin 1 in the width direction and is orthogonal to the width direction (the vertical reference plane S that passes through the center of the cabin 1 in the width direction and is orthogonal to the width direction, see FIGS. 4 to 6), the inverted cross section is congruent with the irregularly-shaped cross section of the right front pillar 13R depicted in FIG. 9B. Further, the irregularly-shaped cross section of the right front pillar 13R depicted in FIG. 9B is also congruent with the irregularly-shaped cross section of the left front pillar 13L depicted in FIG. 9A when it is left-right inverted with respect to a symmetry reference plane MS. That is, the left front pillar 13L and the right front pillar 13R are in a left-right line-symmetric relationship.

In the following, in consideration of the fact that the shapes and structures are congruent in principle except for being line-symmetric with respect to the symmetry reference plane MS, the irregularly-shaped cross section of the present invention is described in detail using the left front pillar 13L as a representative.

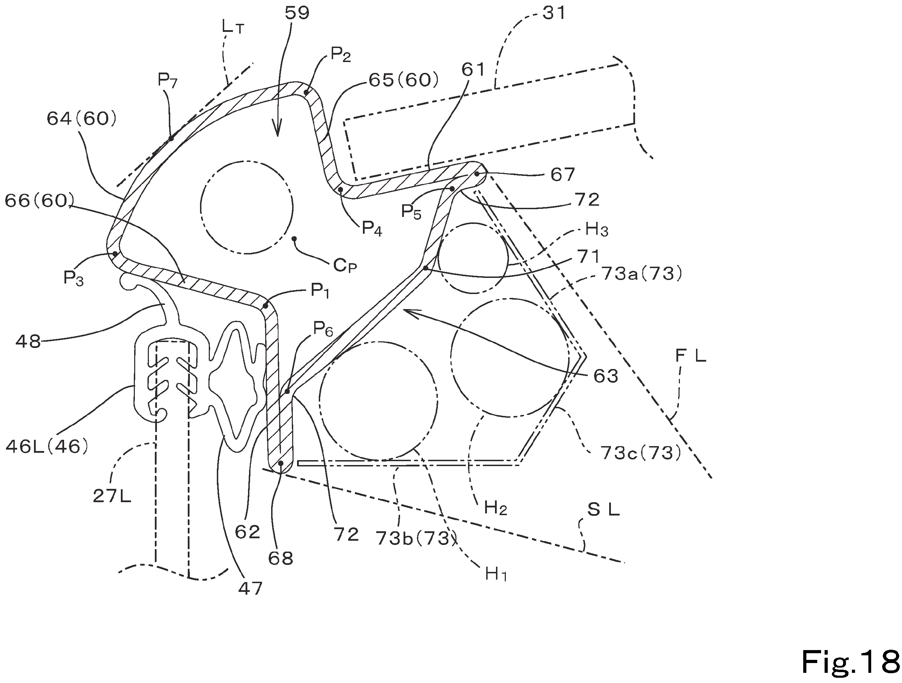

As depicted in FIG. 18, the irregularly-shaped cross section of the left front pillar 13L is in a state in which the periphery of a cavity 59 at the center is surrounded by a plurality of wall portions without discontinuity and the cavity 59 at the center is sealed by the plurality of wall portions. The plurality of wall portions surrounding the periphery of the cavity 59 in the left front pillar 13L include four portions, that is, a first wall portion 60, a second wall portion 63, a first connecting wall 61, and the second connecting wall 62.

The first wall portion 60 defines part of the outer periphery of the irregularly-shaped pipe. Specifically, in the case of the left front pillar 13L, the first wall portion 60 is a wall portion that is located on the left front side as viewed from a center Cp of the cavity 59 (the center of the cavity 59 of the present example embodiment means the geometric center or the centroid of the irregularly-shaped cross section in terms of mathematics; the same applies hereinafter) and corresponds to a wide range from the right front side of the center Cp to the left rear side thereof. The first wall portion 60 of the left front pillar 13L has a fan shape that bulges toward the left outer side.

The second wall portion 63 defines part of the outer periphery of the irregularly-shaped pipe (part different from the first wall portion 60). The second wall portion 63 is located opposite to the first wall portion 60 with the cavity 59 interposed therebetween. In the case of the left front pillar 13L, the second wall portion 63 is a wall portion that bulges to protrude rearward and inward as viewed from the center Cp of the cavity 59.

The first connecting wall 61 connects one end of the first wall portion 60 in the width direction and one end of the second wall portion 63 in the width direction. In the case of the left front pillar 13L, the first connecting wall 61 connects the right end of the first wall portion 60 and the right end of the second wall portion 63. The first connecting wall 61 protrudes outward of the pipe. In the case of the left front pillar 13L, the first connecting wall 61 protrudes rightward as viewed from the center Cp of the cavity 59. The first connecting wall 61 is provided such that portions of the inner periphery thereof are in close contact with each other. In the example depicted in FIG. 18, in the first connecting wall 61, a single pipe wall is bent, and the inner peripheral surfaces of one and the other of folded portions are brought into close contact with each other. However, two pipe walls may be overlapped, and the inner peripheral surfaces of the respective pipe walls may be joined to each other by welding or the like to be brought into close contact with each other.

The second connecting wall 62 connects the other end of the first wall portion 60 in the width direction and the other end of the second wall portion 63 in the width direction. In the case of the left front pillar 13L, the second connecting wall 62 connects the left end of the first wall portion 60 and the left end of the second wall portion 63. The second connecting wall 62 protrudes outward of the pipe. In the case of the left front pillar 13L, the second connecting wall 62 protrudes rearward as viewed from the center Cp of the cavity 59. The second connecting wall 62 is provided such that portions of the inner periphery thereof are in close contact with each other similarly to the first connecting wall 61. That is, also in the second connecting wall 62, similarly to the first connecting wall 61, a single pipe wall is bent, and the inner peripheral surfaces of one and the other of folded portions are brought into close contact with each other. However, two pipe walls may be overlapped, and the inner peripheral surfaces of the respective pipe walls may be joined to each other by welding or the like to be brought into close contact with each other.

Next, each wall portion that defines the irregularly-shaped cross section of the left front pillar 13L is described in detail.

As depicted in FIG. 18, when the center Cp of the cavity 59 is taken as a reference, the first wall portion 60 is a portion that bulges in a fan shape outward as viewed from the center Cp of the cavity 59. The term "fan shape" means a figure defined by two line segments extending substantially radially from the center Cp of the cavity 59 and an arcuate line segment connecting the two line segments.

Specifically, the first wall portion 60 includes a combination of three upright wall portions. The three upright wall portions include a first upright wall portion 64, a second upright wall portion 65, and the third upright wall portion 66.

The first upright wall portion 64 is a portion extending from P₃ toward P₂ spaced forward from the center Cp along an arcuate trajectory centered on Cp. In the case of the left front pillar 13L depicted in FIG. 18, the position P₂ is located on the right front side of the center Cp, and indicates the front end (right end) of the first upright wall portion 64. The position P₃ is located leftward of the center Cp, and indicates the rear end (left end) of the first upright wall portion 64. That is, the first upright wall portion 64 covers a range from the right front side of the center Cp to the left side thereof. The second upright wall portion 65 is coupled to the front end (one end) of the first upright wall portion 64. The third upright wall portion 66 is coupled to the rear end (the other end) of the first upright wall portion 64.

As depicted in FIG. 18, the second upright wall portion 65 is bent inward of the pipe from the one end of the first upright wall portion 64 in the width direction. Specifically, the second upright wall portion 65 is oriented to bend at substantially a right angle with respect to the first upright wall portion 64 at P₂ in FIG. 18, and linearly extends inward of the cavity 59 from the front end of the first upright wall portion 64 located at P₂. That is, the position P₂ in FIG. 18 is the front end of the second upright wall portion 65, and a position P₄ is the rear end of the second upright wall portion 65. The second upright wall portion 65 is coupled to the first connecting wall 61 at the rear end (position P₄).

As depicted in FIG. 18, the third upright wall portion 66 is bent inward of the pipe from the other end of the first upright wall portion 64 in the width direction. Specifically, the third upright wall portion 66 is oriented to bend at substantially a right angle with respect to the first upright wall portion 64 at the position P₃ in FIG. 18, and linearly extends inward of the cavity 59 from the rear end of the first upright wall portion 64 located at P₃. That is, the position P₃ in FIG. 18 is the front end of the third upright wall portion 66, and a position P₁ is the rear end of the third upright wall portion 66. The third upright wall portion 66 is coupled to the second connecting wall 62 at the rear end (position P₁).

The first connecting wall 61 connects the one end of the first wall portion 60 in the width direction (the position P₄) and the one end of the second wall portion 63 in the width direction (the position P₅). In the case of the left front pillar 13L, the first connecting wall 61 extends from the one end of the first wall portion 60 in the width direction, indicated by P₄ in FIG. 18, in a direction rightward and slightly forward, and is folded back at a first fold-back portion 67 in a direction leftward and slightly rearward, and then extends to the one end of the second wall portion 63 in the width direction, indicated by P₅. That is, the first connecting wall 61 is folded back such that the first fold-back portion 67 protrudes rightward. Further, in the first connecting wall 61, with the first fold-back portion 67 as a boundary, the inner surface of a portion from the first fold-back portion 67 to the position P₄ and the inner surface of a portion from the first fold-back portion 67 to the position P₅ are in close contact with each other.

In the case of FIG. 18, the first connecting wall 61 does not extend along the rightward direction but extends in an inclined direction rightward and slightly forward. With such a configuration in which the first connecting wall 61 extends in a direction slightly inclined forward, it is easy to bring the front surface of the first connecting wall 61 into surface contact with, in parallel, the left end of the front panel 31 curved forward in an arcuate shape, and it is possible to firmly support the left end of the front panel 31 by the first connecting wall 61.

The second connecting wall 62 connects the other end of the first wall portion 60 in the width direction (the position P₁) and the other end of the second wall portion 63 in the width direction (a position P₆). In the case of the left front pillar 13L, the second connecting wall 62 extends rearward from the other end of the first wall portion 60 in the width direction, indicated by P₁ in FIG. 18, and is folded back forward at a second fold-back portion 68, and then extends to the other end of the second wall portion 63 in the width direction, indicated by P₆. That is, the second connecting wall 62 is folded back such that the second fold-back portion 68 protrudes rearward. Further, in the second connecting wall 62, with the second fold-back portion 68 as a boundary, the inner surface of a portion from the second fold-back portion 68 to the position P₁ and the inner surface of a portion from the second fold-back portion 68 to the position P₆ are in close contact with each other.

In the case of FIG. 18, the second connecting wall 62 extends rearward from the right end of the third upright wall portion 66, and is located in parallel with the inner surface of the left door 27L. Thus, the second connecting wall 62 is configured to be easily brought into surface contact with the left door 27L. When the extension direction of the second connecting wall 62 is aligned with the orientation direction of the inner surface of the left door 27L in this manner, the second connecting wall 62 and the left door 27L can be sealed in an airtight and watertight manner using the door seal 46 described later.

The first wall portion 60 and the second connecting wall 62 described above protrude in directions orthogonal to each other. In the case of the left front pillar 13L, the first wall portion 60 supports the left end of the front panel 31, and the second connecting wall 62 supports the front end of the left door 27L. The front panel 31 and the left door 27L are arranged in orthogonal directions. Thus, the first wall portion 60 and the second connecting wall 62 that support end portions of them are also oriented in directions orthogonal to each other.

The second wall portion 63 is located opposite to the first upright wall portion 64 of the first wall portion 60 with the cavity 59 interposed therebetween. The second wall portion 63 connects the rear end of the first connecting wall 61 indicated by P₅ in FIG. 18 and the right end of the second connecting wall 62 indicated by P₆. The second wall portion 63 in the depicted example connects the rear end of the first connecting wall 61 and the right end of the second connecting wall 62 in a bent-line shape that protrudes outward.

An outwardly bent portion 70 is provided between the rear end of the first connecting wall 61 and the right end of the second connecting wall 62. The outwardly bent portion 70 is located outward of P₅ and P₆ as viewed from the center Cp of the cavity. In other words, in the second wall portion 63 of a second example embodiment, the outwardly bent portion 70 is in such a state as to protrude outward of the cavity 59 as viewed from the center Cp of the cavity 59.

The second wall portion 63 between the outwardly bent portion 70 and P₅ has a linear shape, and the second wall portion 63 between the outwardly bent portion 70 and P₆ also has a linear shape. Further, with the outwardly bent portion 70 as a reference, one portion and the other portion of the second wall portion 63 have different inclinations.

In the present example embodiment, a description has been given of the example in which the first connecting wall 61 and the second connecting wall 62 are provided by bending a single plate member in a folded manner and coupling folded portions. However, objects obtained by joining two plate members provided separately such that the inner surfaces thereof are in close contact with each other may be used for the first connecting wall 61 and the second connecting wall 62.

In the second wall portion 63 of the second example embodiment, the outwardly bent portion 70 is defined as a peak portion 71 that protrudes outward of the cavity 59 as viewed from the center Cp of the cavity 59 relative to the rear end of the first connecting wall 61 (P₅) and the right end of the second connecting wall 62 (P₆). In other words, the outwardly bent portion 70 is defined as "the peak portion 71 that protrudes most outward of the pipe". Further, the rear end of the first connecting wall 61 (P₅) and the right end of the second connecting wall 62 (P₆) are defined as valley portions 72 recessed inward of the cavity 59 as viewed from the center Cp of the cavity 59 relative to the outwardly bent portion 70. In other words, P₅ is "a point of contact between the first connecting wall 61 and the second wall portion 63", and P₆ is "a point of contact between the second connecting wall 62 and the second wall portion 63", and "the valley portions 72 recessed inward of the pipe relative to the peak portion 71" are defined at P₅ and P₆.

When such a peak portion 71 and valley portions 72 are provided in the second wall portion 63, in arranging a plurality of pipes such as an electrical wiring line, a drain hose, and a refrigerant pipe outward of the left front pillar 13L, the pipes are arranged in a naturally separated state with the peak portion 71 as a boundary (see pipes H₁ and H₃), and it is possible to avoid troubles such as entanglement of the pipes in advance.

The second wall portion 63 includes, between the valley portion 72 and the peak portion 71, a flat surface extending in a direction parallel to a tangent passing through one point on the outer surface of the first wall portion 60. Specifically, this "flat surface" is a linear portion of the second wall portion 63 located between the peak portion 71 and the position P₆, and a position P₇ having a tangent L_{T} oriented in parallel with the second wall portion 63 is present on the first wall portion 60. That is, the second wall portion 63 includes a flat surface parallel to the tangent L_{T} to the arcuate surface of the first upright wall portion 64.

When the flat surface is provided in the direction parallel to the tangent L_{T} passing through one point P₇ on the outer surface of the first wall portion 60 described above, it is easy to insert a bolt or the like in a direction orthogonal to the flat surface (tangent L₁), and it is possible to firmly attach a cover 73 or the like to the left front pillar 13L or the right front pillar 13R, and to increase the bending strength (load-bearing capacity) of the front pillar 13.

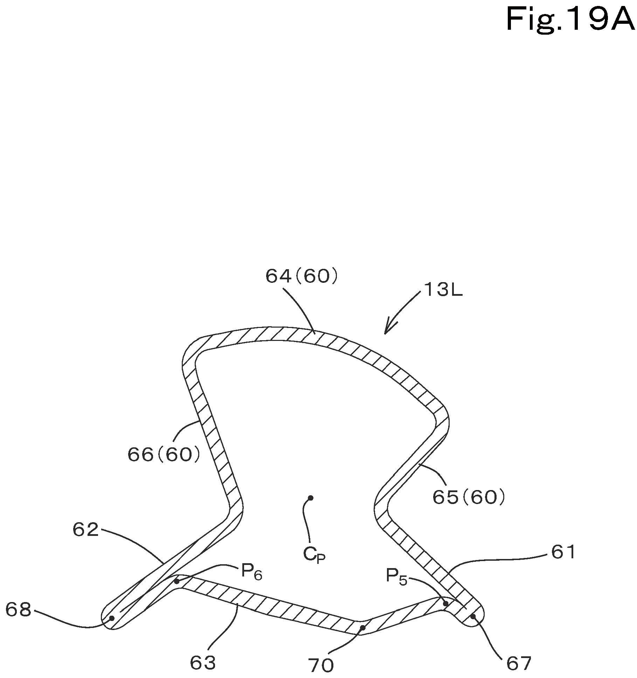

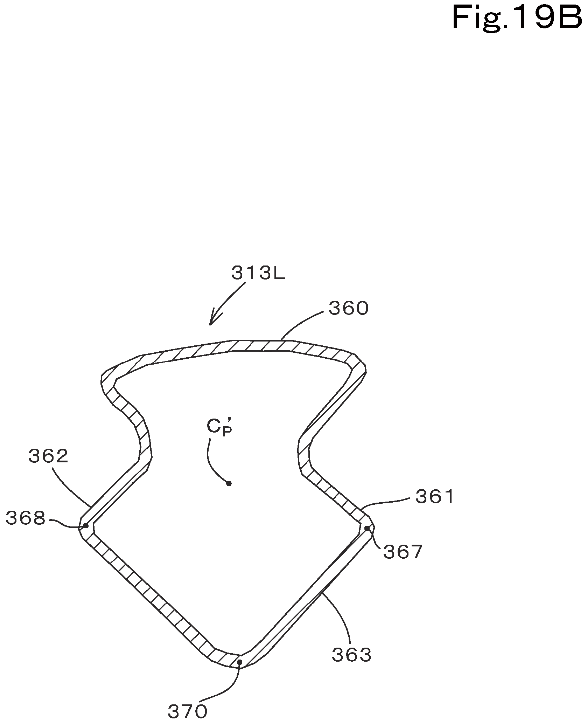

FIG. 19A depicts the irregularly-shaped cross section of the present example embodiment. A cross section depicted in FIG. 19B is not the irregularly-shaped cross section of the present example embodiment but a cross section of a related-art example. That is, in the cross section depicted in FIG. 19A, portions of the inner periphery of a first connecting portion 361 are not in close contact with each other, and portions of the inner periphery of a second connecting portion 362 are also not in close contact with each other.

In the cross section of the irregularly-shaped pipe of the related art (a left front pillar 313L of the related art) depicted in FIG. 19B, it can be seen that a second wall portion 363 includes an outwardly bent portion 370 protruding outward of the pipe as viewed from a center Cp' of a cavity. However, in the cross section of the related art, the second wall portion 363 greatly protrudes outward. Thus, the protruding second wall portion 363 interferes, and it is impossible to sufficiently secure a space for arranging pipes (see FIG. 18). Thus, in the cross section of the related art, it is sometimes impossible to arrange pipes such as an electrical wiring line, a drain hose, and a refrigerant pipe on the rear side.

Further, with the cross section of the related art, if the pipes H₁ to H₃ are forcibly arranged rearward of the protruding second wall portion 163, a cover (not depicted) for concealing the pipes H₁ to H₃ is also required to greatly protrude rearward. In this case, dimensions of a left front pillar 113L along the front-rear direction and the left-right direction (width direction) increase by an amount corresponding to the presence of the cover protruding rearward (inward). That is, in the cabin of the related art in which the left front pillar 113L is widened in the front-rear direction, the opening width of the entrance/exit of the cabin is reduced by an amount corresponding to the widening of the left front pillar 113L in the front-rear direction, and the ease of getting in and out of the cabin deteriorates. Further, in the cabin of the related art in which the left front pillar 113L is widened in the left-right direction, the field of view of the front panel is narrowed in the left-right direction by an amount corresponding to the widening of the left front pillar 113L in the left-right direction, and forward visibility from the cabin also tends to deteriorate.

In contrast, in the irregularly-shaped cross section of the present example embodiment depicted in FIG. 19A, the outward (rearward) protrusion of the second wall portion 63 is reduced, and thus a space in which the pipes H₁ to H₃ can be arranged can be sufficiently secured outward of the second wall portion 63. Further, even when the pipes H₁ to H₃ are arranged and concealed by the cover 73, outward protrusion of the cover 73 can be reduced.

As depicted in FIG. 18, the cover 73 is a plate-shaped member that covers the second wall portion 63 from the outer side, and can secure a space in which the pipes H₁ to H₃ can be arranged between the cover 73 and the second wall portion 63 by being located outward of the outwardly bent portion 70 (peak portion 71). Specifically, the cover 73 includes a first cover wall 73a extending rearward from an end portion of the first connecting wall 61 that protrudes outward of the pipe, a second cover wall 73b extending inward in the width direction from an end portion of the second connecting wall 62 that protrudes outward of the pipe, and a third cover wall 73c connecting the first cover wall 73a and the second cover wall 73b. The first cover wall 73a is located outward in the width direction relative to a forward visibility boundary line FL connecting the center of the operator's seat 6 and the end portion of the first connecting wall 61 that protrudes outward of the pipe. Further, the second cover wall 73b is located forward of a lateral visibility boundary line SL connecting the center of the operator's seat 6 and the second fold-back portion 68. Thus, even when the cover 73 is provided, the first cover wall 73a of the cover 73 does not project to obstruct forward visibility. Further, the second cover wall 73b of the cover 73 does not project to obstruct the left entrance/exit 28L, and does not reduce the opening width of the left entrance/exit 28L of the cabin 1. That is, the cover 73 does not narrow the opening width of the entrance/exit of the cabin 1, and does not reduce the field of view of the front panel 31. Thus, the dimension of the left front pillar 13L along the front-rear direction and the width thereof along the left-right direction as viewed from the operator's seat 6 can be maintained in a large state, and the ease of getting in and out of the cabin 1 and the visibility are improved.

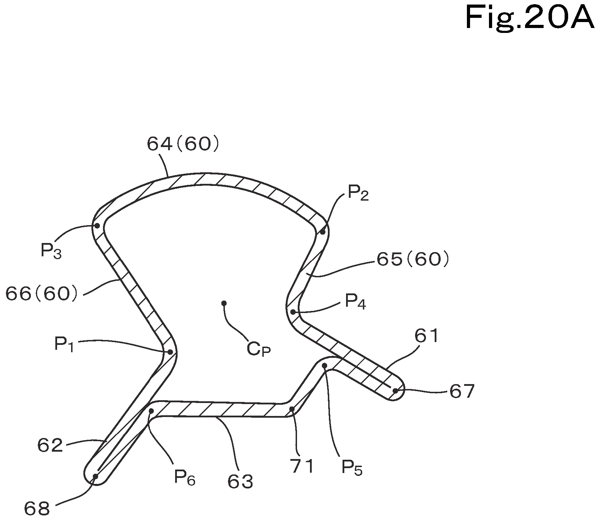

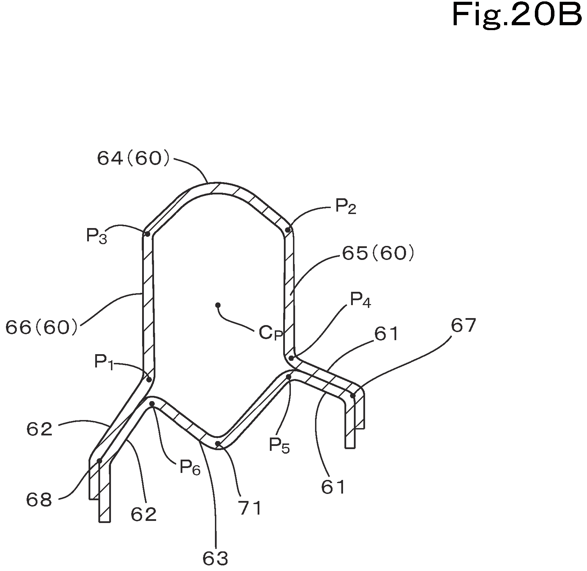

Examples of the irregularly-shaped cross section in which "the second wall portion 63 is recessed toward the cavity 59" also include examples depicted in FIGS. 20A and 20B in addition to those depicted in FIGS. 18 and 19A.

The irregularly-shaped cross section depicted in FIG. 20A shows an example in which the close-contact range of the inner periphery of the first connecting wall 61 is made wider than that of the irregularly-shaped cross section of the present example embodiment depicted in FIG. 19A. Compared with the irregularly-shaped cross section depicted in FIG. 18, the space that can be secured rearward of the second wall portion 63 becomes larger, but the bending strength of the front pillar 13 becomes slightly lower by an amount corresponding to a reduction in the cross-sectional area of the irregularly-shaped cross section.

Further, the irregularly-shaped cross section depicted in FIG. 20B is an example in which the first connecting wall 61 and the second connecting wall 62 are provided by overlapping two plate members provided separately (an example in which the inner peripheries of the two plate members are in close contact with each other). That is, the irregularly-shaped pipe depicted in FIGS. 20A and 20B includes the two plate members. Specifically, the irregularly-shaped pipe depicted in FIG. 20A is provided by joining, by welding or the like, one plate member including the first wall portion 60, part of the first connecting wall 61, and part of the second connecting wall 62 and one plate member including the second wall portion 63, the remaining part of the first connecting wall 61, and the remaining part of the second connecting wall 62. Also with the irregularly-shaped cross section depicted in FIG. 20B, it is possible to secure a space in which the pipes H₁ to H₃ can be arranged and improve the ease of getting in and out of the cabin 1 and the visibility while maintaining the bending strength of the front pillar 13.

The irregularly-shaped pipe having the above-described irregularly-shaped cross section can be used not only for the front pillar 13 but also for various kinds of frame members. A configuration regarding the irregularly-shaped pipe is the same as the configuration of the left front pillar 13L having the above-described irregularly-shaped cross section, and thus description thereof is omitted.

In the cabin 1 of the present example embodiment, in preparation for a case where a large load is applied to the front pillars 13, the load-bearing capacity of the front pillars 13 is increased by taking measures such as using, for the front pillars 13, frame members having the irregularly-shaped cross section as described above. However, in light of safety in cases such as overturning of the working machine, it is preferable not only to support a load applied to the cabin 1 by the front pillars 13 alone but also to reinforce the side beams 18 coupled to the front pillars 13 to improve the load-bearing capacity of the entire cabin 1. Thus, in the cabin 1 of the present example embodiment, at least one reinforcing member 49 is provided at an upper portion of the rear pillar 14.

Next, at least one reinforcing member 49 provided in the cabin 1 of the present example embodiment is described.

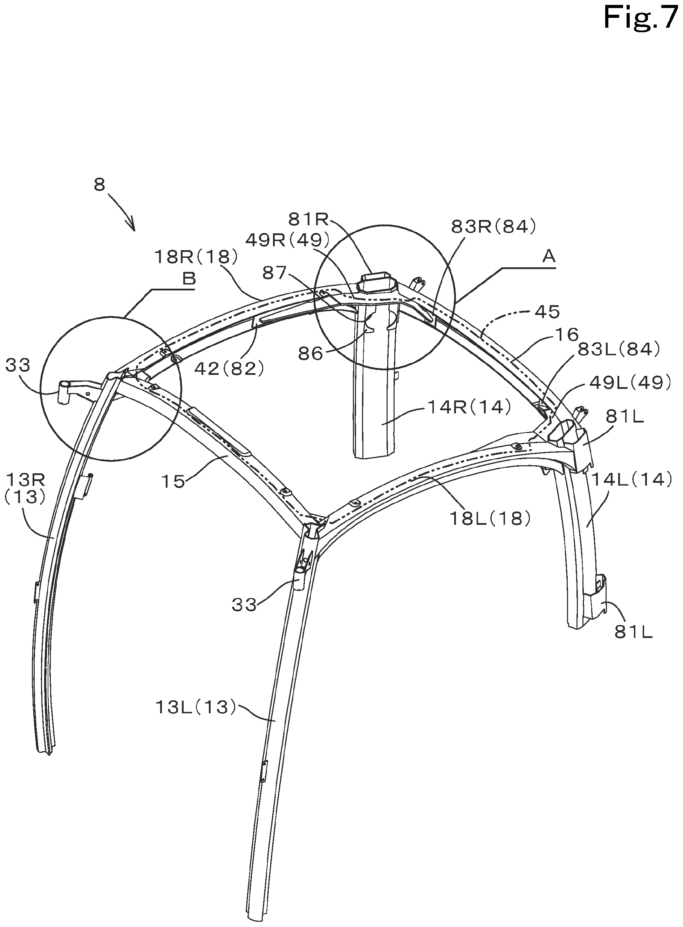

As depicted in FIGS. 7, 21, and 22, the reinforcing members 49 provided at the upper portions of the rear pillars 14 each pass on the interior side of the rear pillar 14 and couple the rear beam (rear beam 16) and the side beam 18 in a brace-like manner. The reinforcing members 49 are each a plate member bent in a substantially L-shape as viewed from above. By using means such as welding, the front end of each of the reinforcing members 49 is fixed to the side beam 18, the rear end (a tip extending inward in the width direction) thereof is fixed to the rear beam 16, and a central portion thereof in the front-rear direction is fixed to the upper portion of the rear pillar 14. That is, the reinforcing members 49 each couple the three members, that is, the rear beam 16, the upper portion of the rear pillar 14, and the side beam 18 to support the side beam 18 on the rear beam 16 and the upper portion of the rear pillar 14.

The reinforcing members 49 of the present example embodiment include the left reinforcing member 49L located at the upper portion of the left rear pillar 14L and a right reinforcing member 49R located at the upper portion of the right rear pillar 14R. The left reinforcing member 49L and the right reinforcing member 49R have left-right symmetric structures, and their basic structures are the same except for being left-right symmetric. Thus, the reinforcing members 49 of the present invention are described below using, as an example, the right reinforcing member 49R located at the upper portion of the right rear pillar 14R.

First, the rear beam 16 to which the right reinforcing member 49R is coupled is described in detail.

As depicted in FIGS. 2 and 6, the rear beam 16 is a frame member that couples the upper portion of the left rear pillar 14L and the upper portion of the right rear pillar 14R in the left-right direction. Unlike the front beam 15, the rear beam 16 is not curved upward and linearly extends in the left-right direction.

As depicted in FIG. 7, the rear beam 16 is a frame member having a substantially U-shaped cross section that opens forward (a shape obtained by removing only a front side of a quadrangle including upper, lower, front, and rear sides and leaving the upper side, the rear side, and the lower side, i.e., an angular U-shape). At a left portion of the rear beam 16, a left second fixing plate 83L that couples, in the up-down direction, portions defining the opening that opens forward is provided. Further, at a right portion of the rear beam 16, a right second fixing plate 83R that couples, in the up-down direction, portions defining the opening is provided. The distance from the left end of the rear beam 16 to the left second fixing plate 83L and the distance from the right end of the rear beam 16 to the right second fixing plate 83R are equal. Further, the upper and lower edges of the left second fixing plate 83L and the right second fixing plate 83R are joined to the portions defining the opening of the rear beam 16 by means such as welding.

As depicted in FIGS. 13A to 13C, first fixing plates 42 are each provided to fix the front end of the reinforcing member 49 by welding. Specifically, the first fixing plates 42 are plate members extending upright in the up-down direction, and are attached to extend in the front-rear direction. The first fixing plates 42 include the left first fixing plate 42L that fixes the left reinforcing member 49L and the right first fixing plate 42R that fixes the right reinforcing member 49R. The upper end of the left first fixing plate 42L is joined to the right end of the upper wall portion 39 of the left side beam 18L, and the lower end of the left first fixing plate 42L is joined to the right end of the lower wall portion 44 of the left side beam 18L. Although depiction is omitted, the upper end of the right first fixing plate 42R is joined to the left end of the upper wall portion 39 of the right side beam 18R, and the lower end of the right first fixing plate 42R is joined to the left end of the lower wall portion 44 of the right side beam 18R. The front end of the left reinforcing member 49L (a left first connected portion 82L described later) is joined to an intermediate portion of the left first fixing plate 42L in the up-down direction. Further, the front end of the right reinforcing member 49R (a right first connected portion 82R described later) is joined to an intermediate portion of the right first fixing plate 42R in the up-down direction. By joining the front ends of the left reinforcing member 49L and the right reinforcing member 49R to the intermediate portion of the right first fixing plate 42R in the up-down direction, spatter generated during welding is less likely to adhere to the upper surface of the upper wall portion 39, and sealing performance of the door seal 46 can be improved.

In the present example embodiment, welding is used as means for joining the front ends of the reinforcing members 49 to the first fixing plates 42. However, brazing, screwing, an adhesive, or the like may be used.

Next, the right reinforcing member 49R is described in detail.

The front end (a front portion) of the right reinforcing member 49R is connected to the vicinity of a central portion of the right side beam 18R in the front-rear direction, and in the present example embodiment, to the right first fixing plate 42R. That is, the front end of the right reinforcing member 49R is defined as the right first connected portion 82R that connects the right reinforcing member 49R to the right side beam 18R. Further, the right end (a right portion) of the right reinforcing member 49R is connected to a right portion of the rear beam 16, and in the present example embodiment, to the right second fixing plate 83R. That is, the right end (right portion) of the right reinforcing member 49R is defined as a right second connected portion 84R that connects the right reinforcing member 49R to the right portion of the rear beam 16.

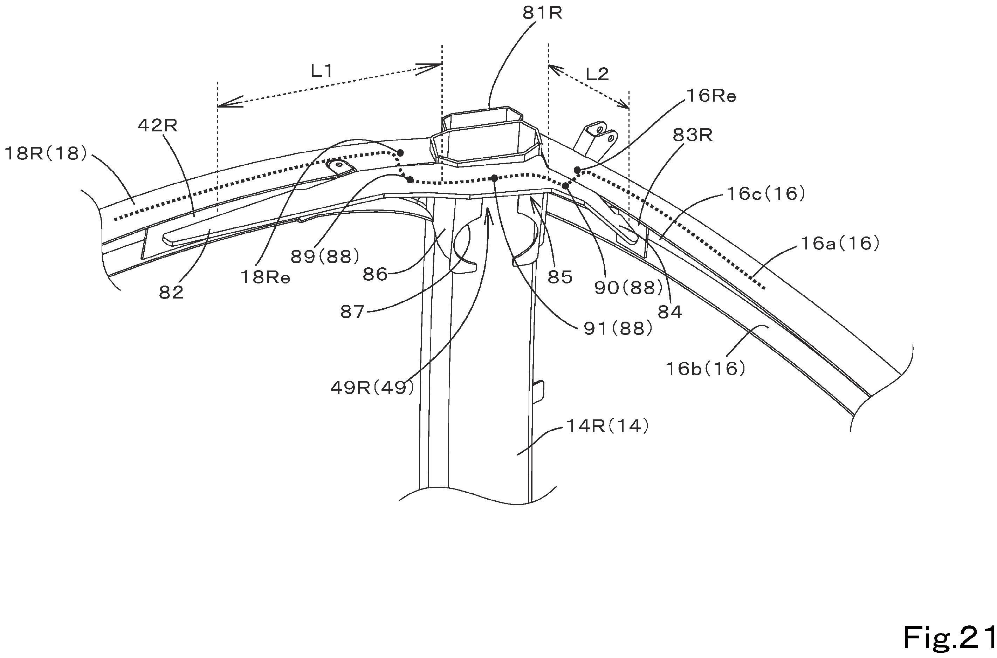

The right reinforcing member 49R includes a central base portion 85 between the right first connected portion 82R (front end) and the right second connected portion 84R (rear end). As depicted in detail in FIG. 21, an edge of the central base portion 85 that faces right rearward is joined to the outer peripheral surface of the right rear pillar 14R on the interior side. Specifically, the edge of the central base portion 85 that faces right rearward (the edge facing the exterior side) is in direct contact with the outer peripheral surface of the right rear pillar 14R on the interior side, and the contact portion is joined by welding. The joining of the central base portion 85 is not limited to the above-described direct joining. Specifically, the speaker stay 86 for attaching a speaker is provided at the upper portion of the right rear pillar 14R. The speaker stay 86 is a box-shaped member that protrudes toward the interior side, and includes, in a surface facing the interior side, a speaker attachment hole 87 into which a speaker is fitted. The central base portion 85 described above is located in a state in which it is mounted on the speaker stay 86 having a box shape, and the lower surface of the central base portion 85 and the upper end of the speaker stay 86 are joined by means such as welding. That is, the right reinforcing member 49R is also joined to the outer peripheral surface of the right rear pillar 14R on the interior side by an indirect joining means through the speaker stay 86. By using such two types of joining, the right reinforcing member 49R is firmly joined to the upper portion of the right rear pillar 14R.

The right first fixing plate 42R is provided in the vicinity of the central portion of the right side beam 18R in the front-rear direction. This "vicinity of the central portion" means that it includes not only the central portion of the right side beam 18R in the front-rear direction but also portions located slightly rearward or forward of the central portion. Specifically, with the central portion in the front-rear direction as a reference, positions resulting from rearward or forward shift by a length of approximately 20% of the entire length of the right side beam 18R along the front-rear direction are also included in the "vicinity of the central portion".

Further, the right first connected portion 82R described above is provided at the middle of the right first fixing plate 42R in the up-down direction, and the right second connected portion 84R is provided at the middle of the right second fixing plate 83R in the up-down direction. That is, the right first connected portion 82R is located lower than the upper surface of the right side beam 18R, and the right second fixing plate 83R is located lower than the upper surface of the right portion of the rear beam 16. When the right first connected portion 82R is provided at a distance downward from the upper surface of the right side beam 18R in this manner, spatter and the like generated when the right first connected portion 82R is joined to the right first fixing plate 42R by welding or the like is less likely to scatter onto the upper surface of the right side beam 18R, which is a sealed surface, corresponding to the distance provided in the up-down direction. Further, when the right second connected portion 84R is provided at a distance downward from the upper surface of the right portion of the rear beam 16, spatter and the like generated when the right second connected portion 84R is joined to the right second fixing plate 83R by welding or the like is less likely to scatter onto the upper surface of the rear beam 16, which is a sealed surface, corresponding to the distance provided in the up-down direction. As a result, sealing performance between the roof 9 and the cabin 1 can be improved.

The right reinforcing member 49R is longer in the front-rear direction than in the width direction (left-right direction). Specifically, in FIG. 21, when the distance between the right first connected portion 82R and the central base portion 85 is defined as L1 and the distance between the right second connected portion 84R and the central base portion 85 is defined as L2, a relationship of distance L1 > distance L2 is satisfied.

More precisely, the distance L1 means the length, along the front-rear direction, of a straight line connecting the center of the joined portion of the right first connected portion 82R to the right first fixing plate 42R and the front end of the central base portion 85. Further, the distance L2 means the length, along the left-right direction, of a straight line connecting the center of the joined portion of the right second connected portion 84R to the right second fixing plate 83R and the right end of the central base portion 85.

When the distance L1 is made longer than the distance L2, a more forward portion of the right side beam 18R can be supported by the right first connected portion 82R of the right reinforcing member 49R, and deformation resistance at a front portion of the cabin 1 (deformation resistance when the cabin 1 is deformed along the left-right direction) can be increased. That is, in the cabin 1 of the present example embodiment, not only the strength of the rear portion of the cabin frame 8 but also the strength of the front portion can be increased by providing the right reinforcing member 49R having a shape in which the distance L1 is longer than the distance L2. As a result, in the cabin 1 of the present example embodiment, even if overturning or the like occurs, deformation and breakage of the cabin 1 can be prevented or reduced, and safety can be further improved compared with the cabin of the related art.

Next, a roof seal 45 is described in detail.

The roof seal 45 is a member that provides sealing between the roof 9 and the respective upper surfaces of four frame members provided at the upper portion of the cabin 1, that is, the front beam 15, the left side beam 18L, the right side beam 18R, and the rear beam 16.

As depicted in FIG. 7, the roof seal 45 is continuously located on the upper surfaces of the front beam 15, the left side beam 18L, the right side beam 18R, and the rear beam 16 to make a loop around the operator's seat 6. The roof seal 45 is located to pass on the interior side of the rear pillar 14 when passing over the reinforcing member 49 provided at the upper portion of the rear pillar 14.

An enlarged view of the roof seal 45 passing over the reinforcing member 49 (a portion indicated by A in FIG. 7) is as depicted in FIG. 21.

As depicted in FIG. 21, a roof seal surface 88 on which the roof seal 45 is located is provided at the upper surface of the right reinforcing member 49R. The roof seal surface 88 includes a first seal surface 89, a second seal surface 90, and a third seal surface 91.

Black dots in the diagram mean that each black dot indicates a portion denoted by a reference numeral, including a surrounding area of the black dot. For example, the black dot given a reference numeral 89 means that an area including a surrounding area of the black dot is the first seal surface 89.

The first seal surface 89 is a portion of the upper surface of the right reinforcing member 49R that is adjacent on the inner side (on the interior side) to an upper surface 18Re of a rear portion of the right side beam 18R. The first seal surface 89 is provided at the same height as the upper surface 18Re of the rear portion of the right side beam 18R, and is substantially flush with the upper surface 18Re. Accordingly, the roof seal 45 laid rearward along the upper surface of the right side beam 18R can be guided (located) from the upper surface 18Re to the first seal surface 89 without changing height.

The second seal surface 90 is a portion of the upper surface of the right reinforcing member 49R that is adjacent on the front side to an upper surface 16Re of the right portion of the rear beam 16. The second seal surface 90 is provided at the same height as the upper surface 16Re of the right portion of the rear beam 16, and is substantially flush with the upper surface 16Re. Accordingly, the roof seal 45 laid rightward along the upper surface 16Re of the rear beam 16 can be guided (located) from the upper surface 16Re to the second seal surface 90 without changing height.

The third seal surface 91 is provided between the first seal surface 89 and the second seal surface 90, and is also provided as the upper surface of the central base portion 85. The third seal surface 91 is not required to be at the same height as the first seal surface 89 and the second seal surface 90. The third seal surface 91 of the present example embodiment is also located at a position slightly lower than the first seal surface 89 and the second seal surface 90. However, the third seal surface 91 is required to be continuous with the first seal surface 89 and the second seal surface 90. Thus, a gentle slope connecting two surfaces having different heights is provided between the third seal surface 91 and the first seal surface 89 of the present example embodiment or between the third seal surface 91 and the second seal surface 90 of the present example embodiment. When the third seal surface 91 is provided as a surface continuous with the first seal surface 89 and the second seal surface 90, the roof seal 45 can be guided (located) from the first seal surface 89 to the second seal surface 90 without abruptly changing height in the up-down direction.

That is, when the roof seal surface 88 including the first seal surface 89, the second seal surface 90, and the third seal surface 91 described above is provided at the upper surface of the right reinforcing member 49R, no step is generated on the seal surface on which the roof seal 45 is placed. Thus, the roof seal 45 can be located to pass on the interior side of the rear pillar 14 without abruptly changing height in the up-down direction. That is, the roof seal 45 including an elastic member can provide sealing by deformation of the roof seal 45 itself even if there is a step having some level difference in the up-down direction. However, if the step in the up-down direction is large, the roof seal 45 is incapable of covering the step by deformation thereof alone, and it is difficult to provide sufficient sealing. In particular, cabins of the related art include one in which the height of the rear beam is lower than that of the right side beam 18R. In such a cabin of the related art, the seal member is discontinuous around the rear beam and sufficient sealing performance cannot be achieved in some cases. However, in the cabin 1 of the present example embodiment using the right reinforcing member 49R including the roof seal surface 88, the roof seal 45 can be provided without discontinuity, and sufficient sealing performance can be achieved.

The reinforcing members 49 described above are each provided at the upper portion of the rear pillar 14, and increase the load-bearing capacity of the cabin 1 by each coupling the end portion of the rear beam 16 and the rear end of the side beam 18. However, the cabin 1 of the present example embodiment is provided with not only the reinforcing members 49 at the upper portions of the rear pillars 14 but also at least one front reinforcing means for increasing the load-bearing capacity of the cabin 1 at an upper portion of the front pillar 13. Two front reinforcing means are provided: one is provided at the upper portion of the left front pillar 13L; and the other is provided at the upper portion of the right front pillar 13R.

The front reinforcing means of the present example embodiment is described below by taking, as an example, the front reinforcing means provided at the upper portion of the right front pillar 13R.

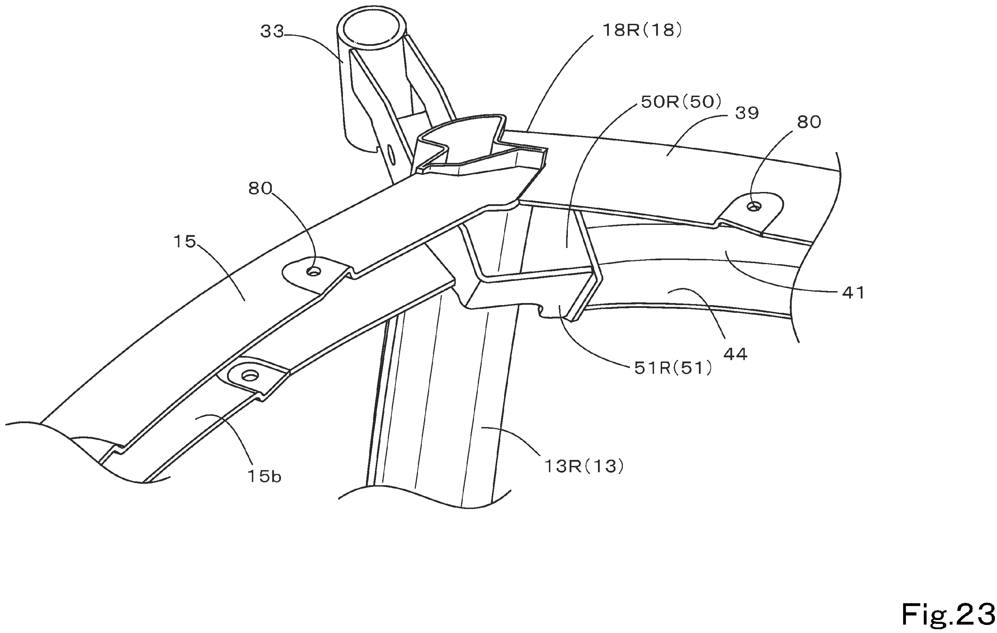

As depicted in FIG. 23, the front reinforcing means provided at the upper portion of the right front pillar 13R includes a right first welding auxiliary portion 50R provided at a front portion of the right side beam 18R and a right second welding auxiliary portion 51R provided at the right end of the front beam 15. The right first welding auxiliary portion 50R is a plate member extending inward and rearward from the front end of the right side beam 18R. The right first welding auxiliary portion 50R is joined, using means such as welding, to the lower surface of the upper wall portion 39 of the right side beam 18R, the upper surface of the lower wall portion 44 thereof, the inner surface of a side wall portion thereof, and the like. The right second welding auxiliary portion 51R is a plate member bent into a substantially L-shape as viewed from above, and is joined to the right end of a lower wall portion 15b of the front beam 15. The right end of the right second welding auxiliary portion 51R is oriented in a direction substantially orthogonal to the right first welding auxiliary portion 50R, and it is possible to perform T-joint welding of the right end to a surface of the right first welding auxiliary portion 50R.

When the right first welding auxiliary portion 50R and the right end of the right second welding auxiliary portion 51R can be joined by T-joint welding, the area of the welded portion is widened compared with normal butt welding, and it is possible to firmly join the front portion of the right side beam 18R and the right end of the front beam 15.

Next, a support structure 99 for the front panel 31 provided in the cabin 1 of the present example embodiment is described.

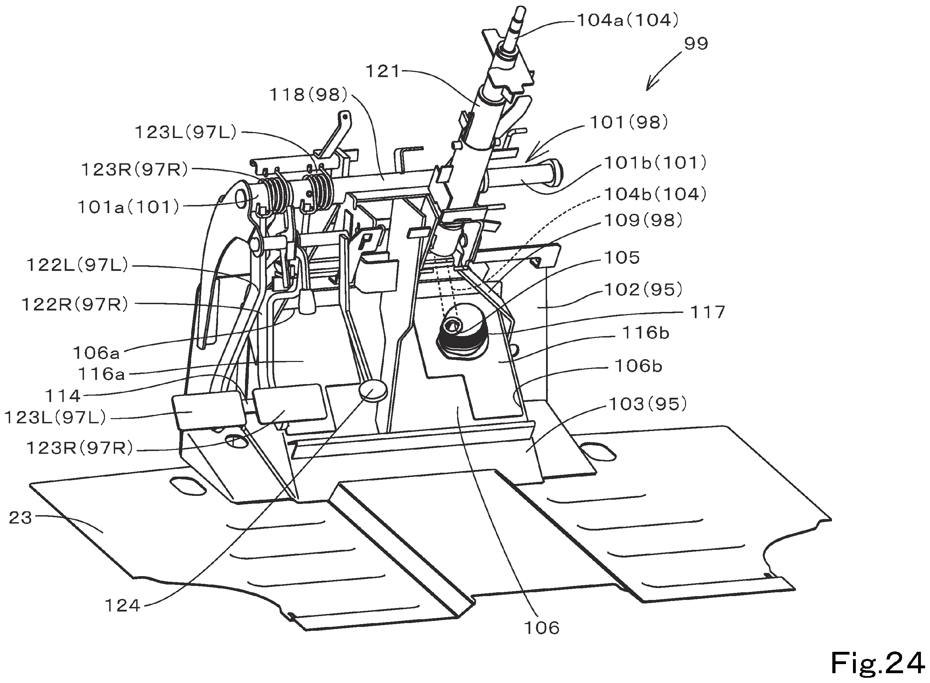

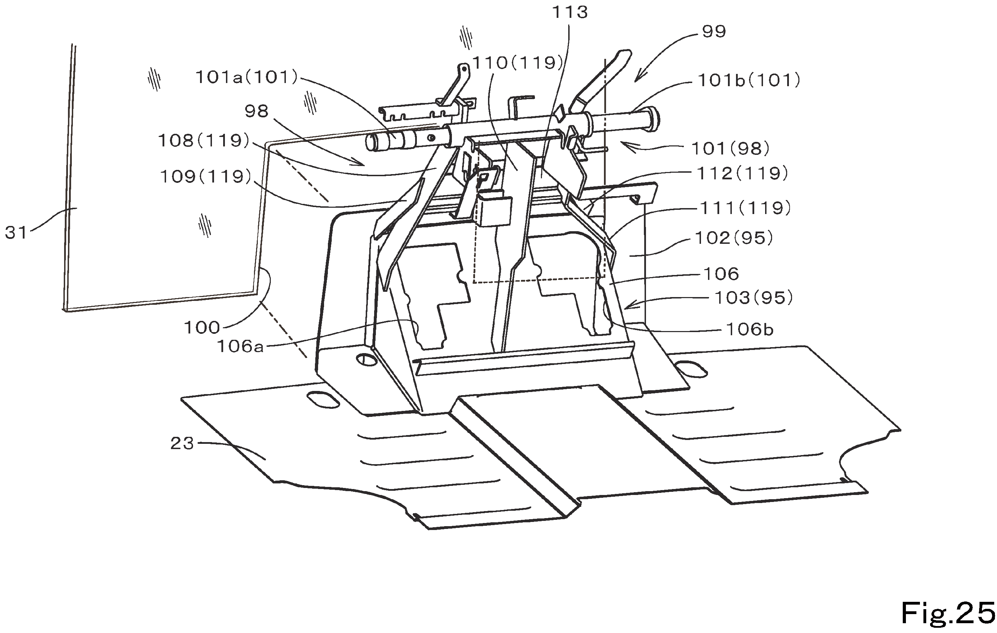

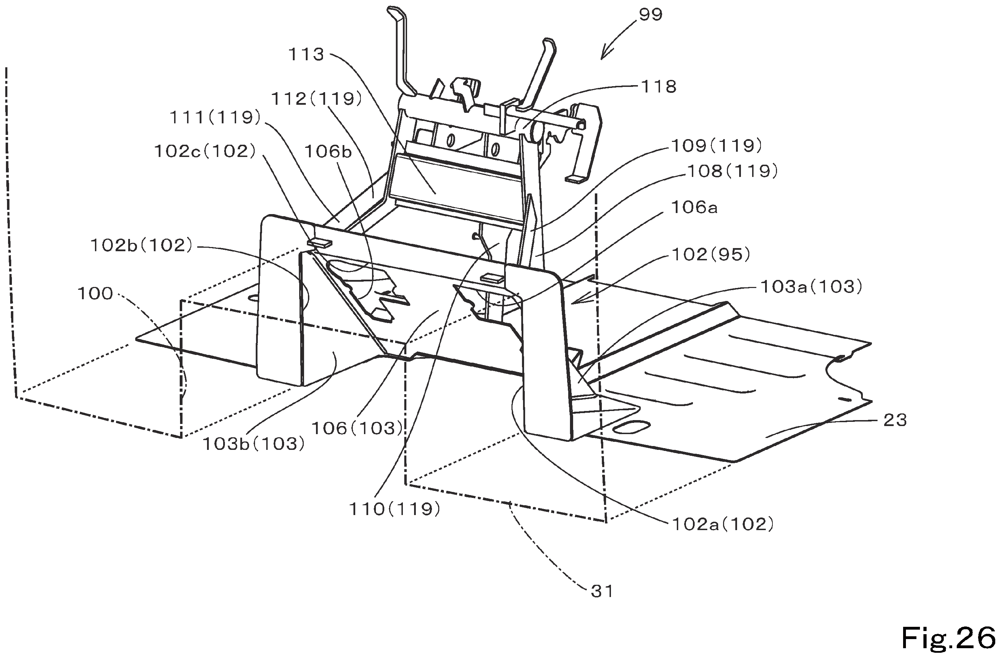

FIG. 24 is an enlarged rear view of the support structure 99 as viewed from the rear side (the operator's seat 6). In FIG. 24, at least one brake pedal 97, a steering column 121, an interlock release pedal 124, and the like obstruct the view and make it difficult to understand a structure of a front portion of the support structure 99. Thus, FIG. 25 also depicts an enlarged rear view of the support structure in a case where at least one brake pedal, the steering column, the interlock release pedal, and the like are removed. FIG. 26 is an enlarged front view of the support structure as viewed from the front side. Further, FIG. 27 is a cross-sectional view of the support structure 99 taken along the front-rear direction at an intermediate position in the left-right direction.

As depicted in FIGS. 24 to 27, the cabin 1 of the present example embodiment includes the front panel 31 and the support structure 99 for the front panel 31 in front of the operator's seat 6. The support structure 99 is a structure that supports the front panel 31 separately from the left front pillar 13L and the right front pillar 13R located outward in the width direction, and supports the front panel 31 from below.

Specifically, as depicted in FIGS. 25 and 26, the front panel 31 of the present example embodiment is a single plate including a cutout 100 at the center of the lower end in the width direction. The cutout 100 of the present example embodiment is provided at the center of the front panel 31 in the width direction as a shape recessed upward in a quadrangular shape.

As depicted in FIGS. 24 and 25, the support structure 99 includes a panel support frame 95 to which the front panel 31 is attached. The panel support frame 95 is provided on a step 23 in front of the operator's seat 6 to protrude upward. The panel support frame 95 includes an opening frame 102 extending upright in the up-down direction along the front panel 31 and a base frame 103 connected to a rear portion of the peripheral edge of the opening frame 102. The support structure 99 includes a pedal support 98 that supports at least one brake pedal 97 on the panel support frame 95. The pedal support 98 of the present example embodiment includes a support shaft 101 that swingably supports at least one brake pedal 97.

Next, the panel support frame 95 and the pedal support 98 included in the support structure 99 are described.

First, the front panel 31 supported by the support structure 99 is described.

As depicted in FIGS. 5 and 25, the front panel 31 includes a panel having light transmissibility, and the upper end, the left end, and the right end thereof are fixed to the front beam 15, the left front pillar 13L, and the right front pillar 13R. The front panel 31 has a curved surface shape that bulges forward. The cutout 100 is provided at the lower end of the center of the front panel 31 in the width direction.

The cutout 100 is a portion cut out in a quadrangular shape, provided in the lower edge of the center of the front panel 31 in the width direction. The cutout 100 has a horizontally long quadrangular shape as viewed from the front, and opens downward.

The panel support frame 95 is a member that is located rearward of the cutout 100 and enables attachment of the front panel 31. The panel support frame 95 includes the opening frame 102 extending upright in the up-down direction along the front panel 31 and the base frame 103 connected to the rear portion of the peripheral edge of the opening frame 102.

The opening frame 102 is an upright plate member, and has a gate shape (a shape like an upper half of a substantially square frame when the frame is equally divided in the up-down direction) along the opening shape of the cutout 100 of the front panel 31. In other words, the opening frame 102 includes an opening in a laterally long quadrangular shape as viewed from the front, corresponding to the opening shape of the cutout 100. Further, the opening of the opening frame 102 is surrounded on three sides, excluding the lower side, by a left opening edge 102a, a right opening edge 102b, and an upper opening edge 102c. The opening frame 102 includes a single plate member that has a predetermined dimension outward from the left opening edge 102a, the right opening edge 102b, and the upper opening edge 102c and is continuous to surround the periphery of the opening. The opening frame 102 is attached to the front panel 31 around the cutout 100 using an adhesive, a fastener, or the like, and is capable of supporting, from below, part of the weights of the front panel 31, the roof 9, and an air conditioner and the like provided in the roof 9.

The weight supported by the opening frame 102 is only part of the weights of the front panel 31, the roof 9, and the air conditioner and the like provided in the roof 9. That is, in the cabin 1 of the present example embodiment, the left front pillar 13L and the right front pillar 13R that support the front panel 31 are located at the left end and the right end, respectively, of the front panel 31. Further, the front beam 15 curved to protrude upward is provided at the upper end of the front panel 31 and at the upper ends of the left front pillar 13L and the right front pillar 13R. Thus, the weights of the roof 9 located above the operator's seat 6 and the air conditioner and the like provided in the roof 9 are applied to the left front pillar 13L and the right front pillar 13R through the front beam 15. The weight of the front panel 31 including glass or the like is also applied to the left front pillar 13L and the right front pillar 13R. Most of the weight is applied to the left front pillar 13L and the right front pillar 13R. However, part of the weight of the roof 9 and the like and part of the weight of the front panel 31 are also applied to the opening frame 102 through the left front pillar 13L and the right front pillar 13R. That is, part of the weights of the front panel 31, the roof 9, and the air conditioner and the like provided in the roof 9 is also supported by the front panel 31 although the share of the weight is smaller than that borne by the left front pillar 13L and the right front pillar 13R.

The base frame 103 is a frame member that is located adjacent to a rear portion of the opening frame 102 and has a shape like a triangular prism laid on its side. The base frame 103 is connected to the peripheral edge of the opening of the opening frame 102, that is, the left opening edge 102a, the right opening edge 102b, and the upper opening edge 102c.

Specifically, the base frame 103 includes a left base frame sidewall 103a, a right base frame sidewall 103b, and a frame plate 106 connected to the left opening edge 102a, the right opening edge 102b, and the upper opening edge 102c, respectively, of the opening frame 102.

The left base frame sidewall 103a is connected to a rear portion of the left opening edge 102a of the opening frame 102, and the right base frame sidewall 103b is connected to a rear portion of the right opening edge 102b of the opening frame 102. The left base frame sidewall 103a and the right base frame sidewall 103b each have a triangular shape such that the height in the up-down direction decreases toward the rear side as viewed from a lateral side.

The frame plate 106 is a plate member having a quadrangular shape as viewed from above, and is connected to a rear portion of the upper opening edge 102c of the opening frame 102. The frame plate 106 is inclined to shift upward toward the upper portion of the opening frame 102 from the rear side (to descend toward the rear side). A left penetrating portion 106a and a right penetrating portion 106b that penetrate the frame plate 106 and lead to the inside and outside of the cabin 1 are provided in left and right portions of the frame plate 106. The left penetrating portion 106a and the right penetrating portion 106b are closed by a left closing plate 116a and a right closing plate 116b, respectively. A through-hole 105 through which at least one steering shaft 104 extending forward and downward from the front side of the operator's seat 6 penetrates is provided in the right closing plate 116b that closes the right penetrating portion 106b, and a bellows boot 117 is attached to the through-hole 105.

The support structure 99 has not only a function of supporting the front panel 31 but also a function of supporting at least one brake pedal 97 and a clutch member 115. Specifically, the support structure 99 includes the pedal support 98 that supports at least one brake pedal 97 on the panel support frame 95 in order to support at least one brake pedal 97 (depending on the case, the clutch member 115).

The pedal support 98 includes a support main body 118 assembled in a tower-like manner above the panel support frame 95, at least one support frame 119 that supports the support main body 118 on the panel support frame 95, and the support shaft 101 that swingably supports at least one brake pedal 97.

As depicted in FIG. 25, at least one support frame 119 includes five frames. The five frames provided as the support frames 119 are a left first frame 108, a left second frame 109, a central frame 110, a right first frame 111, and a right second frame 112. The left first frame 108 supports the left end of the support shaft 101 on the left end of the base frame 103. The left second frame 109 supports the left end of the opening frame 102 on the left first frame 108. The central frame 110 supports an intermediate portion of the support shaft 101 in the left-right direction on a central portion of the base frame 103. The right first frame 111 supports the central frame 110 and the right end of the support shaft 101 on the right end of the base frame 103. The right second frame 112 supports the right end of the opening frame 102 on the right first frame 111. By providing support using the support frames 119 including these five frames, the support main body 118 can be firmly supported at a position separated upward from the base frame 103 (panel support frame 95).

The support main body 118 is a cylindrical member located along the horizontal direction, and is fixed to span, in the horizontal direction, the upper end of the left first frame 108, the upper end of the central frame 110, and the upper end of the right first frame 111 among the support frames 119. The support main body 118 can fix the support shaft 101 such that the axial center of the support shaft 101 is oriented in the horizontal direction in a state in which the support shaft 101 is inserted inside the support main body 118 having a cylindrical shape.

The steering column 121 that rotatably supports at least one steering shaft 104 is attached to a right portion of the support main body 118. The steering column 121 is a cylindrical member extending upright in an inclined manner from the front lower side toward the rear upper side. Two steering shafts 104 are arranged in the up-down direction, and an upper steering shaft 104a and a lower steering shaft 104b are coupled through a universal joint to be capable of transmitting steering operation. The upper steering shaft 104a penetrates through the inside of the steering column 121 rotatably relative to the steering column 121. A steering wheel is attached to the upper end of the upper steering shaft 104a, and rotational action of the steering wheel is allowed to be transmitted to rotational action of the upper steering shaft 104a. Further, the lower steering shaft 104b is coupled to the lower end of the upper steering shaft 104a. The lower steering shaft 104b penetrates through the through-hole 105 in the right closing plate 116b of the frame plate 106, and protrudes to the outside of the cabin 1.

A coupling reinforcing frame 113 is provided below the support main body 118. The coupling reinforcing frame 113 is a plate member that has a rectangular cross section and in which an intermediate portion in the up-down direction protrudes forward relative to the upper end and the lower end. The coupling reinforcing frame 113 is fixed to a lower portion of the support main body 118 using means such as welding. Further, the coupling reinforcing frame 113 is joined in a state in which it couples three members, that is, the left first frame 108, the central frame 110, and the right first frame 111, in the left-right direction. The coupling reinforcing frame 113 increases the support strength of the support structure 99 by coupling and integrating the respective members.

The support shaft 101 is a rod member having a length in the horizontal direction longer than that of the support main body 118. Both left and right ends of the support shaft 101 protrude outward in the left-right direction from both ends of the support main body 118. Specifically, the support shaft 101 includes a left end 101a that protrudes leftward from the left end of the support main body 118 and a right end 101b that protrudes rightward from the right end of the support main body 118. At least one brake pedal 97 is attached to the left end 101a of the support shaft 101 to be rotatable about an axis oriented in the horizontal direction. Although depiction is omitted, in the case of the tractor 2 (working machine) provided with a clutch, a clutch member may further be provided at the left end 101a of the support shaft 101.

In the case of the present example embodiment, the left end 101a of the support shaft 101 is provided with two brake pedals 97 arranged side by side in the left-right direction. That is, the brake pedals 97 include a left brake pedal 97L provided on the left and a right brake pedal 97R provided on the right. The left brake pedal 97L is a pedal for performing stop operation of the left rear wheel 12L. The right brake pedal 97R is a brake for performing stop operation of the right rear wheel 12R. The left brake pedal 97L includes a left pedal arm 122L including a base end rotatably supported by the support shaft 101, a left pedal plate 123L attached to a tip of the left pedal arm 122L, and a left pedal spring 125L that biases the left pedal arm 122L in such a direction as to return to a depression start position. Further, the right brake pedal 97R includes a right pedal arm 122R including a base end rotatably supported by the support shaft 101, a right pedal plate 123R attached to a tip of the right pedal arm 122R, and a right pedal spring 125R that biases the right pedal arm 122R in such a direction as to return to a depression start position.

Between the left pedal plate 123L and the right pedal plate 123R, an interlocking member 114 that couples these members to enable the left and right brakes to be depressed and released simultaneously is located. The interlocking member 114 brings the left pedal plate 123L and the right pedal plate 123R into a coupled state by an electromagnetic system or a hydraulic system, and brings the left and right brakes into an interlocked state by coupling the left pedal plate 123L and the right pedal plate 123R. Release of interlocking on the interlocking member 114 is performed by the interlock release pedal 124.

The interlock release pedal 124 is a pedal for releasing interlocking by the interlocking member 114, and is located at either a left portion or a right portion of the support structure 99. In the present example embodiment, the interlock release pedal 124 is located at substantially the center of the support structure 99. Thus, the five frames included in the support frames 119 may remain straight (are not required to be bent).

However, when the interlock release pedal 124 is located at the left portion of the support structure 99, it is sufficient that frames on the side where the interlock release pedal 124 is located, that is, the left first frame 108 and the left second frame 109 located at the left portion of the support structure 99, be provided such that intermediate portions in the up-down direction are bent inward in the left-right direction. Further, when the interlock release pedal 124 is located at the right portion of the support structure 99, it is sufficient that the right first frame 111 and the right second frame 112 located at the right portion, where the interlock release pedal 124 is located, be provided such that intermediate portions in the up-down direction are bent inward in the left-right direction. In the example depicted in FIG. 24, the intermediate portions of the right first frame 111 and the right second frame 112 in the up-down direction are bent leftward, and this configuration can be suitably used in a case where the interlock release pedal 124 is located at the right portion of the support structure 99, or the like.

Also when the clutch member is located at the left portion of the support structure 99, the left frames (the left first frame 108 and the left second frame 109) of the pedal support 98 can be provided such that intermediate portions in the up-down direction are bent rightward.

With such a cabin 1, even if a member such as the interlock release pedal 124 or the clutch member is present at one of the left and right portions of the support structure 99, the frames of the pedal support 98 do not interfere when the interlock release pedal 124, the clutch member, or the like is depressed, and releasing interlocking, operating the clutch member, or the like can be reliably performed.

In the cabin 1 of the present example embodiment, the height of the opening frame 102 provided in the panel support frame 95 is set low, and the height and the area of the cutout 100 are reduced to be low and small with respect to the front panel 31. When the height and the area of the cutout 100 are reduced to be low and small in this manner, the field of view of the front panel 31 can be widely secured, and visibility from the cabin 1 can be improved. Further, if the cutout 100 is made smaller, the labor for cutting processing for the front panel 31 is reduced, and breakage is also less likely to occur. Further, it is also possible to improve the strength of the front panel 31 provided as a single plate as described above.

As for how low the cutout 100 is actually made, it is sufficient that the cutout 100 be located lower than the support shaft 101. In this case, in the cabin 1 of the present example embodiment, the opening frame 102 of the panel support frame 95 is located along the back surface of the front panel 31. However, it is preferable that the panel support frame 95 be so located as not to include, on the upper side of the opening frame 102, a portion located along the back surface of the front panel 31. That is, the opening frame 102 and the front panel 31 located forward of the opening frame 102 are fixed in a surface contact state. However, the panel support frame 95 is not provided forward of any portion of the front panel 31 even slightly higher than the opening frame 102, and nothing obstructs the field of view from the front panel 31. Using such an arrangement can reliably improve the visibility from the cabin 1.

Next, a positional relationship between the clutch housing 107 and the frame plate 106 is described with reference to FIG. 27.

FIG. 27 depicts a cross-sectional view in a case where the cabin 1 is cut at the middle thereof in the left-right direction.

As depicted in FIG. 27, the frame plate 106 of the base frame 103 is inclined to shift upward toward the upper portion of the opening frame 102 from the rear side (to descend toward the rear side). The purpose of inclining the frame plate 106 in this manner is to avoid interference with the clutch housing 107 located lower than the operator's seat 6. That is, the tractor 2 of the present example embodiment includes the engine (prime mover E1) in front of the cabin 1, and a flywheel and a clutch disc are located at a rear portion of the engine. For example, the flywheel is inevitably long in the up-down direction in order to exhibit sufficient inertial force. Thus, the front end of the clutch housing 107 is inclined such that the dimension in the up-down direction becomes larger toward the front side so that the flywheel and the like can be housed. In order to be compatible with such a clutch housing 107 in which the dimension of the front end is increased in the up-down direction, it is preferable that the front end of a lower portion of the cabin 1 be also inclined. In particular, in the tractor 2, to which vibration is likely to be applied during work, it is required to provide a sufficient spacing between the cabin 1 and the clutch housing 107 including the inclined front end and avoid interference with the clutch housing 107. Further, as depicted in FIG. 27, the lower steering shaft 104b coupled to the lower end of the upper steering shaft 104a penetrates through the through-hole 105 in the right closing plate 116b of the frame plate 106 and protrudes to the outside of the cabin 1. The lower end of the lower steering shaft 104b is subjected to power transmission through a universal joint outside the cabin 1. Thus, in order to locate the universal joint, which requires a comparatively large installation space, a sufficient spacing is required to be provided between the cabin 1 and the clutch housing 107, and the front end of the cabin 1 is inclined toward the front upper side.

The front end of the cabin 1 of the present example embodiment is inclined to provide a sufficient spacing between the cabin 1 and the clutch housing 107. However, by making the inclination amount of the front end as small as possible and reducing the dimension of the cutout 100 of the front panel 31 along the up-down direction to a small dimension, the field of view from the front panel 31 can be widely secured. That is, in the cabin 1 of the present example embodiment, by reducing the dimension of the cutout 100 of the front panel 31 along the up-down direction to a small dimension, physical interference with the clutch housing 107 is avoided, and the field of view from the front panel 31 is improved while a space for installing members such as a universal joint is secured.

As depicted in FIG. 27, in the cabin 1 of the present example embodiment, the front panel 31 is curved such that an intermediate portion in the up-down direction protrudes forward relative to the lower end. That is, in the front panel 31, the intermediate portion in the up-down direction projects forward relative to the lower end. Thus, in order to enable surface contact with the front panel 31 curved in this manner, it is preferable that the opening frame 102 be in a forward-tilted orientation in which an intermediate portion in the up-down direction protrudes forward relative to the lower end.

Further, in the cabin 1 of the present example embodiment, the front panel 31 is curved such that an intermediate portion in the left-right direction protrudes forward relative to both left and right ends. That is, in the front panel 31, the intermediate portion in the left-right direction projects forward relative to both ends in the left-right direction. Thus, in order to enable surface contact with the front panel 31 curved in this manner, it is preferable that the opening frame 102 have a curved shape in which an intermediate portion in the left-right direction protrudes forward.

Further, in the cabin 1 of the present example embodiment, the front panel 31 is curved such that the intermediate portion in the up-down direction protrudes forward relative to the lower end, and it is preferable that the left front pillar 13L and the right front pillar 13R be in a forward-tilted orientation in which an intermediate portion in the up-down direction protrudes forward relative to the lower end to match the curving of the front panel 31.

With such a cabin 1, even for the front panel 31 of a full-round type that is curved such that a central portion projects forward, it is possible to reliably fix the front panel 31 by bringing a peripheral portion of the cutout 100 of the front panel 31 into close contact with the opening frame 102 of the panel support frame 95 and bringing both ends of the front panel 31 into close contact with the left front pillar 13L and the right front pillar 13R.

The present invention provide cabins 1 described in the following items. (Item A1) A cabin 1 including a front panel 31 located forward of an operator's seat 6, a left door 27L located leftward of the operator's seat 6, a right door 27R located rightward of the operator's seat 6, a left front pillar 13L provided between the front panel 31 and the left door 27L, and a right front pillar 13R provided between the front panel 31 and the right door 27R, wherein elongated members (front pillar elongated member 34F) having an identical shape curved to bulge forward are used for the left front pillar 13L and the right front pillar 13R.

(Item A2) The cabin 1 according to item A1, wherein the left front pillar 13L and the right front pillar 13R include frame members obtained by cutting end portions of the elongated members (front pillar elongated member 34F) in a longitudinal direction, portions of the frame members other than the end portions in the longitudinal direction having an identical shape.

(Item A3) A cabin 1 including a front panel 31 located forward of an operator's seat 6, a left door 27L located leftward of the operator's seat 6, a right door 27R located rightward of the operator's seat 6, a left front pillar 13L provided between the front panel 31 and the left door 27L, and a right front pillar 13R provided between the front panel 31 and the right door 27R, wherein elongated members (front pillar elongated member 34F) curved to bulge forward over an entire region from an upper end to a lower end are used for the left front pillar 13L and the right front pillar 13R, curvatures of an upper half and a lower half of each of the elongated members being symmetric with respect to an intermediate point in an up-down direction.

With such a cabin 1, either the left front pillar 13L or the right front pillar 13R can be fabricated from the single front pillar elongated member 34F simply by selecting whether or not to perform inversion in the longitudinal direction before cutting. In other words, the front pillar elongated member 34F is a processing base material from which the left front pillar 13L and the right front pillar 13R can be selectively obtained depending on whether or not to perform inversion (a common processing base material for the left front pillar 13L and the right front pillar 13R). Thus, when the front pillar elongated member 34F, which is a common base material, is subjected to molding or bending, the labor for the molding or bending is for one kind of elongated member. However, in a fabrication method in the related art, it has been necessary to fabricate the left front pillar 13L and the right front pillar 13R individually using different molds or to perform bending separately, and the labor for the molding or bending has required a large amount of time and costs. Therefore, in the cabin 1 of the present example embodiment, an increase in manufacturing costs can be reduced by using the front pillar elongated member 34F as a processing base material common to the left front pillar 13L and the right front pillar 13R.

(Item A4) A cabin 1 including a rear panel 32 located rearward of an operator's seat 6, a left door 27L located leftward of the operator's seat 6, a right door 27R located rightward of the operator's seat 6, a left rear pillar 14L provided between the rear panel 32 and the left door 27L, and a right rear pillar 14R provided between the rear panel 32 and the right door 27R, wherein elongated members (rear pillar elongated member 34R) having an identical shape curved to bulge rearward are used for the left rear pillar 14L and the right rear pillar 14R.

(Item A5) The cabin 1 according to item A4, wherein the left rear pillar 14L and the right rear pillar 14R include frame members obtained by cutting end portions of the elongated members (rear pillar elongated member 34R) in a longitudinal direction, portions of the frame members other than the end portions in the longitudinal direction having an identical shape.

(Item A6) A cabin 1 including a rear panel 32 located rearward of an operator's seat 6, a left door 27L located leftward of the operator's seat 6, a right door 27R located rightward of the operator's seat 6, a left rear pillar 14L provided between the rear panel 32 and the left door 27L, and a right rear pillar 14R provided between the rear panel 32 and the right door 27R, wherein elongated members (rear pillar elongated member 34R) curved to bulge rearward over an entire region from an upper end to a lower end are used for the left rear pillar 14L and the right rear pillar 14R, curvatures of an upper half and a lower half of each of the elongated members being symmetric with respect to an intermediate point in an up-down direction.

(Item A7) A cabin 1 including a left door 27L located leftward of an operator's seat 6, a right door 27R located rightward of the operator's seat 6, a left side beam 18L provided at an upper end of the left door 27L, and a right side beam 18R provided at an upper end of the right door 27R, wherein elongated members (side beam elongated member 34S) having an identical shape curved to bulge upward over an entire region from a front end to a rear end are used for the left side beam 18L and the right side beam 18R.

(Item A8) The cabin 1 according to item A7, wherein the left side beam 18L and the right side beam 18R include frame members obtained by cutting end portions of the elongated members (side beam elongated member 34S) in a longitudinal direction, portions of the frame members other than the end portions in the longitudinal direction having an identical shape.

(Item A9) A cabin 1 including a left door 27L located leftward of an operator's seat 6, a right door 27R located rightward of the operator's seat 6, a left side beam 18L provided at an upper end of the left door 27L, and a right side beam 18R provided at an upper end of the right door 27R, wherein elongated members (side beam elongated member 34S) curved to bulge upward over an entire region from a front end to a rear end are used for the left side beam 18L and the right side beam 18R, curvatures of a front half and a rear half of each of the elongated members being symmetric with respect to an intermediate point in a front-rear direction.

With such a cabin 1, either the left side beam 18L or the right side beam 18R can be fabricated from the single side beam elongated member 34S simply by selecting whether or not to perform inversion in the longitudinal direction before cutting. In other words, the side beam elongated member 34S is a processing base material from which the left side beam 18L and the right side beam 18R can be selectively obtained depending on whether or not to perform inversion (a common processing base material for the left side beam 18L and the right side beam 18R). Thus, when the side beam elongated member 34S, which is a common base material, is subjected to molding or bending, the labor for the molding or bending is for one kind of elongated member. However, in a fabrication method in the related art, it has been necessary to fabricate the left side beam and the right side beam individually using different molds or to perform bending separately, and the labor for the molding or bending has required a large amount of time and costs. Therefore, in the cabin 1 of the present example embodiment, an increase in manufacturing costs can be reduced by using the side beam elongated member 34S as a processing base material common to the left side beam 18L and the right side beam 18R.

(Item A10) The cabin 1 according to any one of items A1 to A9, wherein in each of the elongated members (each of the front pillar elongated member 34F, rear pillar elongated member 34R, and side beam elongated member 34S), a radius of curvature at an intermediate portion in a longitudinal direction is larger than radii of curvature at both end portions in the longitudinal direction.

With such a cabin 1, the front pillar 13, the rear pillar 14, or the side beam 18 after fabrication can reduce the difference in the curvature from a frame member coupled thereto, and it is possible to obtain the cabin 1 in which the frame members are smoothly connected without giving a bent appearance.

(Item A11) The cabin 1 according to any one of items A1 to A10, wherein in each of the elongated members, radii of curvature at portions between both end portions and the intermediate portion in the longitudinal direction are larger than the radii of curvature at both end portions and are smaller than the radius of curvature at the intermediate portion in the longitudinal direction.

With such a cabin 1, even when frame members having different curvatures are coupled, it is possible to obtain the cabin 1 in which the frame members are smoothly connected without giving a bent appearance.

(Item A12) The cabin 1 according to any one of items A1 to A11, wherein the elongated members each include, for an end portion of any one of a front panel 31, a rear panel 32, the left door 27L, and the right door 27R, a main sealed surface 54 opposed to an inner surface of the end portion and a sub-sealed surface 55 opposed to an end surface of the end portion, and the end portion is provided with a door seal 46(seal member) including a main lip 47 to seal the main sealed surface 54 of one of the elongated members and a sub-lip 48 to seal the sub-sealed surface 55 of the one of the elongated members.

With such a cabin 1, entry of dust and moisture is reliably prevented by the main lip 47 and the sub-lip 48 provided in the door seal 46. That is, even if there is dust or moisture that has passed through the sub-lip 48, the dust or moisture that has entered is expelled through a gap between the main lip 47 and the sub-lip 48. Thus, entry of dust and moisture can be reliably prevented.

(Item B1) A cabin 1 including a left front pillar 13L and a right front pillar 13R (a pair of front pillars on left and right) provided forward of an operator's seat 6, a front panel 31 fixed between the left front pillar 13L and the right front pillar 13R (the front pillars on left and right), and a left door 27L and/or a right door 27R (door panel) located rearward of the left front pillar 13L and the right front pillar 13R (the front pillars), the door panel being openable and closable, the left front pillar 13Land the right front pillar 13R (front pillars) each having a pipe shape having an irregularly-shaped cross section, wherein the irregularly-shaped cross section includes a first wall portion 60 to define part of an outer periphery of a pipe, a second wall portion 63 to define part of the outer periphery of the pipe, the second wall portion being located opposite to the first wall portion 60, a first connecting wall 61 to connect one end of the first wall portion 60 and one end of the second wall portion 63, and a second connecting wall 62 to connect another end of the first wall portion 60 and another end of the second wall portion 63, the first connecting wall 61 and the second connecting wall 62 protrude outward of the pipe, and portions of an inner periphery of the first connecting wall 61 are in close contact with each other, and portions of an inner periphery of the second connecting wall 62 are in close contact with each other.

With such a cabin 1, the second wall portion 63 of the pipe included in the left front pillar 13L and the right front pillar 13R has a shape recessed inward relative to the first connecting wall 61 and the second connecting wall 62 that protrude outward. Thus, a space in which the pipes H₁ to H₃ can be located can be sufficiently secured outward of the second wall portion 63 (a recessed portion of the pipe). Further, even when the pipes H₁ to H₃ are arranged and concealed by the cover 73, outward protrusion of the cover 73 can be reduced. Thus, the left front pillar 13L can be provided with reduced dimensions in the front-rear direction and the left-right direction, and it is possible to secure a wide opening width of the entrance/exit of the cabin 1 and a wide field of view of the front panel 31, so that the ease of getting in and out of the cabin 1 and the visibility are improved.

(Item B2) The cabin 1 according to item B1, wherein the first connecting wall 61 and the second connecting wall 62 protrude in directions orthogonal to each other.

With such a cabin 1, it is possible to reliably fix the front panel 31 using the first connecting wall 61 and to reliably fix the left door 27L and the right door 27R using the second connecting wall 62.

(Item B3) The cabin 1 according to item B1 or B2, wherein the second wall portion 63 protrudes outward of the pipe.

With such a cabin 1, it is possible to secure a large cross-sectional area of the irregularly-shaped cross section by the second wall portion 63 that protrudes outward, and the bending strength of the left front pillar 13L and the right front pillar 13R can be improved.

(Item B4) The cabin 1 according to any one of items B1 to B3, wherein the first wall portion 60 includes a first upright wall portion 64 having an arcuate shape that bulges outward of the pipe, a second upright wall portion 65 bent inward of the pipe from one end of the first upright wall portion 64 in a width direction, and a third upright wall portion 66 bent inward of the pipe from another end of the first upright wall portion 64 in the width direction.

With such a cabin 1, by the first upright wall portion 64 having an arcuate cross section, curved surfaces that smoothly connect can be achieved with the front panel 31, and an appearance with excellent design properties can be achieved. Further, by providing the second upright wall portion 65 and the third upright wall portion 66 that are bent inward of the pipe, adhesion and sealing performance with respect to the front panel 31, the left door 27L, and the right door 27R can be improved.

(Item B5) The cabin 1 according to any one of items B1 to B4, wherein the second wall portion 63 includes a peak portion 71 that protrudes most outward of the pipe, and valley portions 72 recessed inward of the pipe relative to the peak portion 71 are defined at a point of contact between the first connecting wall 61 and the second wall portion 63 and at a point of contact between the second connecting wall 62 and the second wall portion 63.

With such a cabin 1, different pipes (the pipes H₁ to H₃) can be separately arranged so as not to be entangled by using the peak portion 71 and the valley portions 72.

(Item B6) The cabin 1 according to item B5, wherein the second wall portion 63 includes, between one of the valley portions 72 and the peak portion 71, a flat surface extending in a direction parallel to a tangent L_{T} passing through one point on an outer surface of the first wall portion 60.

With such a cabin 1, the bending strength (load-bearing capacity) of the left front pillar 13L and the right front pillar 13R can be increased.

(Item B7) The cabin 1 according to any one of items B1 to B6, wherein the first connecting wall 61 includes a single pipe wall including portions overlapped with each other in a state in which the single pipe wall is folded at a first fold-back portion 67, and an inner surface of the first connecting wall 61 located on one side of the first fold-back portion 67 and an inner surface of the first connecting wall 61 located on another side of the first fold-back portion 67 are in close contact with each other, and the second connecting wall 62 includes a single pipe wall including portions overlapped with each other in a state in which the single pipe wall is folded at a second fold-back portion 68, and an inner surface of the second connecting wall 62 located on one side of the second fold-back portion 68 and an inner surface of the second connecting wall 62 located on another side of the second fold-back portion 68 are in close contact with each other.

With such a cabin 1, it is possible to fabricate the left front pillar 13L and the right front pillar 13R at once using forming processing or the like from a pipe-shaped processing base material (the front pillar elongated member 34F) having a sealed cross section.

(Item B8) The cabin 1 according to any one of items B1 to B6, wherein the second wall portion 63 is provided separately from the first wall portion 60, the first connecting wall 61 is provided by joining the one end of the first wall portion 60 and the one end of the second wall portion 63 in a surface contact state, and the second connecting wall 62 is provided by joining the other end of the first wall portion 60 and the other end of the second wall portion 63 in a surface contact state.

With such a cabin 1, it is also possible to fabricate the left front pillar 13L and the right front pillar 13R by bonding plate-shaped base materials or the like to each other.

(Item B9) The cabin 1 according to item B4 or according to any one of items B5 to B8 taken in combination with item B4, wherein the left door 27L and/or right door 27R (door panel 27) includes an inner surface opposed to the operator's seat 6 and a front end surface facing forward, a main lip 47 of a door seal 46 is located on the inner surface of a front end of the door panel 27 such that the main lip abuts against the second connecting wall 62, and a sub-lip 48 of the door seal 46 is located on the front end surface such that the sub-lip 48 abuts against the second upright wall portion 65.

With such a cabin 1, entry of dust and moisture is reliably prevented by the main lip 47 and the sub-lip 48 provided in the door seal 46. That is, even if there is dust or moisture that has passed through the sub-lip 48, the dust or moisture that has entered is expelled through a gap between the main lip 47 and the sub-lip 48. Thus, entry of dust and moisture can be reliably prevented.

(Item B10) The cabin 1 according to any one of items B1 to B9, wherein the second wall portion 63 is provided with a cover 73 to cover the second wall portion 63 from an outer side.

With such a cabin 1, the pipes H₁ to H₃, which tend to give a cluttered appearance, can be concealed by the cover 73, and the interior appearance of the cabin 1 can be improved.

(Item B11) The cabin 1 according to item B10, wherein the cover includes a first cover wall 73a (first cover wall 73a extending rearward from an end portion of the first connecting wall 61 that protrudes outward of the pipe) facing the front panel 31 and a second cover wall 73b(second cover wall 73b extending inward in the width direction from an end portion of the second connecting wall 62 that protrudes outward of the pipe) facing the door panel 27, the first cover wall 73a is located outward in a width direction relative to a line connecting a center of the operator's seat 6 and an outer end of the front panel 31 in the width direction (line connecting the center of the operator's seat 6 and the end portion of the first connecting wall 61 that protrudes outward of the pipe, i.e., forward visibility boundary line FL), and the second cover wall 73b is located forward of a line connecting the center of the operator's seat 6 and the front end of the door panel 27 (line connecting the center of the operator's seat 6 and the end portion of the second connecting wall 62 that protrudes outward of the pipe, i.e., lateral visibility boundary line SL).

With such a cabin 1, even when the cover 73 is provided, the first cover wall 73a of the cover 73 does not project to obstruct forward visibility. Further, the second cover wall 73b of the cover 73 does not project to obstruct the left entrance/exit 28L, and does not reduce the opening width of the left entrance/exit 28L of the cabin 1. That is, the cover 73 does not narrow the opening width of the left entrance/exit 28L of the cabin 1, and does not reduce the field of view of the front panel 31. Thus, the dimension of the left front pillar 13L along the front-rear direction and the width thereof along the left-right direction as viewed from the operator's seat 6 can be maintained in a large state, and the ease of getting in and out of the cabin 1 and the visibility can be improved.

(Item B12) An irregularly-shaped pipe for a cabin 1, including a first wall portion 60 to define part of an outer periphery of a pipe, a second wall portion 63 to define part of the outer periphery of the pipe, the second wall portion being located opposite to the first wall portion 60, a first connecting wall 61 to connect one end of the first wall portion 60 and one end of the second wall portion 63, and a second connecting wall 62 to connect another end of the first wall portion 60 and another end of the second wall portion 63, wherein the first connecting wall 61 and the second connecting wall 63 protrude outward of the pipe, and portions of an inner periphery of the first connecting wall 61 are in close contact with each other, and portions of an inner periphery of the second connecting wall 62 are in close contact with each other.

With such an irregularly-shaped pipe for the cabin 1, the dimension along the front-rear direction and the width along the left-right direction can be reduced without reducing the bending strength of the pipe.

(Item B13) The irregularly-shaped pipe for the cabin 1 according to item B12, wherein the first connecting wall 61 and the second connecting wall 62 protrude in directions orthogonal to each other.

(Item B14) The irregularly-shaped pipe for the cabin 1 according to item B12 or B 13, wherein the second wall portion 63 protrudes outward of the pipe.

With such an irregularly-shaped pipe used for the cabin 1, the cross-sectional area of the pipe can be increased by the second wall portion 63 that protrudes outward of the pipe, and the bending strength can be increased.

(Item B15) The irregularly-shaped pipe for the cabin 1 according to any one of items B12 to B14, wherein the first wall portion 60 includes a first upright wall portion 64 having an arcuate shape that bulges outward of the pipe, a second upright wall portion 65 bent inward of the pipe from one end of the first upright wall portion 64 in a width direction, and a third upright wall portion 66 bent inward of the pipe from another end of the first upright wall portion 64 in the width direction.

(Item B 16) The irregularly-shaped pipe for the cabin according to any one of items B12 to B15, wherein the second wall portion 63 includes a peak portion 71 that protrudes most outward of the pipe, and valley portions 72 recessed inward of the pipe relative to the peak portion 71 are defined at a point of contact between the first connecting wall 60 and the second wall portion 63 and at a point of contact between the second connecting wall 62 and the second wall portion 63.

(Item C1) A cabin 1 including a left rear pillar 14L and a right rear pillar 14R that are located rearward of an operator's seat 6 with a distance therebetween in a left-right direction and have a pipe shape extending in an up-down direction, a rear beam (rear beam 16) to couple upper ends of the left rear pillar 14L and the right rear pillar 14R to each other in the left-right direction and extend in the left-right direction, and a left side beam 18L and a right side beam 18R that extend forward from the upper ends of the left rear pillar 14L and the right rear pillar 14R and are curved upward over an entire region from a front end to a rear end, the cabin 1 being longer in a front-rear direction than in the left-right direction, wherein the cabin 1 includes a left reinforcing member 49L and a right reinforcing member 49R that pass on an interior side of the left rear pillar 14L and the right rear pillar 14R and couple the rear beam (rear beam 16) and the left side beam 18L and the right side beam 18R in a brace-like manner, and front portions of the left reinforcing member 49L and the right reinforcing member 49R are connected to vicinities of central portions of the left side beam 18L and the right side beam 18R in the front-rear direction.

With such a cabin 1, the load share borne by the left rear pillar 14L and the right rear pillar 14R can be increased by the right reinforcing member 49R, and the load borne by the left front pillar 13L and the right front pillar 13R can be reduced. As a result, in the cabin 1 of the present example embodiment, even if overturning or the like occurs, deformation and breakage of the cabin 1 can be prevented or reduced, and safety can be dramatically improved compared with the cabin of the related art.

(Item C2) The cabin 1 according to item C1, wherein the left reinforcing member 49L and the right reinforcing member 49R each include a left first connected portion 82L or a right first connected portion 82R connected to the left side beam 18L or the right side beam 18R, a second connected portion 84 connected to the rear beam (a left portion or a right portion of the rear beam 16), and a central base portion 85 provided between the first connected portion 82 and the second connected portion 84, the central base portion 85 is joined to the outer peripheral surface of the left rear pillar 14L or the right rear pillar 14R on the interior side, and a distance (L1) between the first connected portion 82 and the central base portion 85 is longer than a distance (L2) between the second connected portion 84 and the central base portion 85.

With such a cabin 1, the load borne by the left front pillar 13L and the right front pillar 13R can be further reduced by the left reinforcing member 49L and the right reinforcing member 49R. Thus, safety can be further improved compared with the cabin of the related art.

(Item C3) The cabin 1 according to item C1 or C2, wherein the left reinforcing member 49L and the right reinforcing member 49R each include a roof seal surface 88 on which a roof seal 45 to provide sealing for a roof 9 located above an operator's seat 6 is mounted, the roof seal surface 88 includes a first seal surface 89 that is provided between the first connected portion 82 and the second connected portion 84 and is flush with an upper surface of the left side beam 18L or the right side beam 18R, a second seal surface 90 that is provided between the first connected portion 82 and the second connected portion 84 and is flush with an upper surface of the rear beam 16, and a third seal surface 91 that is provided at the upper surface of the central base portion 85 and is provided between the first seal surface 89 and the second seal surface 90, and the first seal surface 89 and the third seal surface 91 are continuous and the second seal surface 90 and the third seal surface 91 are continuous.

With such a cabin 1, the roof seal 45 can be continuously located to make a loop around the operator's seat 6 without abruptly changing height in the up-down direction. In particular, cabins of the related art include one in which the height of the rear beam is lower than that of the right side beam. In such a related-art cabin, the seal member is discontinuous around the rear beam and sufficient sealing performance cannot be achieved in some cases. However, in the cabin 1 of the present example embodiment using the reinforcing members 49 each including the roof seal surface 88, the roof seal 45 can be provided without discontinuity, and sufficient sealing performance can be achieved.

(Item C4) The cabin 1 according to item C3, wherein frame members having a U-shaped cross section that opens toward an interior side are used for the side beam 18 and the rear lower frame 17 (also referred to as a rear beam), the side beam 18 is provided with a first fixing plate 42 that closes an opening of the side beam 18 and to which the first connected portion 82 is connected, and the rear lower frame 17 is provided with a second fixing plate 83 that closes an opening of the rear lower frame 17 and to which the second connected portion 84 is connected.

With such a cabin 1, the reinforcing members 49 described above can each be firmly fixed to the side beam 18 and the rear lower frame 17, and it is possible to couple the three members, that is, the rear beam 16, the upper portion of the rear pillar 14, and the side beam 18 using each of the reinforcing members 49. As a result, the side beam 18 can be firmly supported on the rear beam 16 and the upper portion of the rear pillar 14 using each of the reinforcing members 49, and the load-bearing capacity of the cabin 1 can be increased.

(Item C5) The cabin 1 according to item C4, wherein the first connected portion 82 is provided at the middle of the first fixing plate 42 in the up-down direction, and the second connected portion 84 is provided at the middle of the second fixing plate 83 in the up-down direction.

With such a cabin 1, welding can be performed on the lower side relative to the upper surface of the upper wall portion 39 of the side beam 18. Thus, spatter generated during the welding is less likely to adhere to the upper surface of the upper wall portion 39 of the side beam 18, and sealing performance of the roof seal 45 can be improved.

(Item D1) A cabin 1 including a front panel 31 located forward of an operator's seat 6, the front panel being curved to protrude forward, and a support structure 99 to support the front panel 31, wherein the support structure 99 includes a panel support frame 95 to which the front panel 31 is attached and a pedal support 98 to support at least one brake pedal 97 on the panel support frame 95, the front panel 31 is a single plate including a cutout 100 that opens downward at a lower end, the pedal support 98 includes a support shaft 101 to swingably support the at least one brake pedal 97, and the panel support frame 95 includes an opening frame 102 that has a shape along an opening of the cutout 100 and that is bonded to a peripheral edge of the opening, the panel support frame being located lower than the support shaft 101.

With such a cabin 1, the size of the cutout 100 can be reduced to be small, and the labor for cutting processing for the front panel 31 is also reduced, and breakage is also less likely to occur. Further, when the height and the area of the cutout 100 are reduced to be low and small, the field of view of the front panel 31 can be widely secured, and visibility from the cabin 1 can be improved.

(Item D2) The cabin 1 according to item D1, wherein the opening frame 102 of the panel support frame 95 is located along a back surface of the front panel 31, and the panel support frame 95 does not include, on an upper side of the opening frame 102, a portion located along the back surface of the front panel 31.

As for how low the cutout 100 is actually made, it is sufficient that the cutout 100 be located lower than the support shaft 101. In this case, in the cabin 1 of the present example embodiment, the opening frame 102 of the panel support frame 95 is located along the back surface of the front panel 31. However, it is preferable that the panel support frame 95 be so located as not to include, on the upper side of the opening frame 102, a portion located along the back surface of the front panel 31. That is, the opening frame 102 and the front panel 31 located forward of the opening frame 102 are fixed in a surface contact state. However, the panel support frame 95 is not provided forward of any portion of the front panel 31 even slightly higher than the opening frame 102, and nothing obstructs the field of view from the front panel 31. With the cabin 1 according to item D2, the visibility from the cabin 1 can be reliably improved.

(Item D3) The cabin 1 according to item D1 or D2, wherein the panel support frame 95 includes a base frame 103 connected to a peripheral edge of the opening frame 102, the base frame 103 includes a frame plate 106 including a through-hole 105 through which a steering shaft 104 extending forward and downward from a front side of the operator's seat 6 penetrates, and the frame plate 106 is inclined such that the frame plate 106 shifts upward toward an upper portion of the opening frame 102 from a rear side to avoid interference with a clutch housing 107 located lower than the operator's seat 6.

With such a cabin 1, while the field of view from the front panel 31 is improved, physical interference with the clutch housing 107 is avoided by the frame plate 106 that is inclined. Further, it is also possible to secure, below the frame plate 106, a space for installing members such as a universal joint.

(Item D4) The cabin 1 according to any one of items D1 to D3, wherein the support shaft 101 is positioned such that an axial center is oriented in a left-right direction, and the pedal support 98 includes a left first frame 108 to support a left end of the support shaft 101 on a left end of the base frame 103, a left second frame 109 to support a left end of the opening frame 102 on the left first frame 108, a central frame 110 to support an intermediate portion of the support shaft 101 in the left-right direction on a central portion of the base frame 103, a right first frame 111 to support a right end of the support shaft 101 on a right end of the base frame 103, and a right second frame 112 to support a right end of the opening frame 102 on the right first frame 111.

With such a cabin 1, by providing support using the five frames, that is, the left first frame 108, the left second frame 109, the central frame 110, the right first frame 111, and the right second frame 112, the support main body 118 (pedal support 98) can be firmly supported at a position separated upward from the base frame 103 (panel support frame 95).

(Item D5) The cabin 1 according to item D4, wherein a coupling reinforcing frame 113 to couple the left first frame 108 and the right first frame 111 in the left-right direction is provided between the left first frame 108 and the right first frame 111.

With such a cabin 1, the support strength of the pedal support 98 is further improved by the coupling reinforcing frame 113.

(Item D6) The cabin 1 according to any one of items D1 to D5, wherein a left front pillar 13L and aright front pillar 13R (front pillars) to support the front panel 31 are each located at a respective one of a left end and a right end of the front panel 31, a front beam 15 that is coupled to upper ends of the left front pillar 13L and the right front pillar 13R (upper ends of the front pillars on left and right) and is curved to protrude upward is provided at an upper end of the front panel 31, a roof 9 is located above the operator's seat 6, and a weight of the roof 9 is supported by the left front pillar 13L and the right front pillar 13R (front pillars on left and right) and the front panel 31 through the front beam 15.

With such a cabin 1, the weights of the roof 9 and an air conditioner and the like provided in the roof 9 and the weight of the front panel 31 itself can be supported by the left front pillar 13L and the right front pillar 13R in a distributed manner without being concentrated only on the front panel 31.

(Item D7) The cabin 1 according to any one of items D1 to D6, wherein the at least one brake pedal 97 includes a left brake pedal 97L to operate a left brake and a right brake pedal 97R to operate a right brake, an interlocking member 114 to cause the left brake pedal 97L and the right brake pedal 97R to operate in conjunction with each other is located between the left brake pedal 97L and the right brake pedal 97R, an interlock release pedal 124 to release interlocking between the left brake pedal 97L and the right brake pedal 97R by the interlocking member 114 is located at either a left portion or a right portion of the support structure 99, and a frame where the interlock release pedal 124 is located among the frames of the pedal support 98 is provided such that an intermediate portion in an up-down direction is bent inward in a left-right direction.

(Item D8) The cabin 1 according to any one of items D1 to D7, wherein a clutch member to switch power transmission is located at a left end of the support shaft 101, and the pedal support provided on right of the support shaft 101 on a side where the clutch member is located is provided such that an intermediate portion in an up-down direction is bent inward in the left-right direction.

With such a cabin 1, even if a member such as the interlock release pedal 124 or the clutch member is present at one of the left and right portions of the support structure 99, the frames of the pedal support 98 do not interfere when the interlock release pedal 124, the clutch member, or the like is depressed, and releasing interlocking, operating the clutch member, or the like can be reliably performed.

(Item D9) The cabin 1 according to any one of items D1 to D8, wherein the front panel 31 is curved such that an intermediate portion in an up-down direction protrudes forward relative to the lower end, and the opening frame 102 has a forward-tilted orientation such that an intermediate portion in the up-down direction protrudes forward relative to a lower end to match curving of the front panel 31.

(Item D10) The cabin 1 according to item D6 or according to any one of items D7 to D9 taken in combination with D6, wherein the front panel 31 is curved such that an intermediate portion in an up-down direction protrudes forward relative to the lower end, and the left front pillar 13L and the right front pillar 13R (front pillars) each have a forward-tilted orientation such that an intermediate portion in the up-down direction protrudes forward relative to a lower end to match curving of the front panel 31.

With such a cabin 1, even for the front panel 31 of a full-round type that is curved such that a central portion projects forward, it is possible to reliably fix the front panel 31 by bringing a peripheral portion of the cutout 100 of the front panel 31 into close contact with the opening frame 102 of the panel support frame 95 and bringing both ends of the front panel 31 into close contact with the left front pillar 13L and the right front pillar 13R.

The example embodiments disclosed herein should be considered illustrative in all respects and not restrictive. In particular, in the example embodiments disclosed herein, matters that are not explicitly disclosed, for example, operating conditions, working conditions, various parameters, dimensions, weights, and volumes of components, and the like, do not depart from a range normally implemented by those skilled in the art, and values that can be readily assumed by those skilled in the art are adopted.

### Reference Signs List

- 1: cabin
- 6: operator's seat
- 13L: left front pillar
- 13R: right front pillar
- 15: front beam
- 31: front panel
- 99: support structure
- 95: panel support frame
- 97: brake pedal
- 97L: left brake pedal
- 97R: right brake pedal
- 98: pedal support
- 100: cutout
- 101: support shaft
- 102: opening frame
- 103: base frame
- 104: steering shaft
- 105: through-hole
- 106: frame plate
- 107: clutch housing
- 108: left first frame
- 109: left second frame
- 110: central frame
- 111: right first frame
- 112: right second frame
- 113: coupling reinforcing frame
- 114: interlocking member
- 118: support main body
- 124: interlock release pedal

## Claims

1. A cabin comprising: a front panel located forward of an operator's seat, the front panel being curved to protrude forward; and a support structure to support the front panel, wherein
the support structure includes a panel support frame to which the front panel is attached and a pedal support to support at least one brake pedal on the panel support frame,
the front panel is a single plate including a cutout that opens downward at a lower end,
the pedal support includes a support shaft to swingably support the at least one brake pedal, and
the panel support frame includes an opening frame that has a shape along an opening of the cutout and that is bonded to a peripheral edge of the opening, the panel support frame being located lower than the support shaft.

2. The cabin according to claim 1, wherein the opening frame of the panel support frame is located along a back surface of the front panel, and the panel support frame does not include, on an upper side of the opening frame, a portion located along the back surface of the front panel.

3. The cabin according to claim 1, wherein
the panel support frame includes a base frame connected to a peripheral edge of the opening frame,
the base frame includes a frame plate including a through-hole through which a steering shaft extending forward and downward from a front side of the operator's seat penetrates, and
the frame plate is inclined such that the frame plate shifts upward toward an upper portion of the opening frame from a rear side to avoid interference with a clutch housing located lower than the operator's seat.

4. The cabin according to claim 3, wherein
the support shaft is positioned such that an axial center is oriented in a left-right direction, and
the pedal support includes
a left first frame to support a left end of the support shaft on a left end of the base frame,
a left second frame to support a left end of the opening frame on the left first frame,
a central frame to support an intermediate portion of the support shaft in the left-right direction on a central portion of the base frame,
a right first frame to support a right end of the support shaft on a right end of the base frame, and
a right second frame to support a right end of the opening frame on the right first frame.

5. The cabin according to claim 4, wherein a coupling reinforcing frame to couple the left first frame and the right first frame in the left-right direction is provided between the left first frame and the right first frame.

6. The cabin according to claim 5, wherein
front pillars to support the front panel are each located at a respective one of a left end and a right end of the front panel,
a front beam that is coupled to upper ends of the front pillars on left and right and is curved to protrude upward is provided at an upper end of the front panel,
a roof is located above the operator's seat, and
a weight of the roof is supported by the front pillars on left and right and the front panel through the front beam.

7. The cabin according to claim 6 as dependent on claim 3, wherein
the at least one brake pedal includes a left brake pedal to operate a left brake and a right brake pedal to operate a right brake,
an interlocking member to cause the left brake pedal and the right brake pedal to operate in conjunction with each other is located between the left brake pedal and the right brake pedal,
an interlock release pedal to release interlocking between the left brake pedal and the right brake pedal by the interlocking member is located at either a left portion or a right portion of the support structure, and
a frame where the interlock release pedal is located among the frames of the pedal support is provided such that an intermediate portion in an up-down direction is bent inward in a left-right direction.

8. The cabin according to claim 6, wherein
a clutch member to switch power transmission is located at a left end of the support shaft, and
the pedal support provided on right of the support shaft on a side where the clutch member is located is provided such that an intermediate portion in an up-down direction is bent inward in the left-right direction.

9. The cabin according to any one of claims 1 to 8, wherein
the front panel is curved such that an intermediate portion in an up-down direction protrudes forward relative to the lower end, and
the opening frame has a forward-tilted orientation such that an intermediate portion in the up-down direction protrudes forward relative to a lower end to match curving of the front panel.

10. The cabin according to claim 8, wherein
the front panel is curved such that an intermediate portion in an up-down direction protrudes forward relative to the lower end, and
the front pillars each have a forward-tilted orientation such that an intermediate portion in the up-down direction protrudes forward relative to a lower end to match curving of the front panel.
